(19) Europäisches Patentamt
European Patent Office
Office européen des brevets

(11) **EP 3 457 694 A1**

(12) **EUROPEAN PATENT APPLICATION**
published in accordance with Art. 153(4) EPC

(43) Date of publication:
**20.03.2019 Bulletin 2019/12**

(21) Application number: **16902668.9**

(22) Date of filing: **24.05.2016**

(51) Int Cl.:
***H04N 19/51*** (2014.01)

(86) International application number:
**PCT/CN2016/083203**

(87) International publication number:
**WO 2017/201678 (30.11.2017 Gazette 2017/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **Huawei Technologies Co., Ltd.**
**Longgang District**
**Shenzhen, Guangdong 518129 (CN)**
• **University of Science and Technology of China**
**Anhui 230026 (CN)**

(72) Inventors:
• **CHEN, Huanbang**
**Shenzhen**
**Guangdong 518129 (CN)**
• **YANG, Haitao**
**Shenzhen**
**Guangdong 518129 (CN)**
• **LI, Houqiang**
**Hefei**
**Anhui 230026 (CN)**

(74) Representative: **Gill Jennings & Every LLP**
**MTH**
**The Broadgate Tower**
**20 Primrose Street**
**London EC2A 2ES (GB)**

(54) **IMAGE PREDICTION METHOD AND RELATED DEVICE**

(57)     An image prediction method and a related apparatus are disclosed. The method includes: parsing first bitstream information, used for indicating a motion information unit, to obtain motion information of each first pixel sample and predicted motion information of each second pixel sample; parsing second bitstream information, used for representing differential motion information of each second pixel sample, to obtain motion information of each second pixel sample; and obtaining a predictor of the current image block based on a motion model of the current image block, the motion information of the first pixel sample, and the motion information of the second pixel sample.

FIG. 4

Description

TECHNICAL FIELD

The present invention relates to the field of video coding and decoding, and specifically, to an image prediction method and a related device.

BACKGROUND

With the development of photoelectric acquisition technologies and the continuous growth of a high-definition digital video requirement, limited transmission bandwidth and diverse video applications continuously impose higher requirements on video coding efficiency. A task of formulating the High Efficiency Video Coding (English: high efficient video coding, HEVC for short) standard is launched as required.

A basic principle of video coding and compression is removing redundancy as much as possible by using correlation between a space domain, a time domain, and a codeword. Currently, a popular practice is using a block-based hybrid video coding framework and implementing video coding and compression by performing steps such as prediction (including intra prediction and inter prediction), transformation, quantization, and entropy coding. Such a coding framework shows tremendous vitality, and HEVC still uses this block-based hybrid video coding framework.

In various video coding/decoding schemes, motion estimation/motion compensation is a key technology that affects coding/decoding performance. In various existing video coding/decoding schemes, it is assumed that motion of an object always satisfies translational motion, and all parts of the entire object have same motion. Most of the existing motion estimation/motion compensation algorithms are block motion compensation algorithms based on a translational motion model (English: translational motion model). However, there is a diversity of motion in the real world, and irregular motion such as scaling, rotation, and parabolic motion is ubiquitous. Since the 1990s, video coding experts have realized universality of irregular motion and hoped to improve video coding efficiency by introducing an irregular motion model (such as an affine motion model). However, existing image prediction based on an affine motion model usually has very high computational complexity.

SUMMARY

Embodiments of the present invention provide an image prediction method and a related device, so as to reduce computational complexity of image prediction based on an affine motion model, and improve coding efficiency.

A first aspect of the embodiments of the present invention provides an image prediction method, where a current image block includes at least one first pixel sample and at least one second pixel sample, and the method includes: parsing first bitstream information, where the first bitstream information is used to indicate motion information units respectively corresponding to each first pixel sample and each second pixel sample; obtaining motion information of each first pixel sample and predicted motion information of each second pixel sample based on the parsed first bitstream information, where the predicted motion information is predicted information of motion information; parsing second bitstream information, where the second bitstream information is used to represent differential motion information of each second pixel sample, and the differential motion information is a difference between motion information and predicted motion information; obtaining motion information of each second pixel sample based on the parsed second bitstream information and the corresponding predicted motion information of each second pixel sample; and obtaining a predictor of the current image block based on a motion model of the current image block, the motion information of each first pixel sample, and the motion information of each second pixel sample.

It can be learned that in this embodiment of the present invention, when the motion information of the first pixel sample is obtained, only predicted motion information corresponding to the first pixel sample needs to be obtained and used as the motion information of the first pixel sample, and there is no need to further parse a bitstream to obtain a residual of the predicted motion information, thereby saving bits used for transmitting a predicted information residual, reducing bit consumption, and improving efficiency.

In a feasible implementation of the first aspect, the first bitstream information includes an index, and the index is used to indicate the motion information units respectively corresponding to each first pixel sample and each second pixel sample.

In a feasible implementation of the first aspect, the second bitstream information includes a difference, and the difference is a motion vector residual between a motion vector and a predicted motion vector of any second pixel sample.

In a feasible implementation of the first aspect, the obtaining motion information of each first pixel sample and predicted motion information of each second pixel sample based on the parsed first bitstream information includes: determining candidate motion information unit sets respectively corresponding to each first pixel sample and each second pixel sample, where any candidate motion information unit set includes at least one motion information unit; determining a combined motion information unit set of the current block, where each motion information unit in the combined motion information unit set is at least some motion information units in the candidate motion information unit sets respectively corresponding to each first pixel sample and each second pixel sample, and motion information of the motion information unit includes a motion vector with a forward prediction direction and/or a motion vector with a backward prediction direction; determining, from the combined motion information unit set based on the parsed first bitstream information, the motion information units respectively corresponding to each first pixel sample and each second pixel sample; using motion information of the motion information unit corresponding to the first pixel sample as the motion information of the first pixel sample; and using motion information of the motion information unit corresponding to the second pixel sample as the predicted motion information of the second pixel sample.

In a feasible implementation of the first aspect, the determining a combined motion information unit set of the current block includes: determining, from N candidate combined motion information unit sets, a combined motion information unit set including the motion information units respectively corresponding to each first pixel sample and each second pixel sample, where each motion information unit included in each of the N candidate combined motion information unit sets is selected from at least some motion information units that meet a constraint in the candidate motion information unit sets respectively corresponding to each first pixel sample and each second pixel sample, N is a positive integer, and the N candidate combined motion information unit sets are different from each other.

In a feasible implementation of the first aspect, the N candidate combined motion information unit sets meet at least one of a first condition, a second condition, a third condition, a fourth condition, and a fifth condition, where the first condition includes: a motion manner that is of the current image block and that is indicated by a motion information unit in any one of the N candidate combined motion information unit sets is non-translational motion; the second condition includes: two motion information units in any one of the N candidate combined motion information unit sets correspond to a same prediction direction; the third condition includes: two motion information units in any one of the N candidate combined motion information unit sets correspond to a same reference frame index; the fourth condition includes: an absolute value of a difference between motion vector horizontal components of two motion information units in any one of the N candidate combined motion information unit sets is less than or equal to a horizontal component threshold, or an absolute value of a difference between motion vector horizontal components of one motion information unit in any one of the N candidate combined motion information unit sets and a pixel sample Z is less than or equal to a horizontal component threshold, where the pixel sample Z of the current image block is different from either of the first pixel sample and the second pixel sample; and the fifth condition includes: an absolute value of a difference between motion vector vertical components of two motion information units in any one of the N candidate combined motion information unit sets is less than or equal to a vertical component threshold, or an absolute value of a difference between motion vector vertical components of any motion information unit in one of the N candidate combined motion information unit sets and a pixel sample Z is less than or equal to a vertical component threshold, where the pixel sample Z of the current image block is different from either of the first pixel sample and the second pixel sample.

In a feasible implementation of the first aspect, the obtaining motion information of each second pixel sample based on the parsed second bitstream information and the corresponding predicted motion information of each second pixel sample includes: obtaining the differential motion information of each second pixel sample based on the parsed second bitstream information; and adding up the differential motion information of each second pixel sample and the corresponding predicted motion information, to obtain the motion information of each second pixel sample.

In a feasible implementation of the first aspect, the motion model is a non-translational motion model, and specifically, the non-translational motion model is an affine motion model in the following form:

$$\begin{cases} vx = \dfrac{vx_1 \text{-} vx_0}{w}\,x \text{-} \dfrac{vy_1 \text{-} vy_0}{w}\,y + vx_0 \\[2mm] vy = \dfrac{vy_1 \text{-} vy_0}{w}\,x + \dfrac{vx_1 \text{-} vx_0}{w}\,y + vy_0 \end{cases};$$

where

motion vectors of the first pixel sample and the second pixel sample are $(vx_0, vy_0)$ and $(vx_1, vy_1)$, respectively, vx is a motion vector horizontal component of a pixel sample whose coordinates are (x, y) in the current image block, vy is a motion vector vertical component of the pixel sample whose coordinates are (x, y) in the current image block, and w is a length or width of the current image block; and correspondingly, the obtaining a predictor of the current image block based on a motion model of the current image block, the motion information of each first pixel sample, and the motion information of each second pixel sample includes: calculating a motion vector of each pixel in the current image block by using the affine motion model, and the motion vectors of the first pixel sample and the second pixel sample, and determining a predicted pixel value of each pixel in the current image block by using the calculated motion vector of each pixel in the current image block; or calculating a motion vector of each pixel block in the current image block by using the affine motion model, and the motion vectors of the first pixel sample and the second pixel sample, and determining a predicted pixel value of each pixel in each pixel block in the current image block by using the calculated motion vector of each pixel block in the current image block.

In a feasible implementation of the first aspect, the motion model is a non-translational motion model, and specifically, the non-translational motion model is an affine motion model in the following form:

$$\begin{cases} vx = \frac{vx_1 - vx_0}{w}x + \frac{vx_2 - vx_0}{h}y + vx_0 \\ vy = \frac{vy_1 - vy_0}{w}x + \frac{vy_2 - vy_0}{h}y + vy_0 \end{cases};$$

where
motion vectors of any one first pixel sample and any two second pixel samples or motion vectors of any two first pixel samples and any one second pixel sample are $(vx_0,vy_0)$, $(vx_1,vy_1)$, and $(vx_2,vy_2)$, respectively, vx is a motion vector horizontal component of a pixel sample whose coordinates are (x, y) in the current image block, vy is a motion vector vertical component of the pixel sample whose coordinates are (x, y) in the current image block, and w is a length or width of the current image block; and correspondingly, the obtaining a predictor of the current image block based on a motion model of the current image block, the motion information of each first pixel sample, and the motion information of each second pixel sample includes: calculating a motion vector of each pixel in the current image block by using the affine motion model, and the motion vectors of the first pixel sample and the second pixel sample, and determining a predicted pixel value of each pixel in the current image block by using the calculated motion vector of each pixel in the current image block; or calculating a motion vector of each pixel block in the current image block by using the affine motion model, and the motion vectors of the first pixel sample and the second pixel sample, and determining a predicted pixel value of each pixel in each pixel block in the current image block by using the calculated motion vector of each pixel block in the current image block.

In a feasible implementation of the first aspect, the at least one first pixel sample and the at least one second pixel sample include two pixel samples in a top-left pixel sample, a top-right pixel sample, a bottom-left pixel sample, and a central pixel sample a1 of the current image block, where the top-left pixel sample of the current image block is a top-left vertex of the current image block or a pixel block that is at a top-left vertex of the current image block and that is included in the current image block; the bottom-left pixel sample of the current image block is a bottom-left vertex of the current image block or a pixel block that is at a bottom-left vertex of the current image block and that is included in the current image block; the top-right pixel sample of the current image block is a top-right vertex of the current image block or a pixel block that is at a top-right vertex of the current image block and that is included in the current image block; and the central pixel sample a1 of the current image block is a central pixel of the current image block or a pixel block that is at a central pixel of the current image block and that is included in the current image block.

In a feasible implementation of the first aspect, a candidate motion information unit set corresponding to the top-left pixel sample of the current image block includes motion information units of x1 pixel samples, where the x1 pixel samples include at least one pixel sample that is spatially adjacent to the top-left pixel sample of the current image block and/or at least one pixel sample that is temporally adjacent to the top-left pixel sample of the current image block, and x1 is a positive integer; and the x1 pixel samples include at least one of a pixel sample that is at a same location as the top-left pixel sample of the current image block and that is in a video frame temporally adjacent to a video frame to which the current image block belongs, a spatially adjacent pixel sample to the left of the current image block, a spatially adjacent pixel sample to the top-left of the current image block, and a spatially adjacent pixel sample to the top of the current image block.

In a feasible implementation of the first aspect, a candidate motion information unit set corresponding to the top-right pixel sample of the current image block includes motion information units of x2 pixel samples, where the x2 pixel samples include at least one pixel sample that is spatially adjacent to the top-right pixel sample of the current image block and/or at least one pixel sample that is temporally adjacent to the top-right pixel sample of the current image block, and x2 is a positive integer; and the x2 pixel samples include at least one of a pixel sample that is at a same location as the top-right pixel sample of the current image block and that is in the video frame temporally adjacent to the video frame to which the current image block belongs, a spatially adjacent pixel sample to the right of the current image block, a spatially adjacent pixel sample to the top-right of the current image block, and a spatially adjacent pixel sample to the top of the current image block.

In a feasible implementation of the first aspect, a candidate motion information unit set corresponding to the bottom-left pixel sample of the current image block includes motion information units of x3 pixel samples, where the x3 pixel samples include at least one pixel sample that is spatially adjacent to the bottom-left pixel sample of the current image block and/or at least one pixel sample that is temporally adjacent to the bottom-left pixel sample of the current image block, and x3 is a positive integer; and the x3 pixel samples include at least one of a pixel sample that is at a same location as the bottom-left pixel sample of the current image block and that is in the video frame temporally adjacent to the video frame to which the current image block belongs, a spatially adjacent pixel sample to the left of the current image block, a spatially adjacent pixel sample to the bottom-left of the current image block, and a spatially adjacent pixel sample to the bottom of the current image block.

In a feasible implementation of the first aspect, a candidate motion information unit set corresponding to the central pixel sample a1 of the current image block includes motion information units of x5 pixel samples, where one of the x5 pixel samples is a pixel sample a2; and a location of the central pixel sample a1 in the video frame to which the current image block belongs is the same as a location of the pixel sample a2 in a video frame that is adjacent to the video frame to which the current image block belongs, and x5 is a positive integer.

A second aspect of the embodiments of the present invention provides an image prediction method, where a current image block includes at least one first pixel sample and at least one second pixel sample, and the method includes: determining candidate motion information unit sets respectively corresponding to each first pixel sample and each second pixel sample, where any candidate motion information unit set includes at least one motion information unit; determining a combined motion information unit set of the current block, where each motion information unit in the combined motion information unit set is at least some motion information units in the candidate motion information unit sets respectively corresponding to each first pixel sample and each second pixel sample, and motion information of the motion information unit includes a motion vector with a forward prediction direction and/or a motion vector with a backward prediction direction; determining, from the combined motion information unit set, motion information units respectively corresponding to each first pixel sample and each second pixel sample; encoding first bitstream information, where the first bitstream information is used to represent the motion information units that respectively correspond to each first pixel sample and each second pixel sample and that are determined from the combined motion information unit set; using motion information of the motion information unit corresponding to the first pixel sample as motion information of the first pixel sample; using motion information of the motion information unit corresponding to the second pixel sample as predicted motion information of the second pixel sample; calculating differential motion information of the second pixel sample, where the differential motion information is a difference between the motion information and the predicted motion information; encoding second bitstream information, where the second bitstream information is used to represent differential motion information of each second pixel sample; and obtaining a predictor of the current image block based on a motion model of the current image block, the motion information of each first pixel sample, and the motion information of each second pixel sample.

It can be learned that in this embodiment of the present invention, when the motion information of the first pixel sample is obtained, only predicted motion information corresponding to the first pixel sample needs to be obtained and used as the motion information of the first pixel sample, and there is no need to further encode a bitstream to complete transmission of a residual of the predicted motion information, thereby saving bits used for transmitting a predicted information residual, reducing bit consumption, and improving encoding efficiency.

A third aspect of the embodiments of the present invention provides an image prediction apparatus, where a current image block includes at least one first pixel sample and at least one second pixel sample, and the apparatus includes: a first parsing unit, configured to parse first bitstream information, where the first bitstream information is used to indicate motion information units respectively corresponding to each first pixel sample and each second pixel sample; a first obtaining unit, configured to obtain motion information of each first pixel sample and predicted motion information of each second pixel sample based on the parsed first bitstream information, where the predicted motion information is predicted information of motion information; a second parsing unit, configured to parse second bitstream information, where the second bitstream information is used to represent differential motion information of each second pixel sample, and the differential motion information is a difference between motion information and predicted motion information; a second obtaining unit, configured to obtain motion information of each second pixel sample based on the parsed second bitstream information and the corresponding predicted motion information of each second pixel sample; and a third obtaining unit, configured to obtain a predictor of the current image block based on a motion model of the current image block, the motion information of each first pixel sample, and the motion information of each second pixel sample.

In a feasible implementation of the third aspect, the first bitstream information includes an index, and the index is used to indicate the motion information units respectively corresponding to each first pixel sample and each second pixel sample.

In a feasible implementation of the third aspect, the second bitstream information includes a difference, and the difference is a motion vector residual between a motion vector and a predicted motion vector of any second pixel sample.

In a feasible implementation of the third aspect, the first obtaining unit is specifically configured to: determine candidate motion information unit sets respectively corresponding to each first pixel sample and each second pixel sample, where any candidate motion information unit set includes at least one motion information unit; determine a combined motion information unit set of the current block, where each motion information unit in the combined motion information unit set is at least some motion information units in the candidate motion information unit sets respectively corresponding to each first pixel sample and each second pixel sample, and motion information of the motion information unit includes a motion vector with a forward prediction direction and/or a motion vector with a backward prediction direction; determine, from the combined motion information unit set based on the parsed first bitstream information, the motion information units respectively corresponding to each first pixel sample and each second pixel sample; use motion information of the motion information unit corresponding to the first pixel sample as the motion information of the first pixel sample; and use motion information of the motion information unit corresponding to the second pixel sample as the predicted motion information of the second pixel sample.

In a feasible implementation of the third aspect, the first obtaining unit is specifically configured to: determine, from N candidate combined motion information unit sets, a combined motion information unit set including the motion information units respectively corresponding to each first pixel sample and each second pixel sample, where each motion information unit included in each of the N candidate combined motion information unit sets is selected from at least some motion information units that meet a constraint in the candidate motion information unit sets respectively corresponding to each first pixel sample and each second pixel sample, N is a positive integer, and the N candidate combined motion information unit sets are different from each other.

In a feasible implementation of the third aspect, the N candidate combined motion information unit sets meet at least one of a first condition, a second condition, a third condition, a fourth condition, and a fifth condition, where the first condition includes: a motion manner that is of the current image block and that is indicated by a motion information unit in any one of the N candidate combined motion information unit sets is non-translational motion; the second condition includes: two motion information units in any one of the N candidate combined motion information unit sets correspond to a same prediction direction; the third condition includes: two motion information units in any one of the N candidate combined motion information unit sets correspond to a same reference frame index; the fourth condition includes: an absolute value of a difference between motion vector horizontal components of two motion information units in any one of the N candidate combined motion information unit sets is less than or equal to a horizontal component threshold, or an absolute value of a difference between motion vector horizontal components of one motion information unit in any one of the N candidate combined motion information unit sets and a pixel sample Z is less than or equal to a horizontal component threshold, where the pixel sample Z of the current image block is different from either of the first pixel sample and the second pixel sample; and the fifth condition includes: an absolute value of a difference between motion vector vertical components of two motion information units in any one of the N candidate combined motion information unit sets is less than or equal to a vertical component threshold, or an absolute value of a difference between motion vector vertical components of any motion information unit in one of the N candidate combined motion information unit sets and a pixel sample Z is less than or equal to a vertical component threshold, where the pixel sample Z of the current image block is different from either of the first pixel sample and the second pixel sample.

In a feasible implementation of the third aspect, the second obtaining unit is specifically configured to: obtain the differential motion information of each second pixel sample based on the parsed second bitstream information; and add up the differential motion information of each second pixel sample and the corresponding predicted motion information, to obtain the motion information of each second pixel sample.

In a feasible implementation of the third aspect, the motion model is a non-translational motion model, and specifically, the non-translational motion model is an affine motion model in the following form:

$$\begin{cases} vx = \frac{vx_1-vx_0}{w}x - \frac{vy_1-vy_0}{w}y + vx_0 \\ vy = \frac{vy_1-vy_0}{w}x + \frac{vx_1-vx_0}{w}y + vy_0 \end{cases};$$

where
motion vectors of the first pixel sample and the second pixel sample are $(vx_0,vy_0)$ and $(vx_1,vy_1)$, respectively, vx is a motion vector horizontal component of a pixel sample whose coordinates are (x, y) in the current image block, vy is a motion vector vertical component of the pixel sample whose coordinates are (x, y) in the current image block, and w is a length or width of the current image block; and correspondingly, the third obtaining unit is specifically configured to: calculate a motion vector of each pixel in the current image block by using the affine motion model, and the motion vectors of the first pixel sample and the second pixel sample, and determine a predicted pixel value of each pixel in the current image block by using the calculated motion vector of each pixel in the current image block; or calculate a motion vector of each pixel block in the current image block by using the affine motion model, and the motion vectors of the first pixel sample and the second pixel sample, and determine a predicted pixel value of each pixel in each pixel block in the current image block by using the calculated motion vector of each pixel block in the current image block.

In a feasible implementation of the third aspect, the motion model is a non-translational motion model, and specifically, the non-translational motion model is an affine motion model in the following form:

$$\begin{cases} vx = \frac{vx_1 - vx_0}{w}x + \frac{vx_2 - vx_0}{h}y + vx_0 \\ vy = \frac{vy_1 - vy_0}{w}x + \frac{vy_2 - vy_0}{h}y + vy_0 \end{cases};$$

where

motion vectors of any one first pixel sample and any two second pixel samples or motion vectors of any two first pixel samples and any one second pixel sample are $(vx_0, vy_0)$, $(vx_1, vy_1)$, and $(vx_2, vy_2)$, respectively, vx is a motion vector horizontal component of a pixel sample whose coordinates are (x, y) in the current image block, vy is a motion vector vertical component of the pixel sample whose coordinates are (x, y) in the current image block, and w is a length or width of the current image block; and correspondingly, the third obtaining unit is specifically configured to: calculate a motion vector of each pixel in the current image block by using the affine motion model, and the motion vectors of the first pixel sample and the second pixel sample, and determine a predicted pixel value of each pixel in the current image block by using the calculated motion vector of each pixel in the current image block; or calculate a motion vector of each pixel block in the current image block by using the affine motion model, and the motion vectors of the first pixel sample and the second pixel sample, and determine a predicted pixel value of each pixel in each pixel block in the current image block by using the calculated motion vector of each pixel block in the current image block.

In a feasible implementation of the third aspect, the at least one first pixel sample and the at least one second pixel sample include two pixel samples in a top-left pixel sample, a top-right pixel sample, a bottom-left pixel sample, and a central pixel sample a1 of the current image block, where the top-left pixel sample of the current image block is a top-left vertex of the current image block or a pixel block that is at a top-left vertex of the current image block and that is included in the current image block; the bottom-left pixel sample of the current image block is a bottom-left vertex of the current image block or a pixel block that is at a bottom-left vertex of the current image block and that is included in the current image block; the top-right pixel sample of the current image block is a top-right vertex of the current image block or a pixel block that is at a top-right vertex of the current image block and that is included in the current image block; and the central pixel sample a1 of the current image block is a central pixel of the current image block or a pixel block that is at a central pixel of the current image block and that is included in the current image block.

In a feasible implementation of the third aspect, a candidate motion information unit set corresponding to the top-left pixel sample of the current image block includes motion information units of x1 pixel samples, where the x1 pixel samples include at least one pixel sample that is spatially adjacent to the top-left pixel sample of the current image block and/or at least one pixel sample that is temporally adjacent to the top-left pixel sample of the current image block, and x1 is a positive integer; and the x1 pixel samples include at least one of a pixel sample that is at a same location as the top-left pixel sample of the current image block and that is in a video frame temporally adjacent to a video frame to which the current image block belongs, a spatially adjacent pixel sample to the left of the current image block, a spatially adjacent pixel sample to the top-left of the current image block, and a spatially adjacent pixel sample to the top of the current image block.

In a feasible implementation of the third aspect, a candidate motion information unit set corresponding to the top-right pixel sample of the current image block includes motion information units of x2 pixel samples, where the x2 pixel samples include at least one pixel sample that is spatially adjacent to the top-right pixel sample of the current image block and/or at least one pixel sample that is temporally adjacent to the top-right pixel sample of the current image block, and x2 is a positive integer; and the x2 pixel samples include at least one of a pixel sample that is at a same location as the top-right pixel sample of the current image block and that is in the video frame temporally adjacent to the video frame to which the current image block belongs, a spatially adjacent pixel sample to the right of the current image block, a spatially adjacent pixel sample to the top-right of the current image block, and a spatially adjacent pixel sample to the top of the current image block.

In a feasible implementation of the third aspect, a candidate motion information unit set corresponding to the bottom-left pixel sample of the current image block includes motion information units of x3 pixel samples, where the x3 pixel samples include at least one pixel sample that is spatially adjacent to the bottom-left pixel sample of the current image block and/or at least one pixel sample that is temporally adjacent to the bottom-left pixel sample of the current image block, and x3 is a positive integer; and the x3 pixel samples include at least one of a pixel sample that is at a same location as the bottom-left pixel sample of the current image block and that is in the video frame temporally adjacent to the video frame to which the current image block belongs, a spatially adjacent pixel sample to the left of the current image block, a spatially adjacent pixel sample to the bottom-left of the current image block, and a spatially adjacent pixel sample to the bottom of the current image block.

In a feasible implementation of the third aspect, a candidate motion information unit set corresponding to the central pixel sample a1 of the current image block includes motion information units of x5 pixel samples, where one of the x5 pixel samples is a pixel sample a2; and a location of the central pixel sample a1 in the video frame to which the current image block belongs is the same as a location of the pixel sample a2 in a video frame that is adjacent to the video frame to which the current image block belongs, and x5 is a positive integer.

A fourth aspect of the embodiments of the present invention provides an image prediction apparatus, where a current image block includes at least one first pixel sample and at least one second pixel sample, and the apparatus includes: a first determining unit, configured to determine candidate motion information unit sets respectively corresponding to each first pixel sample and each second pixel sample, where any candidate motion information unit set includes at least one motion information unit; a second determining unit, configured to determine a combined motion information unit set of the current block, where each motion information unit in the combined motion information unit set is at least some motion information units in the candidate motion information unit sets respectively corresponding to each first pixel sample and each second pixel sample, and motion information of the motion information unit includes a motion vector with a forward prediction direction and/or a motion vector with a backward prediction direction; a third determining unit, configured to determine, from the combined motion information unit set, motion information units respectively corresponding to each first pixel sample and each second pixel sample; a first encoding unit, configured to encode first bitstream information, where the first bitstream information is used to represent the motion information units that respectively correspond to each first pixel sample and each second pixel sample and that are determined from the combined motion information unit set; a first assignment unit, configured to use motion information of the motion information unit corresponding to the first pixel sample as motion information of the first pixel sample; a second assignment unit, configured to use motion information of the motion information unit corresponding to the second pixel sample as predicted motion information of the second pixel sample; a calculation unit, configured to calculate differential motion information of the second pixel sample, where the differential motion information is a difference between the motion information and the predicted motion information; a second encoding unit, configured to encode second bitstream information, where the second bitstream information is used to represent differential motion information of each second pixel sample; and an obtaining unit, configured to obtain a predictor of the current image block based on a motion model of the current image block, the motion information of each first pixel sample, and the motion information of each second pixel sample.

A fifth aspect of the embodiments of the present invention provides an image prediction apparatus, where a current image block includes at least one first pixel sample and at least one second pixel sample, and the apparatus includes: a processor and a memory coupled to the processor; the memory is configured to store code or an instruction; and the processor is configured to invoke the code or the instruction to perform the following operations: parsing first bitstream information, where the first bitstream information is used to indicate motion information units respectively corresponding to each first pixel sample and each second pixel sample; obtaining motion information of each first pixel sample and predicted motion information of each second pixel sample based on the parsed first bitstream information, where the predicted motion information is predicted information of motion information; parsing second bitstream information, where the second bitstream information is used to represent differential motion information of each second pixel sample, and the differential motion information is a difference between motion information and predicted motion information; obtaining motion information of each second pixel sample based on the parsed second bitstream information and the corresponding predicted motion information of each second pixel sample; and obtaining a predictor of the current image block based on a motion model of the current image block, the motion information of each first pixel sample, and the motion information of each second pixel sample.

A sixth aspect of the embodiments of the present invention provides an image prediction apparatus, where a current image block includes at least one first pixel sample and at least one second pixel sample, and the apparatus includes: a processor and a memory coupled to the processor; the memory is configured to store code or an instruction; and the processor is configured to invoke the code or the instruction to perform the following operations: determining candidate motion information unit sets respectively corresponding to each first pixel sample and each second pixel sample, where any candidate motion information unit set includes at least one motion information unit; determining a combined motion information unit set of the current block, where each motion information unit in the combined motion information unit set is at least some motion information units in the candidate motion information unit sets respectively corresponding to each first pixel sample and each second pixel sample, and motion information of the motion information unit includes a motion vector with a forward prediction direction and/or a motion vector with a backward prediction direction; determining, from the combined motion information unit set, motion information units respectively corresponding to each first pixel sample and each second pixel sample; encoding first bitstream information, where the first bitstream information is used to represent the motion information units that respectively correspond to each first pixel sample and each second pixel sample and that are determined from the combined motion information unit set; using motion information of the motion information unit corresponding to the first pixel sample as motion information of the first pixel sample; using motion information of the motion information unit corresponding to the second pixel sample as predicted motion information of the second pixel sample; calculating differential motion information of the second pixel sample, where the differential motion information is a difference between the motion information and the predicted motion information; encoding second bitstream information, where the second bitstream information is used to represent differential motion information of each second pixel sample; and obtaining a predictor of the current image block based on a motion model of the current image block, the motion information of each first pixel sample, and the motion information of each second pixel sample.

A seventh aspect of the present invention provides an image prediction method. The method may include:

determining two pixel samples in a current image block, and determining a candidate motion information unit set corresponding to each of the two pixel samples, where the candidate motion information unit set corresponding to each pixel sample includes at least one candidate motion information unit;

determining a combined motion information unit set i including two motion information units, where

each motion information unit in the combined motion information unit set i is selected from at least some motion information units in the candidate motion information unit set corresponding to each of the two pixel samples, and the motion information unit includes a motion vector with a forward prediction direction and/or a motion vector with a backward prediction direction; and

performing pixel value prediction on the current image block by using an affine motion model and the combined motion information unit set i.

With reference to the seventh aspect, in a first possible implementation of the seventh aspect, the determining a combined motion information unit set i including two motion information units includes:

determining, from N candidate combined motion information unit sets, the combined motion information unit set i including the two motion information units, where each motion information unit included in each of the N candidate combined motion information unit sets is selected from at least some motion information units that meet a constraint in the candidate motion information unit set corresponding to each of the two pixel samples, N is a positive integer, the N candidate combined motion information unit sets are different from each other, and each of the N candidate combined motion information unit sets includes two motion information units.

With reference to the first possible implementation of the seventh aspect, in a second possible implementation of the seventh aspect, the N candidate combined motion information unit sets meet at least one of a first condition, a second condition, a third condition, a fourth condition, and a fifth condition, where

the first condition includes: a motion manner that is of the current image block and that is indicated by a motion information unit in any one of the N candidate combined motion information unit sets is non-translational motion;

the second condition includes: two motion information units in any one of the N candidate combined motion information unit sets correspond to a same prediction direction;

the third condition includes: two motion information units in any one of the N candidate combined motion information unit sets correspond to a same reference frame index;

the fourth condition includes: an absolute value of a difference between motion vector horizontal components of two motion information units in any one of the N candidate combined motion information unit sets is less than or equal to a horizontal component threshold, or an absolute value of a difference between motion vector horizontal components of one motion information unit in any one of the N candidate combined motion information unit sets and a pixel sample Z is less than or equal to a horizontal component threshold, where the pixel sample Z of the current image block is different from either of the two pixel samples; and

the fifth condition includes: an absolute value of a difference between motion vector vertical components of two motion information units in any one of the N candidate combined motion information unit sets is less than or equal to a vertical component threshold, or an absolute value of a difference between motion vector vertical components of one motion information unit in any one of the N candidate combined motion information unit sets and a pixel sample Z is less than or equal to a horizontal component threshold, where the pixel sample Z of the current image block is different from either of the two pixel samples.

With reference to any one of the seventh aspect, or the first and the second possible implementations of the seventh aspect, in a third possible implementation of the seventh aspect, the two pixel samples include two pixel samples in a top-left pixel sample, a top-right pixel sample, a bottom-left pixel sample, and a central pixel sample a1 of the current image block, where

the top-left pixel sample of the current image block is a top-left vertex of the current image block or a pixel block that is at a top-left vertex of the current image block and that is included in the current image block; the bottom-left pixel sample of the current image block is a bottom-left vertex of the current image block or a pixel block that is at a bottom-left vertex of the current image block and that is included in the current image block; the top-right pixel sample of the current image block is a top-right vertex of the current image block or a pixel block that is at a top-right vertex of the current image block and that is included in the current image block; and the central pixel sample a1 of the current image block is a central pixel of the current image block or a pixel block that is at a central pixel of the current image block and that is included in the current image block.

With reference to the third possible implementation of the seventh aspect, in a fourth possible implementation of the seventh aspect,

a candidate motion information unit set corresponding to the top-left pixel sample of the current image block includes motion information units of x1 pixel samples, where the x1 pixel samples include at least one pixel sample that is spatially adjacent to the top-left pixel sample of the current image block and/or at least one pixel sample that is temporally adjacent to the top-left pixel sample of the current image block, and x1 is a positive integer; and

the x1 pixel samples include at least one of a pixel sample that is at a same location as the top-left pixel sample of the current image block and that is in a video frame temporally adjacent to a video frame to which the current image block belongs, a spatially adjacent pixel sample to the left of the current image block, a spatially adjacent pixel sample to the top-left of the current image block, and a spatially adjacent pixel sample to the top of the current image block.

With reference to either of the third and the fourth possible implementations of the seventh aspect, in a fifth possible implementation of the seventh aspect, a candidate motion information unit set corresponding to the top-right pixel sample of the current image block includes motion information units of x2 pixel samples, where the x2 pixel samples include at least one pixel sample that is spatially adjacent to the top-right pixel sample of the current image block and/or at least one pixel sample that is temporally adjacent to the top-right pixel sample of the current image block, and x2 is a positive integer; and

the x2 pixel samples include at least one of a pixel sample that is at a same location as the top-right pixel sample of the current image block and that is in the video frame temporally adjacent to the video frame to which the current image block belongs, a spatially adjacent pixel sample to the right of the current image block, a spatially adjacent pixel sample to the top-right of the current image block, and a spatially adjacent pixel sample to the top of the current image block.

With reference to any one of the third to the fifth possible implementations of the seventh aspect, in a sixth possible implementation of the seventh aspect,

a candidate motion information unit set corresponding to the bottom-left pixel sample of the current image block includes motion information units of x3 pixel samples, where the x3 pixel samples include at least one pixel sample that is spatially adjacent to the bottom-left pixel sample of the current image block and/or at least one pixel sample that is temporally adjacent to the bottom-left pixel sample of the current image block, and x3 is a positive integer; and

the x3 pixel samples include at least one of a pixel sample that is at a same location as the bottom-left pixel sample of the current image block and that is in the video frame temporally adjacent to the video frame to which the current image block belongs, a spatially adjacent pixel sample to the left of the current image block, a spatially adjacent pixel sample to the bottom-left of the current image block, and a spatially adjacent pixel sample to the bottom of the current image block.

With reference to any one of the third to the sixth possible implementations of the seventh aspect, in a seventh possible implementation of the seventh aspect,

a candidate motion information unit set corresponding to the central pixel sample a1 of the current image block includes motion information units of x5 pixel samples, where one of the x5 pixel samples is a pixel sample a2; and

a location of the central pixel sample a1 in the video frame to which the current image block belongs is the same as a location of the pixel sample a2 in a video frame that is adjacent to the video frame to which the current image block belongs, and x5 is a positive integer.

With reference to any one of the seventh aspect, or the first to the seventh possible implementations of the seventh aspect, in an eighth possible implementation of the seventh aspect,

the performing pixel value prediction on the current image block by using an affine motion model and the combined motion information unit set i includes: when a reference frame index corresponding to a motion vector with a prediction direction being a first prediction direction in the combined motion information unit set i is different from a reference frame index of the current image block, scaling the combined motion information unit set i, so that the motion vector with the prediction direction being the first prediction direction in the combined motion information unit set i is scaled to a reference frame of the current image block; and performing pixel value prediction on the current image block by using the affine motion model and the scaled combined motion information unit set i, where the first prediction direction is forward or backward; or

the performing pixel value prediction on the current image block by using an affine motion model and the combined motion information unit set i includes: when a reference frame index corresponding to a motion vector with the forward prediction direction in the combined motion information unit set i is different from a forward reference frame index of the current image block, and a reference frame index corresponding to a motion vector with the backward prediction direction in the combined motion information unit set i is different from a backward reference frame index of the current image block, scaling the combined motion information unit set i, so that the motion vector with the forward prediction direction in the combined motion information unit set i is scaled to a forward reference frame of the current image block and the motion vector with the backward prediction direction in the combined motion information unit set i is scaled to a backward reference frame of the current image block; and performing pixel value prediction on the current image block by using the affine motion model and the scaled combined motion information unit set i.

With reference to any one of the seventh aspect, or the first to the eighth possible implementations of the seventh aspect, in a ninth possible implementation of the seventh aspect,

the performing pixel value prediction on the current image block by using an affine motion model and the combined motion information unit set i includes:

calculating a motion vector of each pixel in the current image block by using the affine motion model and the combined motion information unit set i, and determining a predicted pixel value of each pixel in the current image block by using the calculated motion vector of each pixel in the current image block; or

calculating a motion vector of each pixel block in the current image block by using the affine motion model and the combined motion information unit set i, and determining a predicted pixel value of each pixel in each pixel block in the current image block by using the calculated motion vector of each pixel block in the current image block.

With reference to any one of the seventh aspect, or the first to the ninth possible implementations of the seventh aspect, in a tenth possible implementation of the seventh aspect,

the performing pixel value prediction on the current image block by using an affine motion model and the combined motion information unit set i includes: obtaining a motion vector of any pixel sample in the current image block by using a ratio of a difference between motion vector horizontal components of the two pixel samples to a length or width of the current image block, and a ratio of a difference between motion vector vertical components of the two pixel samples to the length or width of the current image block, where motion vectors of the two pixel samples are obtained based on motion vectors of two motion information units in the combined motion information unit set i.

With reference to the tenth possible implementation of the seventh aspect, in an eleventh possible implementation of the seventh aspect,

a horizontal coordinate coefficient of the motion vector horizontal components and a vertical coordinate coefficient of the motion vector vertical components of the two pixel samples are equal, and a vertical coordinate coefficient of the motion vector horizontal components and a horizontal coordinate coefficient of the motion vector vertical components of the two pixel samples are opposite.

With reference to any one of the seventh aspect, or the first to the eleventh possible implementations of the seventh aspect, in a twelfth possible implementation of the seventh aspect,

the affine motion model is an affine motion model in the following form:

$$\begin{cases} vx = \dfrac{vx_1 - vx_0}{w}x - \dfrac{vy_1 - vy_0}{w}y + vx_0 \\ vy = \dfrac{vy_1 - vy_0}{w}x + \dfrac{vx_1 - vx_0}{w}y + vy_0 \end{cases};$$

where

the motion vectors of the two pixel samples are $(vx_0, vy_0)$ and $(vx_1, vy_1)$, respectively, vx is a motion vector horizontal component of a pixel sample whose coordinates are (x, y) in the current image block, vy is a motion vector vertical component of the pixel sample whose coordinates are (x, y) in the current image block, and w is a length or width of the current image block.

With reference to any one of the seventh aspect, or the first to the twelfth possible implementations of the seventh aspect, in a thirteenth possible implementation of the seventh aspect,

the image prediction method is applied to a video coding process, or the image prediction method is applied to a video decoding process.

With reference to the thirteenth possible implementation of the seventh aspect, in a fourteenth possible implementation of the seventh aspect, when the image prediction method is applied to the video decoding process, the determining, from N candidate combined motion information unit sets, the combined motion information unit set i including the two motion information units includes: determining, from the N candidate combined motion information unit sets based on an identifier of the combined motion information unit set i that is obtained from a video bitstream, the combined motion information unit set i including the two motion information units.

With reference to the thirteenth possible implementation of the seventh aspect or the fourteenth possible implementation of the seventh aspect, in a fifteenth possible implementation of the seventh aspect, when the image prediction method is applied to the video decoding process, the method further includes: decoding the video bitstream to obtain motion vector residuals of the two pixel samples; obtaining motion vector predictors of the two pixel samples by using motion vectors of spatially adjacent or temporally adjacent pixel samples of the two pixel samples; and separately obtaining motion vectors of the two pixel samples based on the motion vector predictors of the two pixel samples and the motion vector residuals of the two pixel samples.

With reference to the thirteenth possible implementation of the seventh aspect, in a sixteenth possible implementation of the seventh aspect, when the image prediction method is applied to the video coding process, the method further includes: obtaining motion vector predictors of the two pixel samples by using motion vectors of spatially adjacent or temporally adjacent pixel samples of the two pixel samples; obtaining motion vector residuals of the two pixel samples based on the motion vector predictors of the two pixel samples; and writing the motion vector residuals of the two pixel samples into the video bitstream.

With reference to the thirteenth possible implementation of the seventh aspect or the sixteenth possible implementation of the seventh aspect, in a seventeenth possible implementation of the seventh aspect, when the image prediction method is applied to the video coding process, the method further includes: writing the identifier of the combined motion information unit set i into the video bitstream.

An eighth aspect of the embodiments of the present invention provides an image prediction apparatus, including:

a first determining unit, configured to determine two pixel samples in a current image block, and determine a candidate motion information unit set corresponding to each of the two pixel samples, where the candidate motion information unit set corresponding to each pixel sample includes at least one candidate motion information unit;

a second determining unit, configured to determine a combined motion information unit set i including two motion information units, where

each motion information unit in the combined motion information unit set i is selected from at least some motion information units in the candidate motion information unit set corresponding to each of the two pixel samples, and the motion information unit includes a motion vector with a forward prediction direction and/or a motion vector with a backward prediction direction; and

a prediction unit, configured to perform pixel value prediction on the current image block by using an affine motion model and the combined motion information unit set i.

With reference to the eighth aspect, in a first possible implementation of the eighth aspect, the second determining unit is specifically configured to determine, from N candidate combined motion information unit sets, the combined motion information unit set i including the two motion information units, where each motion information unit included in each of the N candidate combined motion information unit sets is selected from at least some motion information units that meet a constraint in the candidate motion information unit set corresponding to each of the two pixel samples, N is a positive integer, the N candidate combined motion information unit sets are different from each other, and each of the N candidate combined motion information unit sets includes two motion information units.

With reference to the first possible implementation of the eighth aspect, in a second possible implementation of the eighth aspect, the N candidate combined motion information unit sets meet at least one of a first condition, a second condition, a third condition, a fourth condition, and a fifth condition, where

the first condition includes: a motion manner that is of the current image block and that is indicated by a motion information unit in any one of the N candidate combined motion information unit sets is non-translational motion;

the second condition includes: two motion information units in any one of the N candidate combined motion information unit sets correspond to a same prediction direction;

the third condition includes: two motion information units in any one of the N candidate combined motion information unit sets correspond to a same reference frame index;

the fourth condition includes: an absolute value of a difference between motion vector horizontal components of two motion information units in any one of the N candidate combined motion information unit sets is less than or equal to a horizontal component threshold, or an absolute value of a difference between motion vector horizontal components of one motion information unit in any one of the N candidate combined motion information unit sets and a pixel sample Z is less than or equal to a horizontal component threshold, where the pixel sample Z of the current image block is different from either of the two pixel samples; and

the fifth condition includes: an absolute value of a difference between motion vector vertical components of two motion information units in any one of the N candidate combined motion information unit sets is less than or equal to a vertical component threshold, or an absolute value of a difference between motion vector horizontal components of one motion information unit in any one of the N candidate combined motion information unit sets and a pixel sample Z is less than or equal to a horizontal component threshold, where the pixel sample Z of the current image block is different from either of the two pixel samples.

With reference to any one of the eighth aspect, or the first and the second possible implementations of the eighth aspect, in a third possible implementation of the eighth aspect, the two pixel samples include two pixel samples in a top-left pixel sample, a top-right pixel sample, a bottom-left pixel sample, and a central pixel sample a1 of the current image block, where

the top-left pixel sample of the current image block is a top-left vertex of the current image block or a pixel block that is at a top-left vertex of the current image block and that is included in the current image block; the bottom-left pixel sample of the current image block is a bottom-left vertex of the current image block or a pixel block that is at a bottom-left vertex of the current image block and that is included in the current image block; the top-right pixel sample of the current image block is a top-right vertex of the current image block or a pixel block that is at a top-right vertex of the current image block and that is included in the current image block; and the central pixel sample a1 of the current image block is a central pixel of the current image block or a pixel block that is at a central pixel of the current image block and that is included in the current image block.

With reference to the third possible implementation of the eighth aspect, in a fourth possible implementation of the eighth aspect, a candidate motion information unit set corresponding to the top-left pixel sample of the current image block includes motion information units of x1 pixel samples, where the x1 pixel samples include at least one pixel sample that is spatially adjacent to the top-left pixel sample of the current image block and/or at least one pixel sample that is temporally adjacent to the top-left pixel sample of the current image block, and x1 is a positive integer; and the x1 pixel samples include at least one of a pixel sample that is at a same location as the top-left pixel sample of the current image block and that is in a video frame temporally adjacent to a video frame to which the current image block belongs, a spatially adjacent pixel sample to the left of the current image block, a spatially adjacent pixel sample to the top-left of the current image block, and a spatially adjacent pixel sample to the top of the current image block.

With reference to either of the third and the fourth possible implementations of the eighth aspect, in a fifth possible implementation of the eighth aspect, a candidate motion information unit set corresponding to the top-right pixel sample of the current image block includes motion information units of x2 pixel samples, where the x2 pixel samples include at least one pixel sample that is spatially adjacent to the top-right pixel sample of the current image block and/or at least one pixel sample that is temporally adjacent to the top-right pixel sample of the current image block, and x2 is a positive integer; and the x2 pixel samples include at least one of a pixel sample that is at a same location as the top-right pixel sample of the current image block and that is in the video frame temporally adjacent to the video frame to which the current image block belongs, a spatially adjacent pixel sample to the right of the current image block, a spatially adjacent pixel sample to the top-right of the current image block, and a spatially adjacent pixel sample to the top of the current image block.

With reference to any one of the third to the fifth possible implementations of the eighth aspect, in a sixth possible implementation of the eighth aspect, a candidate motion information unit set corresponding to the bottom-left pixel sample of the current image block includes motion information units of x3 pixel samples, where the x3 pixel samples include at least one pixel sample that is spatially adjacent to the bottom-left pixel sample of the current image block and/or at least one pixel sample that is temporally adjacent to the bottom-left pixel sample of the current image block, and x3 is a positive integer; and the x3 pixel samples include at least one of a pixel sample that is at a same location as the bottom-left pixel sample of the current image block and that is in the video frame temporally adjacent to the video frame to which the current image block belongs, a spatially adjacent pixel sample to the left of the current image block, a spatially adjacent pixel sample to the bottom-left of the current image block, and a spatially adjacent pixel sample to the bottom of the current image block.

With reference to any one of the third to the sixth possible implementations of the eighth aspect, in a seventh possible implementation of the eighth aspect, a candidate motion information unit set corresponding to the central pixel sample a1 of the current image block includes motion information units of x5 pixel samples, where one of the x5 pixel samples is a pixel sample a2; and a location of the central pixel sample a1 in the video frame to which the current image block belongs is the same as a location of the pixel sample a2 in a video frame that is adjacent to the video frame to which the current image block belongs, and x5 is a positive integer.

With reference to any one of the eighth aspect, or the first to the seventh possible implementations of the eighth aspect, in an eighth possible implementation of the eighth aspect, the prediction unit is specifically configured to: when a reference frame index corresponding to a motion vector with a prediction direction being a first prediction direction in the combined motion information unit set i is different from a reference frame index of the current image block, scale the combined motion information unit set i, so that the motion vector with the prediction direction being the first prediction direction in the combined motion information unit set i is scaled to a reference frame of the current image block; and perform pixel value prediction on the current image block by using the affine motion model and the scaled combined motion information unit set i, where the first prediction direction is forward or backward; or the prediction unit is specifically configured to: when a reference frame index corresponding to a motion vector with the forward prediction direction in the combined motion information unit set i is different from a forward reference frame index of the current image block, and a reference frame index corresponding to a motion vector with the backward prediction direction in the combined motion information unit set i is different from a backward reference frame index of the current image block, scale the combined motion information unit set i, so that the motion vector with the forward prediction direction in the combined motion information unit set i is scaled to a forward reference frame of the current image block and the motion vector with the backward prediction direction in the combined motion information unit set i is scaled to a backward reference frame of the current image block; and perform pixel value prediction on the current image block by using the affine motion model and the scaled combined motion information unit set i.

With reference to any one of the eighth aspect, or the first to the eighth possible implementations of the eighth aspect, in a ninth possible implementation of the eighth aspect, the prediction unit is specifically configured to: calculate a motion vector of each pixel in the current image block by using the affine motion model and the combined motion information unit set i, and determine a predicted pixel value of each pixel in the current image block by using the calculated motion vector of each pixel in the current image block; or

the prediction unit is specifically configured to: calculate a motion vector of each pixel block in the current image block by using the affine motion model and the combined motion information unit set i, and determine a predicted pixel value of each pixel in each pixel block in the current image block by using the calculated motion vector of each pixel block in the current image block.

With reference to any one of the eighth aspect, or the first to the ninth possible implementations of the eighth aspect, in a tenth possible implementation of the eighth aspect,

the prediction unit is specifically configured to: obtain a motion vector of any pixel sample in the current image block by using a ratio of a difference between motion vector horizontal components of the two pixel samples to a length or width of the current image block, and a ratio of a difference between motion vector vertical components of the two pixel samples to the length or width of the current image block, where motion vectors of the two pixel samples are obtained based on motion vectors of two motion information units in the combined motion information unit set i.

With reference to the tenth possible implementation of the eighth aspect, in an eleventh possible implementation of the eighth aspect, a horizontal coordinate coefficient of the motion vector horizontal components and a vertical coordinate coefficient of the motion vector vertical components of the two pixel samples are equal, and a vertical coordinate coefficient of the motion vector horizontal components and a horizontal coordinate coefficient of the motion vector vertical components of the two pixel samples are opposite.

With reference to any one of the eighth aspect, or the first to the eleventh possible implementations of the eighth aspect, in a twelfth possible implementation of the eighth aspect,

the affine motion model is an affine motion model in the following form:

$$\begin{cases} vx = \dfrac{vx_1\text{-}vx_0}{w}x\text{-}\dfrac{vy_1\text{-}vy_0}{w}y + vx_0 \\ vy = \dfrac{vy_1\text{-}vy_0}{w}x + \dfrac{vx_1\text{-}vx_0}{w}y + vy_0 \end{cases};$$

where

the motion vectors of the two pixel samples are $(vx_0, vy_0)$ and $(vx_1, vy_1)$, respectively, vx is a motion vector horizontal component of a pixel sample whose coordinates are (x, y) in the current image block, vy is a motion vector vertical component of the pixel sample whose coordinates are (x, y) in the current image block, and w is a length or width of the current image block.

With reference to any one of the eighth aspect, or the first to the twelfth possible implementations of the eighth aspect, in a thirteenth possible implementation of the eighth aspect,

the image prediction apparatus is applied to a video coding apparatus, or the image prediction apparatus is applied to a video decoding apparatus.

With reference to the thirteenth possible implementation of the eighth aspect, in a fourteenth possible implementation of the eighth aspect, when the image prediction apparatus is applied to the video decoding apparatus, the second determining unit is specifically configured to determine, from the N candidate combined motion information unit sets based on an identifier of the combined motion information unit set i that is obtained from a video bitstream, the combined motion information unit set i including the two motion information units.

With reference to the thirteenth possible implementation of the eighth aspect or the fourteenth possible implementation of the eighth aspect, in a fifteenth possible implementation of the eighth aspect, when the image prediction apparatus is applied to the video decoding apparatus,

the apparatus further includes a decoding unit, configured to: decode the video bitstream to obtain motion vector residuals of the two pixel samples; obtain motion vector predictors of the two pixel samples by using motion vectors of spatially adjacent or temporally adjacent pixel samples of the two pixel samples; and separately obtain motion vectors of the two pixel samples based on the motion vector predictors of the two pixel samples and the motion vector residuals of the two pixel samples.

With reference to the thirteenth possible implementation of the eighth aspect, in a sixteenth possible implementation of the eighth aspect, when the image prediction apparatus is applied to the video coding apparatus, the prediction unit is further configured to: obtain motion vector predictors of the two pixel samples by using motion vectors of spatially adjacent or temporally adjacent pixel samples of the two pixel samples; obtain motion vector residuals of the two pixel samples based on the motion vector predictors of the two pixel samples; and write the motion vector residuals of the two pixel samples into the video bitstream.

With reference to the thirteenth possible implementation of the eighth aspect or the sixteenth possible implementation of the eighth aspect, in a seventeenth possible implementation of the eighth aspect, when the image prediction apparatus is applied to the video coding apparatus, the apparatus further includes an encoding unit, configured to write the identifier of the combined motion information unit set i into the video bitstream.

A ninth aspect of the embodiments of the present invention provides an image prediction apparatus, including:

a processor and a memory, where
the processor invokes code and an instruction stored in the memory, so as to: determine two pixel samples in a current image block, and determine a candidate motion information unit set corresponding to each of the two pixel samples, where the candidate motion information unit set corresponding to each pixel sample includes at least one candidate motion information unit; determine a combined motion information unit set i including two motion information units, where each motion information unit in the combined motion information unit set i is selected from at least some motion information units in the candidate motion information unit set corresponding to each of the two pixel samples, and the motion information unit includes a motion vector with a forward prediction direction and/or a motion vector with a backward prediction direction; and perform pixel value prediction on the current image block by using an affine motion model and the combined motion information unit set i.

With reference to the ninth aspect, in a first possible implementation of the ninth aspect, in an aspect of the determining a combined motion information unit set i including two motion information units, the processor is configured to determine, from N candidate combined motion information unit sets, the combined motion information unit set i including the two motion information units, where each motion information unit included in each of the N candidate combined motion information unit sets is selected from at least some motion information units that meet a constraint in the candidate motion information unit set corresponding to each of the two pixel samples, N is a positive integer, the N candidate combined motion information unit sets are different from each other, and each of the N candidate combined motion information unit sets includes two motion information units.

With reference to the first possible implementation of the ninth aspect, in a second possible implementation of the ninth aspect, the N candidate combined motion information unit sets meet at least one of a first condition, a second condition, a third condition, a fourth condition, and a fifth condition, where
the first condition includes: a motion manner that is of the current image block and that is indicated by a motion information unit in any one of the N candidate combined motion information unit sets is non-translational motion;
the second condition includes: two motion information units in any one of the N candidate combined motion information unit sets correspond to a same prediction direction;
the third condition includes: two motion information units in any one of the N candidate combined motion information unit sets correspond to a same reference frame index;
the fourth condition includes: an absolute value of a difference between motion vector horizontal components of two motion information units in any one of the N candidate combined motion information unit sets is less than or equal to a horizontal component threshold, or an absolute value of a difference between motion vector horizontal components of one motion information unit in any one of the N candidate combined motion information unit sets and a pixel sample Z is less than or equal to a horizontal component threshold, where the pixel sample Z of the current image block is different from either of the two pixel samples; and
the fifth condition includes: an absolute value of a difference between motion vector vertical components of two motion information units in any one of the N candidate combined motion information unit sets is less than or equal to a vertical component threshold, or an absolute value of a difference between motion vector vertical components of one motion information unit in any one of the N candidate combined motion information unit sets and a pixel sample Z is less than or equal to a horizontal component threshold, where the pixel sample Z of the current image block is different from either of the two pixel samples.

With reference to any one of the ninth aspect, or the first and the second possible implementations of the ninth aspect, in a third possible implementation of the ninth aspect, the two pixel samples include two pixel samples in a top-left pixel sample, a top-right pixel sample, a bottom-left pixel sample, and a central pixel sample a1 of the current image block, where
the top-left pixel sample of the current image block is a top-left vertex of the current image block or a pixel block that is at a top-left vertex of the current image block and that is included in the current image block; the bottom-left pixel sample of the current image block is a bottom-left vertex of the current image block or a pixel block that is at a bottom-left vertex of the current image block and that is included in the current image block; the top-right pixel sample of the current image block is a top-right vertex of the current image block or a pixel block that is at a top-right vertex of the current image block and that is included in the current image block; and the central pixel sample a1 of the current image block is a central pixel of the current image block or a pixel block that is at a central pixel of the current image block and that is included in the current image block.

With reference to the third possible implementation of the ninth aspect, in a fourth possible implementation of the ninth aspect, a candidate motion information unit set corresponding to the top-left pixel sample of the current image block includes motion information units of x1 pixel samples, where the x1 pixel samples include at least one pixel sample that is spatially adjacent to the top-left pixel sample of the current image block and/or at least one pixel sample that is temporally adjacent to the top-left pixel sample of the current image block, and x1 is a positive integer; and

the x1 pixel samples include at least one of a pixel sample that is at a same location as the top-left pixel sample of the current image block and that is in a video frame temporally adjacent to a video frame to which the current image block belongs, a spatially adjacent pixel sample to the left of the current image block, a spatially adjacent pixel sample to the top-left of the current image block, and a spatially adjacent pixel sample to the top of the current image block.

With reference to either of the third and the fourth possible implementations of the ninth aspect, in a fifth possible implementation of the ninth aspect, a candidate motion information unit set corresponding to the top-right pixel sample of the current image block includes motion information units of x2 pixel samples, where the x2 pixel samples include at least one pixel sample that is spatially adjacent to the top-right pixel sample of the current image block and/or at least one pixel sample that is temporally adjacent to the top-right pixel sample of the current image block, and x2 is a positive integer; and

the x2 pixel samples include at least one of a pixel sample that is at a same location as the top-right pixel sample of the current image block and that is in the video frame temporally adjacent to the video frame to which the current image block belongs, a spatially adjacent pixel sample to the right of the current image block, a spatially adjacent pixel sample to the top-right of the current image block, and a spatially adjacent pixel sample to the top of the current image block.

With reference to any one of the third to the fifth possible implementations of the ninth aspect, in a sixth possible implementation of the ninth aspect,

a candidate motion information unit set corresponding to the bottom-left pixel sample of the current image block includes motion information units of x3 pixel samples, where the x3 pixel samples include at least one pixel sample that is spatially adjacent to the bottom-left pixel sample of the current image block and/or at least one pixel sample that is temporally adjacent to the bottom-left pixel sample of the current image block, and x3 is a positive integer; and

the x3 pixel samples include at least one of a pixel sample that is at a same location as the bottom-left pixel sample of the current image block and that is in the video frame temporally adjacent to the video frame to which the current image block belongs, a spatially adjacent pixel sample to the left of the current image block, a spatially adjacent pixel sample to the bottom-left of the current image block, and a spatially adjacent pixel sample to the bottom of the current image block.

With reference to any one of the third to the sixth possible implementations of the ninth aspect, in a seventh possible implementation of the ninth aspect,

a candidate motion information unit set corresponding to the central pixel sample a1 of the current image block includes motion information units of x5 pixel samples, where one of the x5 pixel samples is a pixel sample a2; and

a location of the central pixel sample a1 in the video frame to which the current image block belongs is the same as a location of the pixel sample a2 in a video frame that is adjacent to the video frame to which the current image block belongs, and x5 is a positive integer.

With reference to any one of the ninth aspect, or the first to the seventh possible implementations of the ninth aspect, in an eighth possible implementation of the ninth aspect,

in an aspect of the performing pixel value prediction on the current image block by using an affine motion model and the combined motion information unit set i, the processor is configured to: when a reference frame index corresponding to a motion vector with a prediction direction being a first prediction direction in the combined motion information unit set i is different from a reference frame index of the current image block, scale the combined motion information unit set i, so that the motion vector with the prediction direction being the first prediction direction in the combined motion information unit set i is scaled to a reference frame of the current image block; and perform pixel value prediction on the current image block by using the affine motion model and the scaled combined motion information unit set i, where the first prediction direction is forward or backward; or

in an aspect of the performing pixel value prediction on the current image block by using an affine motion model and the combined motion information unit set i, the processor is configured to: when a reference frame index corresponding to a motion vector with the forward prediction direction in the combined motion information unit set i is different from a forward reference frame index of the current image block, and a reference frame index corresponding to a motion vector with the backward prediction direction in the combined motion information unit set i is different from a backward reference frame index of the current image block, scale the combined motion information unit set i, so that the motion vector with the forward prediction direction in the combined motion information unit set i is scaled to a forward reference frame of the current image block and the motion vector with the backward prediction direction in the combined motion information unit set i is scaled to a backward reference frame of the current image block; and perform pixel value prediction on the current image block by using the affine motion model and the scaled combined motion information unit set i.

With reference to any one of the ninth aspect, or the first to the eighth possible implementations of the ninth aspect, in a ninth possible implementation of the ninth aspect, in an aspect of the performing pixel value prediction on the current image block by using an affine motion model and the combined motion information unit set i, the processor is configured to: calculate a motion vector of each pixel in the current image block by using the affine motion model and the combined motion information unit set i, and determine a predicted pixel value of each pixel in the current image block by using the calculated motion vector of each pixel in the current image block; or

in an aspect of the performing pixel value prediction on the current image block by using an affine motion model and the combined motion information unit set i, the processor is configured to: calculate a motion vector of each pixel block in the current image block by using the affine motion model and the combined motion information unit set i, and determine a predicted pixel value of each pixel in each pixel block in the current image block by using the calculated motion vector of each pixel block in the current image block.

With reference to any one of the ninth aspect, or the first to the ninth possible implementations of the ninth aspect, in a tenth possible implementation of the ninth aspect,

in an aspect of the performing pixel value prediction on the current image block by using an affine motion model and the combined motion information unit set i, the processor is configured to: obtain a motion vector of any pixel sample in the current image block by using a ratio of a difference between motion vector horizontal components of the two pixel samples to a length or width of the current image block, and a ratio of a difference between motion vector vertical components of the two pixel samples to the length or width of the current image block, where motion vectors of the two pixel samples are obtained based on motion vectors of two motion information units in the combined motion information unit set i.

With reference to the tenth possible implementation of the ninth aspect, in an eleventh possible implementation of the ninth aspect,

a horizontal coordinate coefficient of the motion vector horizontal components and a vertical coordinate coefficient of the motion vector vertical components of the two pixel samples are equal, and a vertical coordinate coefficient of the motion vector horizontal components and a horizontal coordinate coefficient of the motion vector vertical components of the two pixel samples are opposite.

With reference to any one of the ninth aspect, or the first to the eleventh possible implementations of the ninth aspect, in a twelfth possible implementation of the ninth aspect,

the affine motion model is an affine motion model in the following form:

$$\begin{cases} vx = \dfrac{vx_1\text{-}vx_0}{w}x\text{-}\dfrac{vy_1\text{-}vy_0}{w}y + vx_0 \\ vy = \dfrac{vy_1\text{-}vy_0}{w}x + \dfrac{vx_1\text{-}vx_0}{w}y + vy_0 \end{cases};$$

where

the motion vectors of the two pixel samples are $(vx_0, vy_0)$ and $(vx_1, vy_1)$, respectively, vx is a motion vector horizontal component of a pixel sample whose coordinates are (x, y) in the current image block, vy is a motion vector vertical component of the pixel sample whose coordinates are (x, y) in the current image block, and w is a length or width of the current image block.

With reference to any one of the ninth aspect, or the first to the twelfth possible implementations of the ninth aspect, in a thirteenth possible implementation of the ninth aspect,

the image prediction apparatus is applied to a video coding apparatus, or the image prediction apparatus is applied to a video decoding apparatus.

With reference to the thirteenth possible implementation of the ninth aspect, in a fourteenth possible implementation of the ninth aspect, when the image prediction apparatus is applied to the video decoding apparatus, in an aspect of the determining a combined motion information unit set i including two motion information units, the processor is configured to determine, from the N candidate combined motion information unit sets based on an identifier of the combined motion information unit set i that is obtained from a video bitstream, the combined motion information unit set i including the two motion information units.

With reference to the thirteenth possible implementation of the ninth aspect or the fourteenth possible implementation of the ninth aspect, in a fifteenth possible implementation of the ninth aspect, when the image prediction apparatus is applied to the video decoding apparatus, the processor is further configured to decode the video bitstream to obtain motion vector residuals of the two pixel samples; obtain motion vector predictors of the two pixel samples by using motion vectors of spatially adjacent or temporally adjacent pixel samples of the two pixel samples; and separately obtain motion vectors of the two pixel samples based on the motion vector predictors of the two pixel samples and the motion vector residuals of the two pixel samples.

With reference to the thirteenth possible implementation of the ninth aspect, in a sixteenth possible implementation of the ninth aspect, when the image prediction apparatus is applied to the video coding apparatus, the processor is further configured to: obtain motion vector predictors of the two pixel samples by using motion vectors of spatially adjacent or temporally adjacent pixel samples of the two pixel samples; obtain motion vector residuals of the two pixel samples based on the motion vector predictors of the two pixel samples; and write the motion vector residuals of the two pixel samples into the video bitstream.

With reference to the thirteenth possible implementation of the ninth aspect or the sixteenth possible implementation of the ninth aspect, in a seventeenth possible implementation of the ninth aspect, when the image prediction apparatus is applied to the video coding apparatus, the processor is further configured to write the identifier of the combined motion information unit set i into the video bitstream.

A tenth aspect of the embodiments of the present invention provides an image processing method, including:

obtaining a motion vector 2-tuple of a current image block, where the motion vector 2-tuple includes respective motion vectors of two pixel samples in a video frame to which the current image block belongs; and
calculating a motion vector of any pixel sample in the current image block by using an affine motion model and the motion vector 2-tuple, where
the affine motion model is in the following form:

$$\begin{cases} vx = ax + by \\ vy = \text{-}bx + ay \end{cases};$$

where
(x, y) is coordinates of the any pixel sample, vx is a horizontal component of the motion vector of the any pixel sample, and vy is a vertical component of the motion vector of the any pixel sample; and
in the equation vx = ax + by, a is a horizontal coordinate coefficient of a horizontal component of the affine motion model, and b is a vertical coordinate coefficient of the horizontal component of the affine motion model; in the equation vy = -bx + ay, a is a vertical coordinate coefficient of a vertical component of the affine motion model, and -b is a horizontal coordinate coefficient of the vertical component of the affine motion model.

With reference to the tenth aspect, in a first possible implementation of the tenth aspect, the affine motion model further includes a horizontal displacement coefficient c of the horizontal component of the affine motion model and a vertical displacement coefficient d of the vertical component of the affine motion model, and therefore the affine motion model is in the following form:

$$\begin{cases} vx = ax + by + c \\ vy = \text{-}bx + ay + d \end{cases}.$$

With reference to the tenth aspect or the first possible implementation of the tenth aspect, in a second possible implementation of the tenth aspect, the calculating a motion vector of any pixel sample in the current image block by using an affine motion model and the motion vector 2-tuple includes:

obtaining values of the coefficients of the affine motion model by using the respective motion vectors of the two pixels and locations of the two pixel samples; and
obtaining the motion vector of the any pixel sample in the current image block by using the affine motion model and the values of the coefficients of the affine motion model.

With reference to the tenth aspect or the first or the second possible implementation of the tenth aspect, in a third possible implementation of the tenth aspect, the calculating a motion vector of any pixel sample in the current image block by using an affine motion model and the motion vector 2-tuple includes: obtaining the values of the coefficients of the affine motion model by using a ratio of a difference between horizontal components of the respective motion vectors of the two pixel samples to a distance between the two pixel samples, and a ratio of a difference between vertical components of the respective motion vectors of the two pixel samples to the distance between the two pixel samples; and obtaining the motion vector of the any pixel sample in the current image block by using the affine motion model and the values of the coefficients of the affine motion model.

With reference to the tenth aspect or the first or the second possible implementation of the tenth aspect, in a fourth possible implementation of the tenth aspect, the calculating a motion vector of any pixel sample in the current image block by using an affine motion model and the motion vector 2-tuple includes:

obtaining the values of the coefficients of the affine motion model by using a ratio of a weighted sum of components of the respective motion vectors of the two pixel samples to a distance between the two pixel samples or the square of the distance between the two pixel samples; and
obtaining the motion vector of the any pixel sample in the current image block by using the affine motion model and the values of the coefficients of the affine motion model.

With reference to any one of the tenth aspect, or the first to the third possible implementations of the tenth aspect, in a fifth possible implementation of the tenth aspect, when the two pixel samples include a top-left pixel sample of the current image block and a right-area pixel sample to the right of the top-left pixel sample, the affine motion model is specifically:

$$\begin{cases} vx = \frac{vx_1 - vx_0}{w}x - \frac{vy_1 - vy_0}{w}y + vx_0 \\ vy = \frac{vy_1 - vy_0}{w}x + \frac{vx_1 - vx_0}{w}y + vy_0 \end{cases};$$

where
$(vx_0, vy_0)$ is a motion vector of the top-left pixel sample, $(vx_1, vy_1)$ is a motion vector of the right-area pixel sample, and w is the distance between the two pixel samples.

With reference to any one of the tenth aspect, or the first to the third possible implementations of the tenth aspect, in a sixth possible implementation of the tenth aspect, when the two pixel samples include a top-left pixel sample of the current image block and a lower-area pixel sample below the top-left pixel sample, the affine motion model is specifically:

$$\begin{cases} vx = \frac{vy_2 - vy_0}{h}x + \frac{vx_2 - vx_0}{h}y + vx_0 \\ vy = -\frac{vx_2 - vx_0}{h}x + \frac{vy_2 - vy_0}{h}y + vy_0 \end{cases};$$

where
$(vx_0, vy_0)$ is a motion vector of the top-left pixel sample, $(vx_2, vy_2)$ is a motion vector of the lower-area pixel sample, and h is the distance between the two pixel samples.

With reference to any one of the tenth aspect, or the first, the second, and the fourth possible implementations of the tenth aspect, in a seventh possible implementation of the tenth aspect, when the two pixel samples include a top-left pixel sample of the current image block and a lower-right-area pixel sample to the lower right of the top-left pixel sample, the affine motion model is specifically:

$$\begin{cases} vx = \frac{(vx_3 w_1 + vy_3 h_1) - (vx_0 w_1 + vy_0 h_1)}{w_1^2 + h_1^2}x + \frac{(vx_3 h_1 - vy_3 w_1) - (vx_0 h_1 - vy_0 w_1)}{w_1^2 + h_1^2}y + vx_0 \\ vy = -\frac{(vx_3 h_1 - vy_3 w_1) - (vx_0 h_1 - vy_0 w_1)}{w_1^2 + h_1^2}x + \frac{(vx_3 w_1 + vy_3 h_1) - (vx_0 w_1 + vy_0 h_1)}{w_1^2 + h_1^2}y + vy_0 \end{cases};$$

where
$(vx_0, vy_0)$ is a motion vector of the top-left pixel sample, $(vx_3, vy_3)$ is a motion vector of the lower-right-area pixel sample, $h_1$ is a vertical distance between the two pixel samples, w1 is a horizontal distance between the two pixel samples, and $w_1^2 + h_1^2$ is the square of the distance between the two pixel samples.

With reference to any one of the tenth aspect, or the first to the seventh possible implementations of the tenth aspect, in an eighth possible implementation of the tenth aspect, after the calculating a motion vector of any pixel sample in the current image block by using an affine motion model and the motion vector 2-tuple, the method further includes: performing motion compensation predictive coding on the any pixel sample in the current image block by using the calculated motion vector of the any pixel sample in the current image block.

With reference to any one of the tenth aspect, or the first to the seventh possible implementations of the tenth aspect, in a ninth possible implementation of the tenth aspect, after the determining a predicted pixel value of a pixel of the any pixel sample in the current image block, the method further includes: performing motion compensation decoding on the any pixel sample by using the calculated motion vector of the any pixel sample in the current image block, to obtain a reconstruction value of the any pixel sample.

An eleventh aspect of the embodiments of the present invention provides an image processing apparatus, including:

an obtaining unit, configured to obtain a motion vector 2-tuple of a current image block, where the motion vector 2-tuple includes respective motion vectors of two pixel samples in a video frame to which the current image block belongs; and

a calculation unit, configured to calculate a motion vector of any pixel sample in the current image block by using an affine motion model and the motion vector 2-tuple that is obtained by the obtaining unit, where

the affine motion model is in the following form:

$$\begin{cases} vx = ax + by \\ vy = \text{-}bx + ay \end{cases};$$

where

(x, y) is coordinates of the any pixel sample, vx is a horizontal component of the motion vector of the any pixel sample, and vy is a vertical component of the motion vector of the any pixel sample; and

in the equation vx = ax + by, a is a horizontal coordinate coefficient of a horizontal component of the affine motion model, and b is a vertical coordinate coefficient of the horizontal component of the affine motion model; in the equation vy = -bx + ay, a is a vertical coordinate coefficient of a vertical component of the affine motion model, and -b is a horizontal coordinate coefficient of the vertical component of the affine motion model.

With reference to the eleventh aspect, in a first possible implementation of the eleventh aspect, the affine motion model further includes a horizontal displacement coefficient c of the horizontal component of the affine motion model and a vertical displacement coefficient d of the vertical component of the affine motion model, and therefore the affine motion model is in the following form:

$$\begin{cases} vx = ax + by + c \\ vy = \text{-}bx + ay + d \end{cases}$$

With reference to the eleventh aspect or the first possible implementation of the eleventh aspect, in a second possible implementation of the eleventh aspect, the calculation unit is specifically configured to:

obtain values of the coefficients of the affine motion model by using the respective motion vectors of the two pixels and locations of the two pixel samples; and

obtain the motion vector of the any pixel sample in the current image block by using the affine motion model and the values of the coefficients of the affine motion model.

With reference to the eleventh aspect or the first or the second possible implementation of the eleventh aspect, in a third possible implementation of the eleventh aspect, the calculation unit is specifically configured to:

obtain the values of the coefficients of the affine motion model by using a ratio of a difference between horizontal components of the respective motion vectors of the two pixel samples to a distance between the two pixel samples, and a ratio of a difference between vertical components of the respective motion vectors of the two pixel samples to the distance between the two pixel samples; and

obtain the motion vector of the any pixel sample in the current image block by using the affine motion model and the values of the coefficients of the affine motion model.

With reference to the eleventh aspect or the first or the second possible implementation of the eleventh aspect, in a fourth possible implementation of the eleventh aspect, the calculation unit is specifically configured to:

obtain the values of the coefficients of the affine motion model by using a ratio of a weighted sum of components of the respective motion vectors of the two pixel samples to a distance between the two pixel samples or the square of the distance between the two pixel samples; and

obtain the motion vector of the any pixel sample in the current image block by using the affine motion model and the values of the coefficients of the affine motion model.

With reference to any one of the eleventh aspect, or the first to the third possible implementations of the eleventh aspect, in a fifth possible implementation of the eleventh aspect, when the two pixel samples include a top-left pixel sample of the current image block and a right-area pixel sample to the right of the top-left pixel sample, the affine motion model is specifically:

$$\begin{cases} vx = \frac{vx_1 - vx_0}{w} x - \frac{vy_1 - vy_0}{w} y + vx_0 \\ vy = \frac{vy_1 - vy_0}{w} x + \frac{vx_1 - vx_0}{w} y + vy_0 \end{cases};$$

where
$(vx_0, vy_0)$ is a motion vector of the top-left pixel sample, $(vx_1, vy_1)$ is a motion vector of the right-area pixel sample, and w is the distance between the two pixel samples.

With reference to any one of the eleventh aspect, or the first to the third possible implementations of the eleventh aspect, in a sixth possible implementation of the eleventh aspect, when the two pixel samples include a top-left pixel sample of the current image block and a lower-area pixel sample below the top-left pixel sample, the affine motion model is specifically:

$$\begin{cases} vx = \frac{vy_2 - vy_0}{h} x + \frac{vx_2 - vx_0}{h} y + vx_0 \\ vy = -\frac{vx_2 - vx_0}{h} x + \frac{vy_2 - vy_0}{h} y + vy_0 \end{cases};$$

where
$(vx_0, vy_0)$ is a motion vector of the top-left pixel sample, $(vx_2, vy_2)$ is a motion vector of the lower-area pixel sample, and h is a distance between the two pixel samples.

With reference to any one of the eleventh aspect, or the first, the second, and the fourth possible implementations of the eleventh aspect, in a seventh possible implementation of the eleventh aspect, when the two pixel samples include a top-left pixel sample of the current image block and a lower-right-area pixel sample to the lower right of the top-left pixel sample, the affine motion model is specifically:

$$\begin{cases} vx = \frac{(vx_3 w_1 + vy_3 h_1) - (vx_0 w_1 + vy_0 h_1)}{w_1{}^2 + h_1{}^2} x + \frac{(vx_3 h_1 - vy_3 w_1) - (vx_0 h_1 - vy_0 w_1)}{w_1{}^2 + h_1{}^2} y + vx_0 \\ vy = -\frac{(vx_3 h_1 - vy_3 w_1) - (vx_0 h_1 - vy_0 w_1)}{w_1{}^2 + h_1{}^2} x + \frac{(vx_3 w_1 + vy_3 h_1) - (vx_0 w_1 + vy_0 h_1)}{w_1{}^2 + h_1{}^2} y + vy_0 \end{cases};$$

where
$(vx_0, vy_0)$ is a motion vector of the top-left pixel sample, $(vx_3, vy_3)$ is a motion vector of the lower-right-area pixel sample, $h_1$ is a vertical distance between the two pixel samples, w1 is a horizontal distance between the two pixel samples, and $w_1{}^2 + h_1{}^2$ is the square of the distance between the two pixel samples.

With reference to any one of the eleventh aspect, or the first to the seventh possible implementations of the eleventh aspect, in an eighth possible implementation of the eleventh aspect, when the image processing apparatus is applied to a video coding apparatus, the apparatus further includes an encoding unit, configured to perform motion compensation predictive coding on the any pixel sample in the current image block by using the motion vector, calculated by the calculation unit, of the any pixel sample in the current image block.

With reference to any one of the eleventh aspect, or the first to the seventh possible implementations of the eleventh aspect, in a ninth possible implementation of the eleventh aspect, when the image processing apparatus is applied to a video coding apparatus, the apparatus further includes a decoding unit, configured to perform motion compensation decoding on the any pixel sample by using the motion vector, calculated by the calculation unit, of the any pixel sample in the current image block, to obtain a reconstruction value of the any pixel sample.

A twelfth aspect of the embodiments of the present invention provides an image processing apparatus, including:

a processor and a memory, where
the processor invokes code and an instruction stored in the memory, so as to: obtain a motion vector 2-tuple of a current image block, where the motion vector 2-tuple includes respective motion vectors of two pixel samples in a video frame to which the current image block belongs; and
calculate a motion vector of any pixel sample in the current image block by using an affine motion model and the motion vector 2-tuple, where

the affine motion model is in the following form:

$$\begin{cases} vx = ax + by \\ vy = -bx + ay \end{cases};$$

where

(x, y) is coordinates of the any pixel sample, vx is a horizontal component of the motion vector of the any pixel sample, and vy is a vertical component of the motion vector of the any pixel sample; and
in the equation vx = ax + by, a is a horizontal coordinate coefficient of a horizontal component of the affine motion model, and b is a vertical coordinate coefficient of the horizontal component of the affine motion model; in the equation vy = -bx + ay, a is a vertical coordinate coefficient of a vertical component of the affine motion model, and -b is a horizontal coordinate coefficient of the vertical component of the affine motion model.

With reference to the twelfth aspect, in a first possible implementation of the twelfth aspect, the affine motion model further includes a horizontal displacement coefficient c of the horizontal component of the affine motion model and a vertical displacement coefficient d of the vertical component of the affine motion model, and therefore the affine motion model is in the following form:

$$\begin{cases} vx = ax + by + c \\ vy = -bx + ay + d \end{cases}$$

With reference to the twelfth aspect or the first possible implementation of the twelfth aspect, in a second possible implementation of the twelfth aspect, in an aspect of the calculating a motion vector of any pixel sample in the current image block by using an affine motion model and the motion vector 2-tuple, the processor is configured to: obtain values of the coefficients of the affine motion model by using the respective motion vectors of the two pixels and locations of the two pixel samples; and
obtain the motion vector of the any pixel sample in the current image block by using the affine motion model and the values of the coefficients of the affine motion model.

With reference to the twelfth aspect or the first or the second possible implementation of the twelfth aspect, in a third possible implementation of the twelfth aspect, in an aspect of the calculating a motion vector of any pixel sample in the current image block by using an affine motion model and the motion vector 2-tuple, the processor is configured to: obtain the values of the coefficients of the affine motion model by using a ratio of a difference between horizontal components of the respective motion vectors of the two pixel samples to a distance between the two pixel samples, and a ratio of a difference between vertical components of the respective motion vectors of the two pixel samples to the distance between the two pixel samples; and
obtain the motion vector of the any pixel sample in the current image block by using the affine motion model and the values of the coefficients of the affine motion model.

With reference to the twelfth aspect or the first or the second possible implementation of the twelfth aspect, in a fourth possible implementation of the twelfth aspect, in an aspect of the calculating a motion vector of any pixel sample in the current image block by using an affine motion model and the motion vector 2-tuple, the processor is configured to: obtain the values of the coefficients of the affine motion model by using a ratio of a weighted sum of components of the respective motion vectors of the two pixel samples to a distance between the two pixel samples or the square of the distance between the two pixel samples; and
obtain the motion vector of the any pixel sample in the current image block by using the affine motion model and the values of the coefficients of the affine motion model.

With reference to any one of the twelfth aspect, or the first to the third possible implementations of the twelfth aspect, in a fifth possible implementation of the twelfth aspect, when the two pixel samples include a top-left pixel sample of the current image block and a right-area pixel sample to the right of the top-left pixel sample, the affine motion model is specifically:

$$\begin{cases} vx = \dfrac{vx_1 - vx_0}{w}x - \dfrac{vy_1 - vy_0}{w}y + vx_0 \\ vy = \dfrac{vy_1 - vy_0}{w}x + \dfrac{vx_1 - vx_0}{w}y + vy_0 \end{cases};$$

where
$(vx_0, vy_0)$ is a motion vector of the top-left pixel sample, $(vx_1, vy_1)$ is a motion vector of the right-area pixel sample, and w is a distance between the two pixel samples.

With reference to any one of the twelfth aspect, or the first to the third possible implementations of the twelfth aspect, in a sixth possible implementation of the twelfth aspect, when the two pixel samples include a top-left pixel sample of the current image block and a lower-area pixel sample below the top-left pixel sample, the affine motion model is specifically:

$$\begin{cases} vx = \dfrac{vy_2 - vy_0}{h}x + \dfrac{vx_2 - vx_0}{h}y + vx_0 \\ vy = -\dfrac{vx_2 - vx_0}{h}x + \dfrac{vy_2 - vy_0}{h}y + vy_0 \end{cases};$$

where
$(vx_0, vy_0)$ is a motion vector of the top-left pixel sample, $(vx_2, vy_2)$ is a motion vector of the lower-area pixel sample, and h is a distance between the two pixel samples.

With reference to any one of the twelfth aspect, or the first, the second, and the fourth possible implementations of the twelfth aspect, in a seventh possible implementation of the twelfth aspect, when the two pixel samples include a top-left pixel sample of the current image block and a lower-right-area pixel sample to the lower right of the top-left pixel sample, the affine motion model is specifically:

$$\begin{cases} vx = \dfrac{(vx_3 w_1 + vy_3 h_1) - (vx_0 w_1 + vy_0 h_1)}{w_1^2 + h_1^2}x + \dfrac{(vx_3 h_1 - vy_3 w_1) - (vx_0 h_1 - vy_0 w_1)}{w_1^2 + h_1^2}y + vx_0 \\ vy = -\dfrac{(vx_3 h_1 - vy_3 w_1) - (vx_0 h_1 - vy_0 w_1)}{w_1^2 + h_1^2}x + \dfrac{(vx_3 w_1 + vy_3 h_1) - (vx_0 w_1 + vy_0 h_1)}{w_1^2 + h_1^2}y + vy_0 \end{cases};$$

where
$(vx_0, vy_0)$ is a motion vector of the top-left pixel sample, $(vx_3, vy_3)$ is a motion vector of the lower-right-area pixel sample, $h_1$ is a vertical distance between the two pixel samples, w1 is a horizontal distance between the two pixel samples, and $w_1^2 + h_1^2$ is the square of the distance between the two pixel samples.

With reference to any one of the twelfth aspect, or the first to the seventh possible implementations of the twelfth aspect, in an eighth possible implementation of the twelfth aspect, when the image processing apparatus is applied to a video coding apparatus, the processor is further configured to: after calculating the motion vector of the any pixel sample in the current image block by using the affine motion model and the motion vector 2-tuple, perform motion compensation predictive coding on the any pixel sample in the current image block by using the calculated motion vector of the any pixel sample in the current image block.

With reference to any one of the twelfth aspect, or the first to the seventh possible implementations of the twelfth aspect, in a ninth possible implementation of the twelfth aspect, the processor is further configured to: after determining a predicted pixel value of a pixel of the any pixel sample in the current image block, perform motion compensation decoding on the any pixel sample by using the calculated motion vector of the any pixel sample in the current image block, to obtain a reconstruction value of the any pixel sample.

A thirteenth aspect of the embodiments of the present invention provides an image processing method, including:

obtaining coefficients of an affine motion model, and calculating a motion vector of any pixel sample in a current image block by using the coefficients of the affine motion model and the affine motion model; and
determining a predicted pixel value of a pixel of the any pixel sample by using the calculated motion vector of the any pixel sample, where

the affine motion model is in the following form:

$$\begin{cases} vx = ax + by \\ vy = \text{-}bx + ay \end{cases}; \text{ where}$$

(x, y) is coordinates of the any pixel sample, vx is a horizontal component of the motion vector of the any pixel sample, and vy is a vertical component of the motion vector of the any pixel sample;

in the equation vx = ax + by, a is a horizontal coordinate coefficient of a horizontal component of the affine motion model, and b is a vertical coordinate coefficient of the horizontal component of the affine motion model; in the equation vy = -bx + ay, a is a vertical coordinate coefficient of a vertical component of the affine motion model, and -b is a horizontal coordinate coefficient of the vertical component of the affine motion model; the coefficients of the affine motion model include a and b; and

the coefficients of the affine motion model further include a horizontal displacement coefficient c of the horizontal component of the affine motion model and a vertical displacement coefficient d of the vertical component of the affine motion model, and therefore the affine motion model is in the following form:

$$\begin{cases} vx = ax + by + c \\ vy = \text{-}bx + ay + d \end{cases}$$

A fourteenth aspect of the embodiments of the present invention provides an image processing apparatus, including:

an obtaining unit, configured to obtain coefficients of an affine motion model;

a calculation unit, configured to calculate a motion vector of any pixel sample in a current image block by using the coefficients, obtained by the obtaining unit, of the affine motion model and the affine motion model; and

a prediction unit, configured to determine a predicted pixel value of a pixel of the any pixel sample by using the motion vector, calculated by the calculation unit, of the any pixel sample, where

the affine motion model is in the following form:

$$\begin{cases} vx = ax + by \\ vy = \text{-}bx + ay \end{cases};$$

where

(x, y) is coordinates of the any pixel sample, vx is a horizontal component of the motion vector of the any pixel sample, and vy is a vertical component of the motion vector of the any pixel sample;

in the equation vx = ax + by, a is a horizontal coordinate coefficient of a horizontal component of the affine motion model, and b is a vertical coordinate coefficient of the horizontal component of the affine motion model; in the equation vy = -bx + ay, a is a vertical coordinate coefficient of a vertical component of the affine motion model, and -b is a horizontal coordinate coefficient of the vertical component of the affine motion model; the coefficients of the affine motion model include a and b; and

the coefficients of the affine motion model further include a horizontal displacement coefficient c of the horizontal component of the affine motion model and a vertical displacement coefficient d of the vertical component of the affine motion model, and therefore the affine motion model is in the following form:

$$\begin{cases} vx = ax + by + c \\ vy = \text{-}bx + ay + d \end{cases}$$

It can be learned that in the technical solutions provided in some embodiments of the present invention, the pixel value prediction is performed on the current image block by using the affine motion model and the combined motion information unit set i, where each motion information unit in the combined motion information unit set i is selected from the at least some motion information units in the candidate motion information unit set corresponding to each of the two pixel samples. A selection range of the combined motion information unit set becomes relatively narrow, and a mechanism in a conventional technology in which motion information units of a plurality of pixel samples are selected through massive calculation from all possible candidate motion information unit sets of the plurality of pixel samples is abandoned. This helps improve coding efficiency and also helps reduce computational complexity of image prediction based on an affine motion model, thereby making it possible to introduce an affine motion model into a video coding standard. In addition, introduction of the affine motion model helps more accurately describe object motion and therefore helps improve prediction accuracy. In addition, a quantity of reference pixel samples may be 2, and this helps further reduce the computational complexity of the image prediction based on the affine motion model after the introduction of the affine motion model, and also helps reduce a quantity of a motion vector residual or affine parameter information transferred by an encoder side.

**BRIEF DESCRIPTION OF DRAWINGS**

To describe the technical solutions in the embodiments of the present invention more clearly, the following briefly describes the accompanying drawings required for describing the embodiments and the prior art. Apparently, the accompanying drawings in the following description show merely some embodiments of the present invention, and a person of ordinary skill in the art may still derive other drawings from these accompanying drawings without creative efforts.

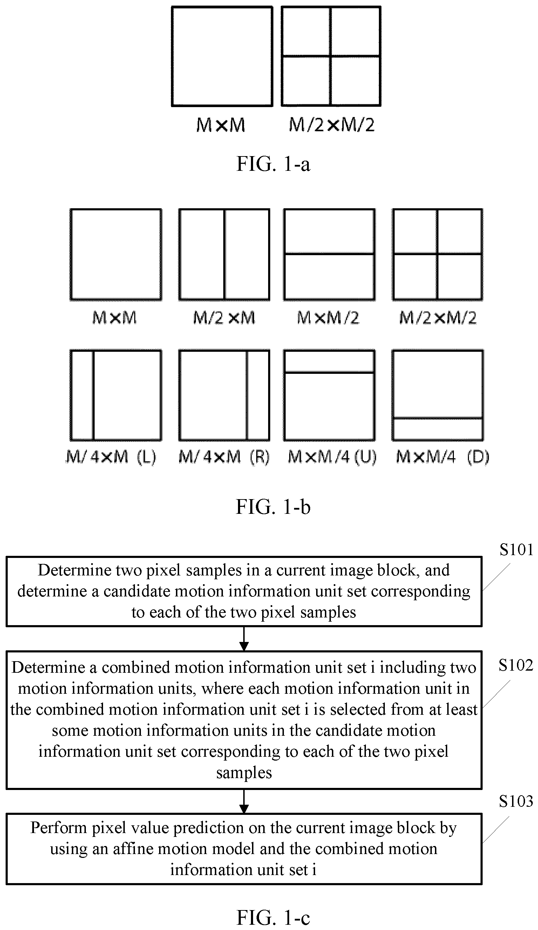

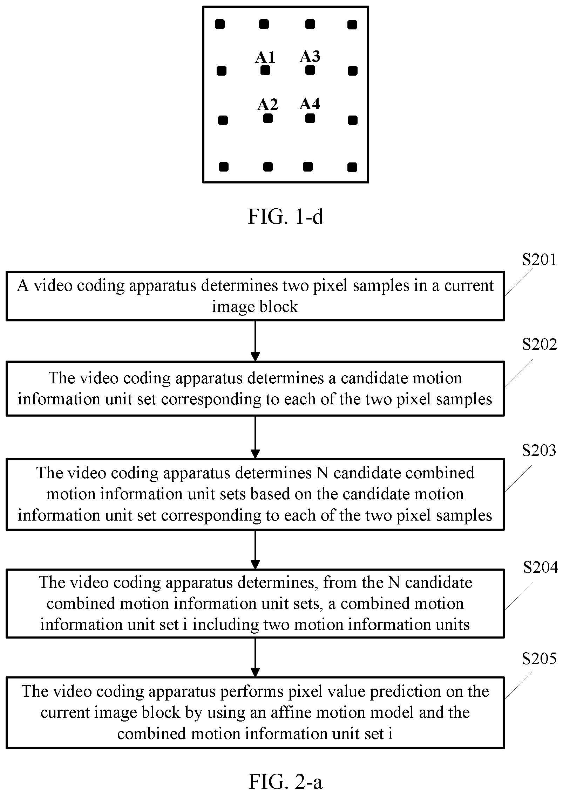

FIG. 1-a and FIG. 1-b are schematic diagrams of partitioning of several image blocks according to an embodiment of the present invention;
FIG. 1-c is a schematic flowchart of an image prediction method according to an embodiment of the present invention;
FIG. 1-d is a schematic diagram of an image block according to an embodiment of the present invention;
FIG. 2-a is a schematic flowchart of another image prediction method according to an embodiment of the present invention;

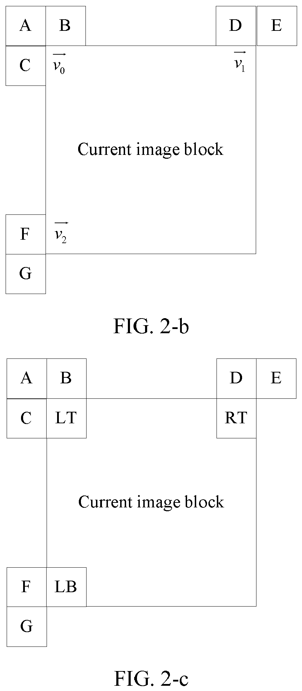

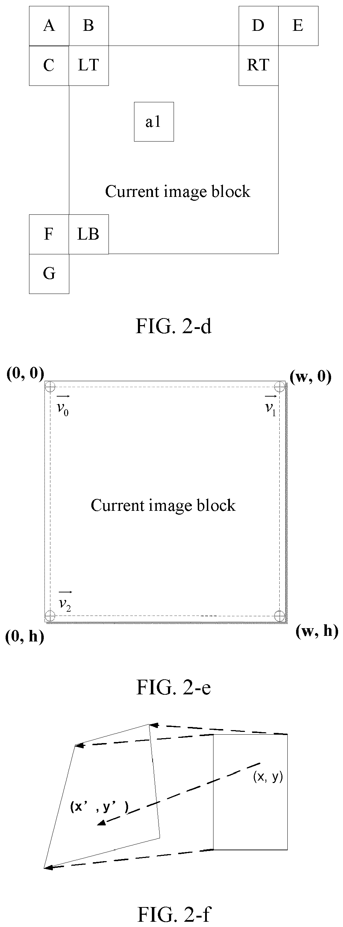

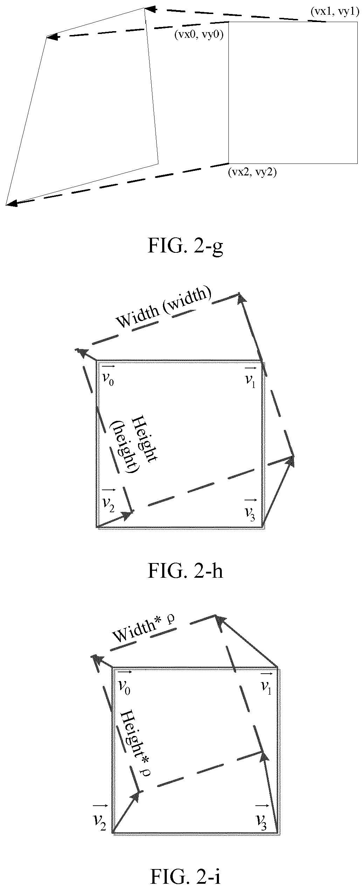

FIG. 2-b to FIG. 2-d are schematic diagrams of several determined candidate motion information unit sets of pixel samples according to an embodiment of the present invention;
FIG. 2-e is a schematic diagram of coordinates of vertices of an image block x according to an embodiment of the present invention;
FIG. 2-f and FIG. 2-g are schematic diagrams of pixel affine motion according to an embodiment of the present invention;
FIG. 2-h and FIG. 2-i are schematic diagrams of pixel rotational motion according to an embodiment of the present invention;

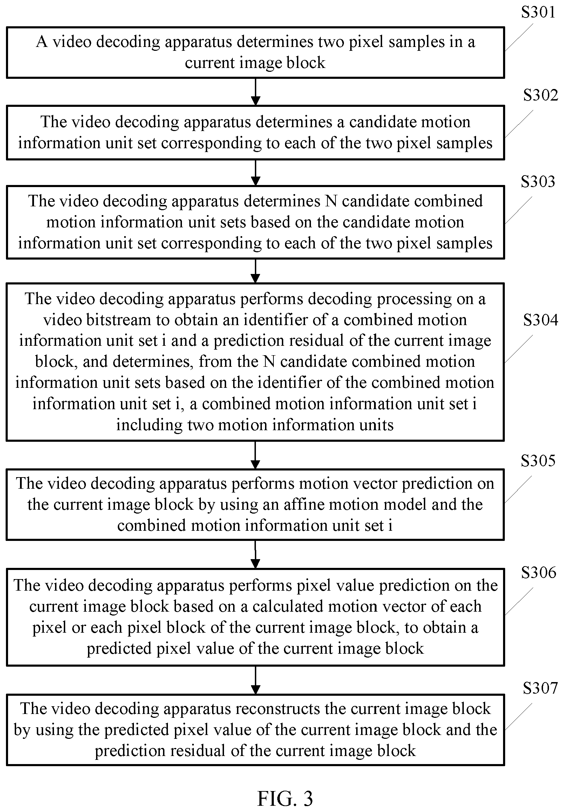

FIG. 3 is a schematic flowchart of another image prediction method according to an embodiment of the present invention;

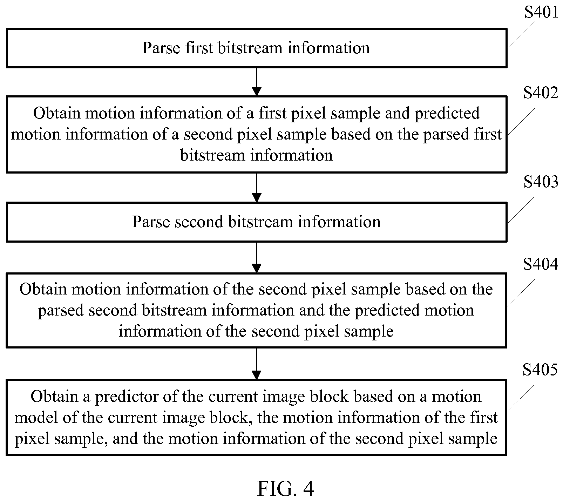

FIG. 4 is a schematic flowchart of another image prediction method according to an embodiment of the present invention;

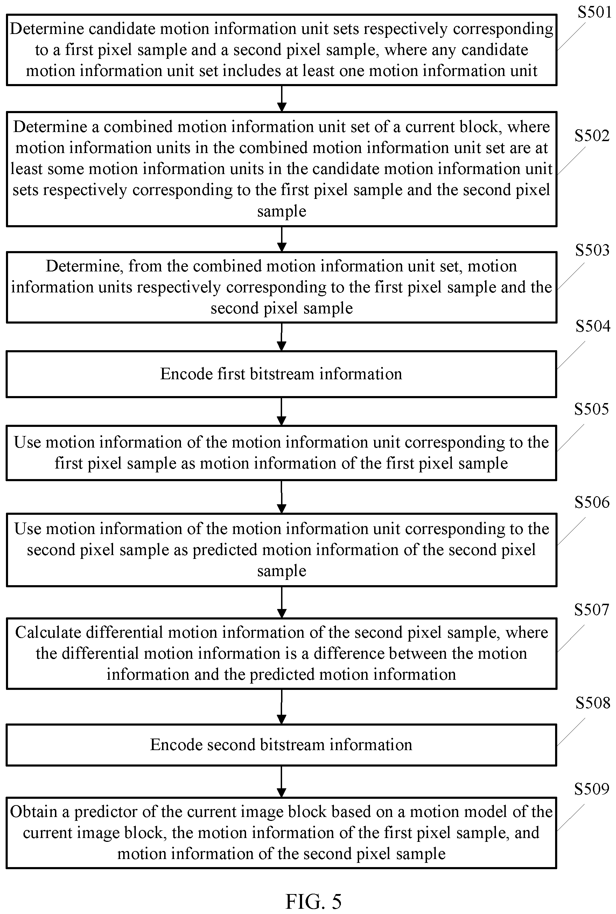

FIG. 5 is a schematic flowchart of another image prediction method according to an embodiment of the present invention;

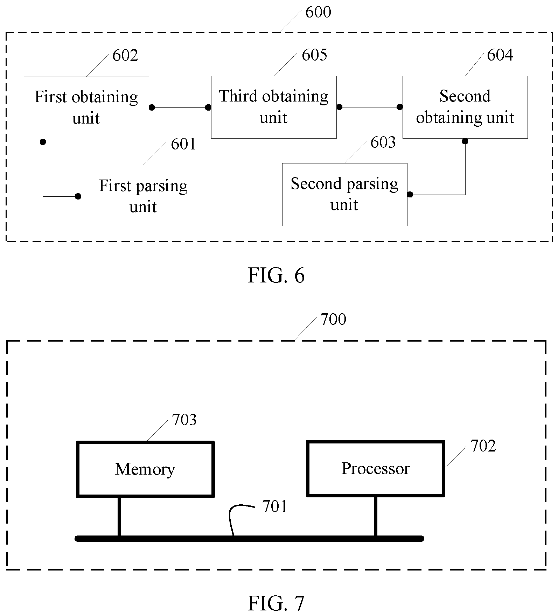

FIG. 6 is a schematic diagram of an image processing apparatus according to an embodiment of the present invention;
FIG. 7 is a schematic diagram of another image processing apparatus according to an embodiment of the present invention;

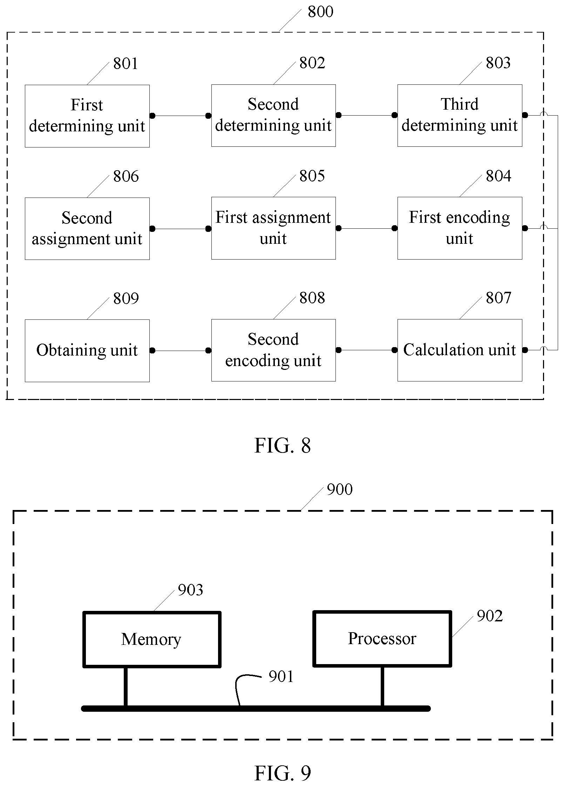

FIG. 8 is a schematic diagram of another image processing apparatus according to an embodiment of the present invention; and
FIG. 9 is a schematic diagram of another image processing apparatus according to an embodiment of the present invention.

**DESCRIPTION OF EMBODIMENTS**

Embodiments of the present invention provide an image prediction method and a related device, so as to reduce computational complexity of image prediction based on an affine motion model.
To make the invention objectives, features, and advantages of the present invention clearer and more comprehensible, the following clearly describes the technical solutions in the embodiments of the present invention with reference to the accompanying drawings in the embodiments of the present invention. Apparently, the embodiments described below are merely some rather than all of the embodiments of the present invention. All other embodiments obtained by a person of ordinary skill in the art based on the embodiments of the present invention without creative efforts shall fall within the protection scope of the present invention.
In the specification, claims, and accompanying drawings of the present invention, the terms "first", "second", "third", "fourth", and so on are intended to distinguish between different objects but do not indicate a particular order. In addition, the terms "including", "having", or any other variants thereof, are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

The following describes some concepts that may be mentioned in the embodiments of the present invention.

In most coding frameworks, a video sequence includes a series of pictures (English: picture), the picture is further partitioned into slices (English: slice), and the slice is further partitioned into blocks (English: block). Video coding is performed on a per-block basis, and encoding may be performed row-wise, starting from the upper left corner and proceeding from left to right and top to bottom. In some new video coding standards, the concept of block is further expanded. In the H.264 standard, there is a macroblock (English: macroblock, MB for short), and the MB can be further partitioned into a plurality of prediction blocks (English: partition) that can be used for predictive coding. In the HEVC standard, basic concepts such as a coding unit (English: coding unit, CU for short), a prediction unit (English: prediction unit, PU for short), and a transform unit (English: transform unit, TU for short) are used, a plurality of units are functionally classified, and a brand-new tree structure is used for description. For example, the CU can be partitioned into smaller CUs according to a quadtree, and the smaller CUs can continue to be partitioned, to form a quadtree structure. The PU and the TU also have a similar tree structure. In essence, the CU, the PU, and the TU all belong to the concept of block block. The CU is similar to a macroblock MB or a coding block, and is a basic unit for partitioning and encoding a coded picture. The PU may correspond to a prediction block and is a basic unit of predictive coding. The CU is further partitioned into a plurality of PUs based on a partitioning mode. The TU may correspond to a transform block and is a basic unit for transforming a prediction residual. In the High Performance Video Coding (English: high efficiency video coding, abbreviated: HEVC) standard, the CU, the PU, and the TU may be collectively referred to as a coding tree block (English: coding tree block, CTB for short) or the like.

In the HEVC standard, a size of a coding unit may include four levels such as 64×64, 32×32, 16×16, and 8×8, and a coding unit of each level can be partitioned into prediction units of different sizes according to intra prediction and inter prediction. As shown in FIG. 1-a and FIG. 1-b, FIG. 1-a exemplifies a prediction unit partitioning manner corresponding to intra prediction, and FIG. 1-b exemplifies several prediction unit partitioning manners corresponding to inter prediction.

During the development and evolution of video coding technologies, video coding experts have tried various methods to exploit spatiotemporal correlation between adjacent coding/decoding blocks in an effort to improve coding efficiency. In the H.264/Advanced Video Coding (English: advanced video coding, AVC for short) standard, skip mode (skip mode) and direct mode (direct mode) become effective tools for improving coding efficiency. In low bit-rate cases, blocks using the two coding modes can account for more than half of an entire coding sequence. In skip mode, provided that a skip mode flag is transferred in a bitstream, a motion vector of a current image block can be derived by using a neighboring motion vector, and based on the motion vector, a value of a reference block is directly copied as a reconstruction value of the current image block. In addition, in direct mode, an encoder can derive a motion vector of a current image block by using a neighboring motion vector, and directly copy, based on the motion vector, a value of a reference block as a predictor of the current image block; and an encoder side uses the predictor to perform encoding and prediction on the current image block. In the latest High Performance Video Coding (English: high efficiency video coding, HEVC for short) standard, video coding performance is further improved by introducing some new coding tools. Merge (merge) mode and adaptive motion vector prediction (English: advanced motion vector prediction, AMVP for short) mode are two important inter prediction tools. In merge (merge) mode, a candidate motion information set is constructed by using motion information (which may include a motion vector (English: motion vector, MV for short), a prediction direction, a reference frame index, and the like) of a neighboring coded block of a current coding block. Candidate motion information with the highest coding efficiency may be selected as motion information of the current coding block through comparison, and a predictor of the current coding block is found in a reference frame, to perform predictive coding on the current coding block. In addition, an index value indicating which neighboring coded block the motion information is selected from may be written into a bitstream. In adaptive motion vector prediction mode, a motion vector of a neighboring coded block is used as a predictor of a motion vector of a current coding block. A motion vector with the highest coding efficiency may be selected to predict the motion vector of the current coding block, and an index value indicating which neighboring motion vector is selected may be written into a video bitstream.

The following first describes the image prediction method provided in the embodiments of the present invention. The image prediction method provided in the embodiments of the present invention is performed by a video coding apparatus or a video decoding apparatus, where the video coding apparatus or the video decoding apparatus may be any apparatus that needs to output or store a video, for example, a device such as a notebook computer, a tablet computer, a personal computer, a mobile phone, or a video server.

In an embodiment of the image prediction method of the present invention, an image prediction method includes: determining two pixel samples in a current image block, and determining a candidate motion information unit set corresponding to each of the two pixel samples, where the candidate motion information unit set corresponding to each pixel sample includes at least one candidate motion information unit; determining a combined motion information unit set i including two motion information units, where each motion information unit in the combined motion information unit set i is selected from at least some motion information units in the candidate motion information unit set corresponding to each of the two pixel samples, and the motion information unit includes a motion vector with a forward prediction direction and/or a motion vector with a backward prediction direction; and performing pixel value prediction on the current image block by using an affine motion model and the combined motion information unit set i.

Referring to FIG. 1-c, FIG. 1-c is a schematic flowchart of an image prediction method according to an embodiment of the present invention. As shown in an example in FIG. 1-c, the image prediction method provided in a first embodiment of the present invention may include the following steps.

S101: Determine two pixel samples in a current image block, and determine a candidate motion information unit set corresponding to each of the two pixel samples.

The candidate motion information unit set corresponding to each pixel sample includes at least one candidate motion information unit.

A pixel sample mentioned in the embodiments of the present invention may be a pixel or a pixel block including at least two pixels.

A motion information unit mentioned in the embodiments of the present invention may include a motion vector with a forward prediction direction and/or a motion vector with a backward prediction direction. That is, a motion information unit may include one motion vector or may include two motion vectors with different prediction directions.

If a prediction direction corresponding to a motion information unit is forward, it indicates that the motion information unit includes a motion vector with a forward prediction direction but does not include a motion vector with a backward prediction direction. If a prediction direction corresponding to a motion information unit is backward, it indicates that the motion information unit includes a motion vector with a backward prediction direction but does not include a motion vector with a forward prediction direction. If a prediction direction corresponding to a motion information unit is unidirectional, it indicates that the motion information unit includes a motion vector with a forward prediction direction but does not include a motion vector with a backward prediction direction, or includes a motion vector with a backward prediction direction but does not include a motion vector with a forward prediction direction. If a prediction direction corresponding to a motion information unit is bidirectional, it indicates that the motion information unit includes a motion vector with a forward prediction direction and a motion vector with a backward prediction direction.

Optionally, in some possible implementations of the present invention, the two pixel samples include two pixel samples in a top-left pixel sample, a top-right pixel sample, a bottom-left pixel sample, and a central pixel sample a1 of the current image block. The top-left pixel sample of the current image block may be a top-left vertex of the current image block or a pixel block that is at a top-left vertex of the current image block and that is included in the current image block; the bottom-left pixel sample of the current image block is a bottom-left vertex of the current image block or a pixel block that is at a bottom-left vertex of the current image block and that is included in the current image block; the top-right pixel sample of the current image block is a top-right vertex of the current image block or a pixel block that is at a top-right vertex of the current image block and that is included in the current image block; and the central pixel sample a1 of the current image block is a central pixel of the current image block or a pixel block that is at a central pixel of the current image block and that is included in the current image block.

If a pixel sample is a pixel block, a size of the pixel block is, for example, 2*2, 1*2, 4*2, 4*4, or another value. An image block may include a plurality of pixel blocks.

It should be noted that for an image block of a size w*w, when w is an odd number (for example, w is equal to 3, 5, 7, 11, or the like), the image block has only one central pixel; or when w is an even number (for example, w is equal to 4, 6, 8, 16, or the like), the image block may have a plurality of central pixels, and a central pixel sample of the image block may be any central pixel or a specified central pixel in the image block, or a central pixel sample of the image block may be a pixel block in the image block that includes any central pixel, or a central pixel sample of the image block may be a pixel block in the image block that includes a specified central pixel. For example, for an image block of a size 4*4 shown in FIG. 1-d, the image block has four central pixels: A1, A2, A3, and A4, and then a specified central pixel may be the pixel A1 (top-left central pixel), the pixel A2 (bottom-left central pixel), the pixel A3 (top-right central pixel), or the pixel A4 (bottom-right central pixel). Other cases are deduced by analog.

S102: Determine a combined motion information unit set i including two motion information units.

Each motion information unit in the combined motion information unit set i is selected from at least some motion information units in the candidate motion information unit set corresponding to each of the two pixel samples, and the motion information unit includes a motion vector with a forward prediction direction and/or a motion vector with a backward prediction direction.

For example, it is assumed that the two pixel samples include a pixel sample 001 and a pixel sample 002. A candidate motion information unit set corresponding to the pixel sample 001 is a candidate motion information unit set 011. A candidate motion information unit set corresponding to the pixel sample 002 is a candidate motion information unit set 022. The combined motion information unit set i includes a motion information unit C01 and a motion information unit C02, where the motion information unit C01 may be selected from the candidate motion information unit set 011, and the motion information unit C02 may be selected from the candidate motion information unit set 022. Other cases are deduced by analog.

It can be understood that, assuming that the combined motion information unit set i includes the motion information unit C01 and the motion information unit C02, either of the motion information unit C01 and the motion information unit C02 may include a motion vector with a forward prediction direction and/or a motion vector with a backward prediction direction. Therefore, the combined motion information unit set i may include two motion vectors (prediction directions corresponding to the two motion vectors may be forward or backward; or the two motion vectors may include one motion vector with a forward prediction direction and one motion vector with a backward prediction direction), or may include four motion vectors (the four motion vectors may include two motion vectors with a forward prediction direction and two motion vectors with a backward prediction direction), or may include three motion vectors (the three motion vectors may include one motion vector with a forward prediction direction and two motion vectors with a backward prediction direction, or may include two motion vectors with a forward prediction direction and one motion vector with a backward prediction direction).

S103: Perform pixel value prediction on the current image block by using an affine motion model and the combined motion information unit set i.

The current image block may be a current coding block or a current decoding block.

It can be learned that in the technical solution in this embodiment, the pixel value prediction is performed on the current image block by using the affine motion model and the combined motion information unit set i, where each motion information unit in the combined motion information unit set i is selected from the at least some motion information units in the candidate motion information unit set corresponding to each of the two pixel samples. A selection range of the combined motion information unit set becomes relatively narrow, and a mechanism in a conventional technology in which motion information units of a plurality of pixel samples are selected through massive calculation from all possible candidate motion information unit sets of the plurality of pixel samples is abandoned. This helps improve coding efficiency and also helps reduce computational complexity of image prediction based on an affine motion model, thereby making it possible to introduce an affine motion model into a video coding standard. In addition, introduction of the affine motion model helps more accurately describe object motion and therefore helps improve prediction accuracy. In addition, a quantity of reference pixel samples may be 2, and this helps further reduce the computational complexity of the image prediction based on the affine motion model after the introduction of the affine motion model, and also helps reduce a quantity of a motion vector residual or affine parameter information transferred by an encoder side.

The image prediction method provided in this embodiment may be applied to a video coding process or may be applied to a video decoding process.

During actual application, there are various manners of determining the combined motion information unit set i including the two motion information units.

Optionally, in some possible implementations of the present invention, the determining a combined motion information unit set i including two motion information units includes: determining, from N candidate combined motion information unit sets, the combined motion information unit set i including the two motion information units, where each motion information unit included in each of the N candidate combined motion information unit sets is selected from at least some motion information units that meet a constraint in the candidate motion information unit set corresponding to each of the two pixel samples, N is a positive integer, the N candidate combined motion information unit sets are different from each other, and each of the N candidate combined motion information unit sets includes two motion information units.

That two candidate combined motion information unit sets are different may mean that motion information units included in the candidate combined motion information unit sets are not exactly the same.

That two motion information units are different may mean that motion vectors included in the two motion information units are different, or that prediction directions corresponding to motion vectors included in the two motion information units are different, or that reference frame indexes corresponding to motion vectors included in the two motion information units are different. That two motion information units are the same may mean that motion vectors included in the two motion information units are the same, and that prediction directions corresponding to the motion vectors included in the two motion information units are the same, and that reference frame indexes corresponding the motion vectors included in the two motion information units are the same.

Optionally, in some possible implementations of the present invention, when the image prediction method is applied to the video decoding process, the determining, from N candidate combined motion information unit sets, the combined motion information unit set i including the two motion information units may include: determining, from the N candidate combined motion information unit sets based on an identifier of the combined motion information unit set i that is obtained from a video bitstream, the combined motion information unit set i including the two motion information units.

Optionally, in some possible implementations of the present invention, when the image prediction method is applied to the video coding process, the method may further include: writing the identifier of the combined motion information unit set i into the video bitstream. The identifier of the combined motion information unit set i may be any information that can identify the combined motion information unit set i. For example, the identifier of the combined motion information unit set i may be an index number of the combined motion information unit set i in a combined motion information unit set list.

Optionally, in some possible implementations of the present invention, when the image prediction method is applied to the video coding process, the method further includes: obtaining motion vector predictors of the two pixel samples by using motion vectors of spatially adjacent or temporally adjacent pixel samples of the two pixel samples; obtaining motion vector residuals of the two pixel samples based on the motion vector predictors of the two pixel samples; and writing the motion vector residuals of the two pixel samples into the video bitstream.

Optionally, in some possible implementations of the present invention, when the image prediction method is applied to the video decoding process, the method further includes: decoding the video bitstream to obtain motion vector residuals of the two pixel samples; obtaining motion vector predictors of the two pixel samples by using motion vectors of spatially adjacent or temporally adjacent pixel samples of the two pixel samples; and separately obtaining motion vectors of the two pixel samples based on the motion vector predictors of the two pixel samples and the motion vector residuals of the two pixel samples.

Optionally, in some possible implementations of the present invention, the determining, from N candidate combined motion information unit sets, the combined motion information unit set i including the two motion information units may include: determining, from the N candidate combined motion information unit sets based on distortion or rate-distortion cost, a combined motion information unit set i including two motion vectors.

Optionally, rate-distortion cost corresponding to the combined motion information unit set i is less than or equal to rate-distortion cost of any combined motion information unit set other than the combined motion information unit set i in the N candidate combined motion information unit sets.

Optionally, distortion corresponding to the combined motion information unit set i is less than or equal to distortion of any combined motion information unit set other than the combined motion information unit set i in the N candidate combined motion information unit sets.

Rate-distortion cost corresponding to a candidate combined motion information unit set in the N candidate combined motion information unit sets (for example, the combined motion information unit set i in the N candidate combined motion information unit sets) may be, for example, rate-distortion cost corresponding to a predicted pixel value of an image block (for example, the current image block) that is obtained through pixel value prediction on the image block by using the candidate combined motion information unit set (for example, the combined motion information unit set i).

Distortion corresponding to a candidate combined motion information unit set in the N candidate combined motion information unit sets (for example, the combined motion information unit set i in the N candidate combined motion information unit sets) may be, for example, distortion between an original pixel value of an image block (for example, the current image block) and a predicted pixel value of the image block that is obtained through pixel value prediction on the image block by using the candidate combined motion information unit set (for example, the combined motion information unit set i) (that is, distortion between the original pixel value of the image block and the predicted pixel value).

In some possible implementations of the present invention, specifically, the distortion between the original pixel value of the image block (for example, the current image block) and the predicted pixel value of the image block that is obtained through pixel value prediction on the image block by using the candidate combined motion information unit set (for example, the combined motion information unit set i) may be, for example, a sum of squared differences (SSD, sum of squared differences), or a sum of absolute differences (SAD, sum of absolute differences), or an error between the original pixel value of the image block (for example, the current image block) and the predicted pixel value of the image block that is obtained through pixel value prediction on the image block by using the candidate combined motion information unit set (for example, the combined motion information unit set i), and/or another distortion parameter that can measure distortion.

N is a positive integer. For example, N may be equal to 1, 2, 3, 4, 5, 6, 8, or another value.

Optionally, in some possible implementations of the present invention, motion information units in any one of the N candidate combined motion information unit sets may be different from each other.

Optionally, in some possible implementations of the present invention, the N candidate combined motion information unit sets meet at least one of a first condition, a second condition, a third condition, a fourth condition, and a fifth condition.

The first condition includes: a motion manner that is of the current image block and that is indicated by a motion information unit in any one of the N candidate combined motion information unit sets is non-translational motion. For example, when all motion vectors corresponding to a first prediction direction in a candidate combined motion information unit set are equal, it may be considered that a motion manner that is of the current image block and that is indicated by a motion information unit in the candidate combined motion information unit set is translational motion; otherwise, it may be considered that a motion manner that is of the current image block and that is indicated by a motion information unit in the candidate combined motion information unit set is non-translational motion, where the first prediction direction is forward or backward. For another example, when all motion vectors corresponding to a forward prediction direction in a candidate combined motion information unit set are equal, and all motion vectors corresponding to a backward prediction direction in the candidate combined motion information unit set are equal, it may be considered that a motion manner that is of the current image block and that is indicated by a motion information unit in the candidate combined motion information unit set is translational motion; otherwise, it may be considered that a motion manner that is of the current image block and that is indicated by a motion information unit in the candidate combined motion information unit set is non-translational motion.

The second condition includes: two motion information units in any one of the N candidate combined motion information unit sets correspond to a same prediction direction.

For example, when two motion information units both include a motion vector with a forward prediction direction and a motion vector with a backward prediction direction, it indicates that the two motion information units correspond to a same prediction direction. For another example, when one motion information unit includes a motion vector with a forward prediction direction and a motion vector with a backward prediction direction, and the other motion information unit includes a motion vector with a forward prediction direction but does not include a motion vector with a backward prediction direction, or the other motion information unit includes a motion vector with a backward prediction direction but does not include a motion vector with a forward prediction direction, it may indicate that the two motion information units correspond to different prediction directions. For another example, when one motion information unit includes a motion vector with a forward prediction direction but does not include a motion vector with a backward prediction direction, and the other motion information unit includes a motion vector with a backward prediction direction but does not include a motion vector with a forward prediction direction, it may indicate that the two motion information units correspond to different prediction directions. For another example, when two motion information units both include a motion vector with a forward prediction direction, and neither of the two motion information units includes a motion vector with a backward prediction direction, it indicates that the two motion information units correspond to a same prediction direction. For another example, when two motion information units both include a motion vector with a backward prediction direction, and neither of the two motion information units includes a motion vector with a forward prediction direction, it indicates that the two motion information units correspond to a same prediction direction.

The third condition includes: two motion information units in any one of the N candidate combined motion information unit sets correspond to a same reference frame index.

For example, when two motion information units both include a motion vector with a forward prediction direction and a motion vector with a backward prediction direction, the motion vectors with the forward prediction direction in the two motion information units correspond to a same reference frame index, and the motion vectors with the backward prediction direction in the two motion information units correspond to a same reference frame index, it may indicate that the two motion information units correspond to a same reference frame index. For another example, when one motion information unit includes a motion vector with a forward prediction direction and a motion vector with a backward prediction direction, and the other motion information unit includes a motion vector with a forward prediction direction but does not include a motion vector with a backward prediction direction, or the other motion information unit includes a motion vector with a backward prediction direction but does not include a motion vector with a forward prediction direction, it indicates that the two motion information units correspond to different prediction directions, and it may indicate that the two motion information units correspond to different reference frame indexes. For another example, when one motion information unit includes a motion vector with a forward prediction direction but does not include a motion vector with a backward prediction direction, and the other motion information unit includes a motion vector with a backward prediction direction but does not include a motion vector with a forward prediction direction, it may indicate that the two motion information units correspond to different reference frame indexes. For another example, when one motion information unit includes a motion vector with a forward prediction direction but does not include a motion vector with a backward prediction direction, the other motion information unit includes a motion vector with a forward prediction direction but does not include a motion vector with a backward prediction direction, and the motion vectors with the forward prediction direction in the two motion information units correspond to a same reference frame index, it may indicate that the two motion information units correspond to different reference frame indexes. For another example, when one motion information unit includes a motion vector with a backward prediction direction but does not include a motion vector with a forward prediction direction, the other motion information unit includes a motion vector with a backward prediction direction but does not include a motion vector with a forward prediction direction, and the motion vectors with the backward prediction direction in the two motion information units correspond to a same reference frame index, it may indicate that the two motion information units correspond to different reference frame indexes.

The fourth condition includes: an absolute value of a difference between motion vector horizontal components of two motion information units in any one of the N candidate combined motion information unit sets is less than or equal to a horizontal component threshold, or an absolute value of a difference between motion vector horizontal components of one motion information unit in any one of the N candidate combined motion information unit sets and a pixel sample Z is less than or equal to a horizontal component threshold, where the pixel sample Z of the current image block is different from either of the two pixel samples. The horizontal component threshold may be, for example, one third of a width of the current image block, or a half of a width of the current image block, or two thirds of a width of the current image block, or three quarters of a width of the current image block, or another value.

The fifth condition includes: an absolute value of a difference between motion vector vertical components of two motion information units in any one of the N candidate combined motion information unit sets is less than or equal to a vertical component threshold, or an absolute value of a difference between motion vector vertical components of one motion information unit in any one of the N candidate combined motion information unit sets and a pixel sample Z is less than or equal to a vertical component threshold, where the pixel sample Z of the current image block is different from either of the two pixel samples. The vertical component threshold may be, for example, one third of a height of the current image block, or a half of a height of the current image block, or two thirds of a height of the current image block, or three quarters of a height of the current image block, or another value.

Assuming that the two pixel samples are the top-left pixel sample of the current image block, the pixel sample Z may be a bottom-left pixel sample or a central pixel sample or another pixel sample of the current image block. Other cases may be deduced by analog.

Optionally, in some possible implementations of the present invention, a candidate motion information unit set corresponding to the top-left pixel sample of the current image block includes motion information units of x1 pixel samples, where the x1 pixel samples include at least one pixel sample that is spatially adjacent to the top-left pixel sample of the current image block and/or at least one pixel sample that is temporally adjacent to the top-left pixel sample of the current image block, and x1 is a positive integer. For example, the x1 pixel samples include only at least one pixel sample that is spatially adjacent to the top-left pixel sample of the current image block and/or at least one pixel sample that is temporally adjacent to the top-left pixel sample of the current image block.

For example, x1 may be equal to 1, 2, 3, 4, 5, 6, or another value.

For example, the x1 pixel samples include at least one of a pixel sample that is at a same location as the top-left pixel sample of the current image block and that is in a video frame temporally adjacent to a video frame to which the current image block belongs, a spatially adjacent pixel sample to the left of the current image block, a spatially adjacent pixel sample to the top-left of the current image block, and a spatially adjacent pixel sample to the top of the current image block.

Optionally, in some possible implementations of the present invention, a candidate motion information unit set corresponding to the top-right pixel sample of the current image block includes motion information units of x2 pixel samples, where the x2 pixel samples include at least one pixel sample that is spatially adjacent to the top-right pixel sample of the current image block and/or at least one pixel sample that is temporally adjacent to the top-right pixel sample of the current image block, and x2 is a positive integer.

For example, x2 may be equal to 1, 2, 3, 4, 5, 6, or another value.

For example, the x2 pixel samples include at least one of a pixel sample that is at a same location as the top-right pixel sample of the current image block and that is in the video frame temporally adjacent to the video frame to which the current image block belongs, a spatially adjacent pixel sample to the right of the current image block, a spatially adjacent pixel sample to the top-right of the current image block, and a spatially adjacent pixel sample to the top of the current image block.

Optionally, in some possible implementations of the present invention, a candidate motion information unit set corresponding to the bottom-left pixel sample of the current image block includes motion information units of x3 pixel samples, where the x3 pixel samples include at least one pixel sample that is spatially adjacent to the bottom-left pixel sample of the current image block and/or at least one pixel sample that is temporally adjacent to the bottom-left pixel sample of the current image block, and x3 is a positive integer. For example, the x3 pixel samples include only at least one pixel sample that is spatially adjacent to the bottom-left pixel sample of the current image block and/or at least one pixel sample that is temporally adjacent to the bottom-left pixel sample of the current image block, and x3 is a positive integer.

For example, x3 may be equal to 1, 2, 3, 4, 5, 6, or another value.

For example, the x3 pixel samples include at least one of a pixel sample that is at a same location as the bottom-left pixel sample of the current image block and that is in the video frame temporally adjacent to the video frame to which the current image block belongs, a spatially adjacent pixel sample to the left of the current image block, a spatially adjacent pixel sample to the bottom-left of the current image block, and a spatially adjacent pixel sample to the bottom of the current image block.

Optionally, in some possible implementations of the present invention, a candidate motion information unit set corresponding to the central pixel sample a1 of the current image block includes motion information units of x5 pixel samples, where one of the x5 pixel samples is a pixel sample a2. For example, the x5 pixel samples include only the pixel sample a2. A location of the central pixel sample a1 in the video frame to which the current image block belongs is the same as a location of the pixel sample a2 in a video frame that is adjacent to the video frame to which the current image block belongs, and x5 is a positive integer.

Optionally, in some possible implementations of the present invention, the performing pixel value prediction on the current image block by using an affine motion model and the combined motion information unit set i may include: when a reference frame index corresponding to a motion vector with a prediction direction being a first prediction direction in the combined motion information unit set i is different from a reference frame index of the current image block, scaling the combined motion information unit set i, so that the motion vector with the prediction direction being the first prediction direction in the combined motion information unit set i is scaled to a reference frame of the current image block; and performing pixel value prediction on the current image block by using the affine motion model and the scaled combined motion information unit set i, where the first prediction direction is forward or backward.

Alternatively, the performing pixel value prediction on the current image block by using an affine motion model and the combined motion information unit set i may include: when a reference frame index corresponding to a motion vector with the forward prediction direction in the combined motion information unit set i is different from a forward reference frame index of the current image block, and a reference frame index corresponding to a motion vector with the backward prediction direction in the combined motion information unit set i is different from a backward reference frame index of the current image block, scaling the combined motion information unit set i, so that the motion vector with the forward prediction direction in the combined motion information unit set i is scaled to a forward reference frame of the current image block and the motion vector with the backward prediction direction in the combined motion information unit set i is scaled to a backward reference frame of the current image block; and performing pixel value prediction on the current image block by using the affine motion model and the scaled combined motion information unit set i.

Optionally, in some possible implementations of the present invention, the performing pixel value prediction on the current image block by using a non-translational motion model and the scaled combined motion information unit set i, for example, may include: performing motion estimation on a motion vector in the scaled combined motion information unit set i, to obtain the combined motion information unit set i after the motion estimation; and performing pixel value prediction on the current image block by using the non-translational motion model and the combined motion information unit set i after the motion estimation.

Optionally, in some possible implementations of the present invention, the performing pixel value prediction on the current image block by using an affine motion model and the combined motion information unit set i includes: calculating a motion vector of each pixel in the current image block by using the affine motion model and the combined motion information unit set i, and determining a predicted pixel value of each pixel in the current image block by using the calculated motion vector of each pixel in the current image block; or calculating a motion vector of each pixel block in the current image block by using the affine motion model and the combined motion information unit set i, and determining a predicted pixel value of each pixel in each pixel block in the current image block by using the calculated motion vector of each pixel block in the current image block.

Tests show that if a motion vector of each pixel block in the current image block is first calculated by using the affine motion model and the combined motion information unit set i, and then a predicted pixel value of each pixel in each pixel block in the current image block is determined by using the calculated motion vector of each pixel block in the current image block, this helps greatly reduce computational complexity because a pixel block in the current image block is used as a granularity during motion vector calculation.

Optionally, in some possible implementations of the present invention, the performing pixel value prediction on the current image block by using an affine motion model and the combined motion information unit set i may include: performing motion estimation on a motion vector in the combined motion information unit set i, to obtain the combined motion information unit set i after the motion estimation; and performing pixel value prediction on the current image block by using the affine motion model and the combined motion information unit set i after the motion estimation.

Optionally, in some possible implementations of the present invention, the performing pixel value prediction on the current image block by using an affine motion model and the combined motion information unit set i includes: obtaining a motion vector of any pixel sample in the current image block by using a ratio of a difference between motion vector horizontal components of two motion information units in the combined motion information unit set i to a length or width of the current image block, and a ratio of a difference between motion vector vertical components of the two motion information units in the combined motion information unit set i to the length or width of the current image block.

Alternatively, the performing pixel value prediction on the current image block by using an affine motion model and the combined motion information unit set i may include: obtaining a motion vector of any pixel sample in the current image block by using a ratio of a difference between motion vector horizontal components of the two pixel samples to a length or width of the current image block, and a ratio of a difference between motion vector vertical components of the two pixel samples to the length or width of the current image block, where motion vectors of the two pixel samples are obtained based on motion vectors of two motion information units in the combined motion information unit set i (for example, the motion vectors of the two pixel samples are the motion vectors of the two motion information units in the combined motion information unit set i, or the motion vectors of the two pixel samples are obtained based on the motion vectors of the two motion information units in the combined motion information unit set i and a prediction residual).

Optionally, in some possible implementations of the present invention, a horizontal coordinate coefficient of the motion vector horizontal components and a vertical coordinate coefficient of the motion vector vertical components of the two pixel samples are equal, and a vertical coordinate coefficient of the motion vector horizontal components and a horizontal coordinate coefficient of the motion vector vertical components of the two pixel samples are opposite.

Optionally, in some possible implementations of the present invention,

the affine motion model may be, for example, an affine motion model in the following form:

$$\begin{cases} vx = \frac{vx_1 - vx_0}{w} x - \frac{vy_1 - vy_0}{w} y + vx_0 \\ vy = \frac{vy_1 - vy_0}{w} x + \frac{vx_1 - vx_0}{w} y + vy_0 \end{cases};$$

where

motion vectors of the two pixel samples are $(vx_0, vy_0)$ and $(vx_1, vy_1)$, respectively, vx is a motion vector horizontal component of a pixel sample whose coordinates are (x, y) in the current image block, vy is a motion vector vertical component of the pixel sample whose coordinates are (x, y) in the current image block, and w is a length or width of the current image block; and

$$\begin{cases} \frac{vx_2 - vx_0}{h} = -\frac{vy_1 - vy_0}{w} \\ \frac{vy_2 - vy_0}{h} = \frac{vx_1 - vx_0}{w} \end{cases};$$

where

$(vx_2, vy_2)$ is a motion vector of another pixel sample different from the two pixel samples in the current image block. For example, assuming that the two pixel samples are the top-left pixel sample and the top-right pixel sample in the current image block, $(vx_2, vy_2)$ may be the bottom-left pixel sample or the central pixel sample in the current image block. For another example, assuming that the two pixel samples are the top-left pixel sample and the bottom-left pixel sample in the current image block, $(vx_2, vy_2)$ may be the top-right pixel sample or the central pixel sample in the current image block.

When a pixel sample is a pixel block including a plurality of pixels, coordinates of the pixel sample may be coordinates of any pixel in the pixel sample, or coordinates of the pixel sample may be coordinates of a specified pixel in the pixel sample (for example, the coordinates of the pixel sample may be coordinates of a top-left pixel, a bottom-left pixel, a top-right pixel, or a central pixel in the pixel sample).

It can be understood that pixel value prediction may be performed on each image block in a current video frame in a manner similar to the pixel value prediction manner corresponding to the current image block. Certainly, pixel value prediction may also be performed on some image blocks in the current video frame in a manner different from the pixel value prediction manner corresponding to the current image block.

To help better understand and implement the foregoing solution in this embodiment of the present invention, the following provides a further description with reference to a specific application scenario.

Referring to FIG. 2-a, FIG. 2-a is a schematic flowchart of another image prediction method according to another embodiment of the present invention. This embodiment is described mainly by using an example in which the image prediction method is implemented by a video coding apparatus. As shown in an example in FIG. 2-a, the another image prediction method provided in a second embodiment of the present invention may include the following steps.

S201: The video coding apparatus determines two pixel samples in a current image block.

In this embodiment, mainly, the two pixel samples include, for example, two pixel samples in a top-left pixel sample, a top-right pixel sample, a bottom-left pixel sample, and a central pixel sample a1 of the current image block. For example, the two pixel samples include the top-left pixel sample and the top-right pixel sample of the current image block. A scenario in which the two pixel samples are other pixel samples of the current image block may be deduced by analog.

The top-left pixel sample of the current image block may be a top-left vertex of the current image block or a pixel block that is at a top-left vertex of the current image block and that is included in the current image block; the bottom-left pixel sample of the current image block is a bottom-left vertex of the current image block or a pixel block that is at a bottom-left vertex of the current image block and that is included in the current image block; the top-right pixel sample of the current image block is a top-right vertex of the current image block or a pixel block that is at a top-right vertex of the current image block and that is included in the current image block; and the central pixel sample a1 of the current image block is a central pixel of the current image block or a pixel block that is at a central pixel of the current image block and that is included in the current image block.

If a pixel sample is a pixel block, a size of the pixel block is, for example, 2*2, 1*2, 4*2, 4*4, or another value.

S202: The video coding apparatus determines a candidate motion information unit set corresponding to each of the two pixel samples.

The candidate motion information unit set corresponding to each pixel sample includes at least one candidate motion information unit.

The pixel sample mentioned in the embodiments of the present invention may be a pixel or a pixel block including at least two pixels.

For example, as shown in FIG. 2-b and FIG. 2-c, a candidate motion information unit set S1 corresponding to the top-left pixel sample of the current image block may include motion information units of x1 pixel samples, where the x1 pixel samples include at least one of a pixel sample Col-LT that is at the same location as the top-left pixel sample LT of the current image block and that is in a video frame temporally adjacent to a video frame to which the current image block belongs, a spatially adjacent image block C to the left of the current image block, a spatially adjacent image block A to the top-left of the current image block, and a spatially adjacent image block B to the top of the current image block. For example, a motion information unit of the spatially adjacent image block C to the left of the current image block, a motion information unit of the spatially adjacent image block A to the top-left of the current image block, and a motion information unit of the spatially adjacent image block B to the top of the current image block may be first obtained, and the obtained motion information unit of the spatially adjacent image block C to the left of the current image block, the obtained motion information unit of the spatially adjacent image block A to the top-left of the current image block, and the obtained motion information unit of the spatially adjacent image block B to the top of the current image block are added to the candidate motion information unit set corresponding to the top-left pixel sample of the current image block. If some or all of the motion information unit of the spatially adjacent image block C to the left of the current image block, the motion information unit of the spatially adjacent image block A to the top-left of the current image block, and the motion information unit of the spatially adjacent image block B to the top of the current image block are the same, deduplication is further performed on the candidate motion information unit set S1 (in this case, the deduplicated candidate motion information unit set S1 may have one or two motion information units). If a motion information unit of the pixel sample Col-LT that is at the same location as the top-left pixel sample LT of the current image block and that is in the video frame temporally adjacent to the video frame to which the current image block belongs is the same as a motion information unit in the deduplicated candidate motion information unit set S1, a zero motion information unit may be added to the candidate motion information unit set S1 until the candidate motion information unit set S1 has three motion information units. In addition, if a motion information unit of the pixel sample Col-LT that is at the same location as the top-left pixel sample LT of the current image block and that is in the video frame temporally adjacent to the video frame to which the current image block belongs is different from any motion information unit in the deduplicated candidate motion information unit set S1, the motion information unit of the pixel sample Col-LT that is at the same location as the top-left pixel sample LT of the current image block and that is in the video frame temporally adjacent to the video frame to which the current image block belongs is added to the deduplicated candidate motion information unit set S1. Then, if the candidate motion information unit set S1 still has less than three motion information units, a zero motion information unit may be added to the candidate motion information unit set S1 until the candidate motion information unit set S1 has three motion information units.

If the video frame to which the current image block belongs is a forward-predicted frame, the zero motion information unit added to the candidate motion information unit set S1 includes a zero motion vector with a forward prediction direction but may not include a zero motion vector with a backward prediction direction. If the video frame to which the current image block belongs is a backward-predicted frame, the zero motion information unit added to the candidate motion information unit set S1 includes a zero motion vector with a backward prediction direction but may not include a zero motion vector with a forward prediction direction. In addition, if the video frame to which the current image block belongs is a bidirectionally predicted frame, the zero motion information unit added to the candidate motion information unit set S1 includes a zero motion vector with a forward prediction direction and a zero motion vector with a backward prediction direction. Reference frame indexes corresponding to motion vectors in different zero motion information units added to the candidate motion information unit set S1 may be different, and a corresponding reference frame index may be, for example, 0, 1, 2, 3, or another value.

Similarly, for example, as shown in FIG. 2-b and FIG. 2-c, a candidate motion information unit set S2 corresponding to the top-right pixel sample of the current image block may include motion information units of x2 image blocks, where the x2 image blocks may include at least one of a pixel sample Col-RT that is at the same location as the top-right pixel sample RT of the current image block and that is in the video frame temporally adjacent to the video frame to which the current image block belongs, a spatially adjacent image block E to the top-right of the current image block, and a spatially adjacent image block D to the top of the current image block. For example, a motion information unit of the spatially adjacent image block E to the top-right of the current image block and a motion information unit of the spatially adjacent image block D to the top of the current image block may be first obtained, and the obtained motion information unit of the spatially adjacent image block E to the top-right of the current image block and the obtained motion information unit of the spatially adjacent image block D to the top of the current image block are added to the candidate motion information unit set S2 corresponding to the top-right pixel sample of the current image block. If the motion information unit of the spatially adjacent image block E to the top-right of the current image block is the same as the motion information unit of the spatially adjacent image block D to the top of the current image block, deduplication may be performed on the candidate motion information unit set S2 (in this case, the deduplicated candidate motion information unit set S2 has one motion information unit). If a motion information unit of the pixel sample Col-RT that is at the same location as the top-right pixel sample RT of the current image block and that is in the video frame temporally adjacent to the video frame to which the current image block belongs is the same as a motion information unit in the deduplicated candidate motion information unit set S2, a zero motion information unit may be further added to the candidate motion information unit set S2 until the candidate motion information unit set S2 has two motion information units. In addition, if a motion information unit of the pixel sample Col-RT that is at the same location as the top-right pixel sample RT of the current image block and that is in the video frame temporally adjacent to the video frame to which the current image block belongs is different from any motion information unit in the deduplicated candidate motion information unit set S2, the motion information unit of the pixel sample Col-RT that is at the same location as the top-right pixel sample RT of the current image block and that is in the video frame temporally adjacent to the video frame to which the current image block belongs may be added to the deduplicated candidate motion information unit set S2. Then, if the candidate motion information unit set S2 still has less than two motion information units, a zero motion information unit is further added to the candidate motion information unit set S2 until the candidate motion information unit set S2 has two motion information units.

If the video frame to which the current image block belongs is a forward-predicted frame, the zero motion information unit added to the candidate motion information unit set S2 includes a zero motion vector with a forward prediction direction but may not include a zero motion vector with a backward prediction direction. If the video frame to which the current image block belongs is a backward-predicted frame, the zero motion information unit added to the candidate motion information unit set S2 includes a zero motion vector with a backward prediction direction but may not include a zero motion vector with a forward prediction direction. In addition, if the video frame to which the current image block belongs is a bidirectionally predicted frame, the zero motion information unit added to the candidate motion information unit set S2 includes a zero motion vector with a forward prediction direction and a zero motion vector with a backward prediction direction. Reference frame indexes corresponding to motion vectors in different zero motion information units added to the candidate motion information unit set S2 may be different, and a corresponding reference frame index may be, for example, 0, 1, 2, 3, or another value.

Similarly, for example, as shown in FIG. 2-b and FIG. 2-c, a candidate motion information unit set S3 corresponding to the bottom-left pixel sample of the current image block may include motion information units of x3 image blocks, where the x3 image blocks may include at least one of a pixel sample Col-LB that is at the same location as the bottom-left pixel sample LB of the current image block and that is in the video frame temporally adjacent to the video frame to which the current image block belongs, a spatially adjacent image block G to the bottom-left of the current image block, and a spatially adjacent image block F to the left of the current image block. For example, a motion information unit of the spatially adjacent image block G to the bottom-left of the current image block and a motion information unit of the spatially adjacent image block F to the left of the current image block are first obtained, and the obtained motion information unit of the spatially adjacent image block G to the bottom-left of the current image block and the obtained motion information unit of the spatially adjacent image block F to the left of the current image block may be added to the candidate motion information unit set S3 corresponding to the bottom-left pixel sample of the current image block. If the motion information unit of the spatially adjacent image block G to the bottom-left of the current image block is the same as the motion information unit of the spatially adjacent image block F to the left of the current image block, deduplication may be performed on the candidate motion information unit set S3 (in this case, the deduplicated candidate motion information unit set S3 has one motion information unit). If a motion information unit of the pixel sample Col-LB that is at the same location as the bottom-left pixel sample LB of the current image block and that is in the video frame temporally adjacent to the video frame to which the current image block belongs is the same as a motion information unit in the deduplicated candidate motion information unit set S3, a zero motion information unit may be further added to the candidate motion information unit set S3 until the candidate motion information unit set S3 has two motion information units. In addition, if a motion information unit of the pixel sample Col-LB that is at the same location as the bottom-left pixel sample LB of the current image block and that is in the video frame temporally adjacent to the video frame to which the current image block belongs is different from any motion information unit in the deduplicated candidate motion information unit set S3, the motion information unit of the pixel sample Col-LB that is at the same location as the bottom-left pixel sample LB of the current image block and that is in the video frame temporally adjacent to the video frame to which the current image block belongs may be added to the deduplicated candidate motion information unit set S3. Then, if the candidate motion information unit set S3 still has less than two motion information units, a zero motion information unit is further added to the candidate motion information unit set S3 until the candidate motion information unit set S3 has two motion information units.

If the video frame to which the current image block belongs is a forward-predicted frame, the zero motion information unit added to the candidate motion information unit set S3 includes a zero motion vector with a forward prediction direction but may not include a zero motion vector with a backward prediction direction. If the video frame to which the current image block belongs is a backward-predicted frame, the zero motion information unit added to the candidate motion information unit set S3 includes a zero motion vector with a backward prediction direction but may not include a zero motion vector with a forward prediction direction. In addition, if the video frame to which the current image block belongs is a bidirectionally predicted frame, the zero motion information unit added to the candidate motion information unit set S3 includes a zero motion vector with a forward prediction direction and a zero motion vector with a backward prediction direction. Reference frame indexes corresponding to motion vectors in different zero motion information units added to the candidate motion information unit set S3 may be different, and a corresponding reference frame index may be, for example, 0, 1, 2, 3, or another value.

That two motion information units are different may mean that motion vectors included in the two motion information units are different, or that prediction directions corresponding to motion vectors included in the two motion information units are different, or that reference frame indexes corresponding to motion vectors included in the two motion information units are different. That two motion information units are the same may mean that motion vectors included in the two motion information units are the same, and that prediction directions corresponding to the motion vectors included in the two motion information units are the same, and that reference frame indexes corresponding the motion vectors included in the two motion information units are the same.

It can be understood that for a scenario with more pixel samples, a candidate motion information unit set of a corresponding pixel sample may be obtained in a similar manner.

For example, as shown in FIG. 2-d, in an example shown in FIG. 2-d, the two pixel samples may include two pixel samples in a top-left pixel sample, a top-right pixel sample, a bottom-left pixel sample, and a central pixel sample a1 of the current image block. The top-left pixel sample of the current image block is a top-left vertex of the current image block or a pixel block that is at a top-left vertex of the current image block and that is included in the current image block; the bottom-left pixel sample of the current image block is a bottom-left vertex of the current image block or a pixel block that is at a bottom-left vertex of the current image block and that is included in the current image block; the top-right pixel sample of the current image block is a top-right vertex of the current image block or a pixel block that is at a top-right vertex of the current image block and that is included in the current image block; and the central pixel sample a1 of the current image block is a central pixel of the current image block or a pixel block that is at a central pixel of the current image block and that is included in the current image block.

S203: The video coding apparatus determines N candidate combined motion information unit sets based on the candidate motion information unit set corresponding to each of the two pixel samples, where each motion information unit included in each of the N candidate combined motion information unit sets is selected from at least some motion information units that meet a constraint in the candidate motion information unit set corresponding to each of the two pixel samples, the N candidate combined motion information unit sets are different from each other, and each of the N candidate combined motion information unit sets includes two motion information units.

It can be understood that, assuming that a candidate combined motion information unit set is determined based on the candidate motion information unit set S1 (it is assumed that the candidate motion information unit set S1 includes three motion information units) and the candidate motion information unit set S2 (it is assumed that the candidate motion information unit set S2 includes two motion information units), 3*2=6 initial candidate combined motion information unit sets can be theoretically determined. However, to improve usability, at least one of a first condition, a second condition, a third condition, a fourth condition, and a fifth condition may be used, for example, to select the N candidate combined motion information unit sets from the six initial candidate combined motion information unit sets. If quantities of motion information units included in the candidate motion information unit set S1 and the candidate motion information unit set S2 are not limited to the foregoing example, a quantity of initial candidate combined motion information unit sets is not necessarily 6.

For specific restrictive content of the first condition, the second condition, third condition, the fourth condition, and the fifth condition, refer to example descriptions in the foregoing embodiment, and details are not described herein again. Certainly, the N candidate combined motion information unit sets may alternatively meet, for example, another unlisted condition.

In a specific implementation process, for example, at least one condition in the first condition, the second condition, and the third condition may be first used to filter the initial candidate combined motion information unit sets, to select N01 candidate combined motion information unit sets from the initial candidate combined motion information unit sets, then the N01 candidate combined motion information unit sets are scaled, and then at least one condition in the fourth condition and the fifth condition is used to select the N candidate combined motion information unit sets from the scaled N01 candidate combined motion information unit sets. Certainly, it is also possible that the fourth condition and the fifth condition are not referenced, but instead at least one condition in the first condition, the second condition, and the third condition is directly used to filter the initial candidate combined motion information unit sets, to select the N candidate combined motion information unit sets from the initial candidate combined motion information unit sets.

It can be understood that in video coding and decoding, a motion vector reflects a distance for which an object is deviated from a same moment (the same moment corresponds to a same reference frame) in one direction (prediction direction). Therefore, when motion information units of different pixel samples correspond to different prediction directions and/or correspond to different reference frame indexes, a motion deviation of each pixel/pixel block in the current image block relative to a reference frame possibly cannot be directly obtained. However, when these pixel samples correspond to a same prediction direction and correspond to a same reference frame index, a motion vector of each pixel/pixel block in the current image block can be obtained by combining these combined motion vectors.

Therefore, when motion information units of different pixel samples in a candidate combined motion information unit set correspond to different prediction directions and/or correspond to different reference frame indexes, the candidate combined motion information unit set may be scaled. Scaling the candidate combined motion information unit set may include modification, addition, and/or deletion of a motion vector in one or more motion information units in the candidate combined motion information unit set.

For example, in some possible implementations of the present invention, the performing pixel value prediction on the current image block by using an affine motion model and the combined motion information unit set i may include: when a reference frame index corresponding to a motion vector with a prediction direction being a first prediction direction in the combined motion information unit set i is different from a reference frame index of the current image block, scaling the combined motion information unit set i, so that the motion vector with the prediction direction being the first prediction direction in the combined motion information unit set i is scaled to a reference frame of the current image block; and performing pixel value prediction on the current image block by using the affine motion model and the scaled combined motion information unit set i, where the first prediction direction is forward or backward.

Alternatively, the performing pixel value prediction on the current image block by using an affine motion model and the combined motion information unit set i may include: when a reference frame index corresponding to a motion vector with the forward prediction direction in the combined motion information unit set i is different from a forward reference frame index of the current image block, and a reference frame index corresponding to a motion vector with the backward prediction direction in the combined motion information unit set i is different from a backward reference frame index of the current image block, scaling the combined motion information unit set i, so that the motion vector with the forward prediction direction in the combined motion information unit set i is scaled to a forward reference frame of the current image block and the motion vector with the backward prediction direction in the combined motion information unit set i is scaled to a backward reference frame of the current image block; and performing pixel value prediction on the current image block by using the affine motion model and the scaled combined motion information unit set i.

S204: The video coding apparatus determines, from the N candidate combined motion information unit sets, a combined motion information unit set i including two motion information units.

Optionally, in some possible implementations of the present invention, the video coding apparatus may further write an identifier of the combined motion information unit set i into a video bitstream. Correspondingly, a video decoding apparatus determines, from the N candidate combined motion information unit sets based on the identifier of the combined motion information unit set i that is obtained from the video bitstream, the combined motion information unit set i including the two motion information units.

Optionally, in some possible implementations of the present invention, the determining, by the video coding apparatus from the N candidate combined motion information unit sets, the combined motion information unit set i including the two motion information units may include: determining, from the N candidate combined motion information unit sets based on distortion or rate-distortion cost, a combined motion information unit set i including two motion vectors.

Optionally, rate-distortion cost corresponding to the combined motion information unit set i is less than or equal to rate-distortion cost of any combined motion information unit set other than the combined motion information unit set i in the N candidate combined motion information unit sets.

Optionally, distortion corresponding to the combined motion information unit set i is less than or equal to distortion of any combined motion information unit set other than the combined motion information unit set i in the N candidate combined motion information unit sets.

Rate-distortion cost corresponding to a candidate combined motion information unit set in the N candidate combined motion information unit sets (for example, the combined motion information unit set i in the N candidate combined motion information unit sets) may be, for example, rate-distortion cost corresponding to a predicted pixel value of an image block (for example, the current image block) that is obtained through pixel value prediction on the image block by using the candidate combined motion information unit set (for example, the combined motion information unit set i).

Distortion corresponding to a candidate combined motion information unit set in the N candidate combined motion information unit sets (for example, the combined motion information unit set i in the N candidate combined motion information unit sets) may be, for example, distortion between an original pixel value of an image block (for example, the current image block) and a predicted pixel value of the image block that is obtained through pixel value prediction on the image block by using the candidate combined motion information unit set (for example, the combined motion information unit set i) (that is, distortion between the original pixel value of the image block and the predicted pixel value).

In some possible implementations of the present invention, specifically, the distortion between the original pixel value of the image block (for example, the current image block) and the predicted pixel value of the image block that is obtained through pixel value prediction on the image block by using the candidate combined motion information unit set (for example, the combined motion information unit set i) may be, for example, a sum of squared differences (SSD), or a sum of absolute differences (SAD), or an error between the original pixel value of the image block (for example, the current image block) and the predicted pixel value of the image block that is obtained through pixel value prediction on the image block by using the candidate combined motion information unit set (for example, the combined motion information unit set i), and/or another distortion parameter that can measure distortion.

Further, to further reduce computational complexity, when N is greater than n1, n1 candidate combined motion information unit sets may be selected from the N candidate combined motion information unit sets, and the combined motion information unit set i including the two motion information units is determined from the n1 candidate combined motion information unit sets based on distortion or rate-distortion cost. $D(V)$ corresponding to any one of the n1 candidate combined motion information unit sets is less than or equal to $D(V)$ corresponding to any one of the N candidate combined motion information unit sets except the n1 candidate combined motion information unit sets, where n1 is equal to, for example, 3, 4, 5, 6, or another value.

Further, the n1 candidate combined motion information unit sets or identifiers of the n1 candidate combined motion information unit sets may be added to a candidate combined motion information unit set queue, and if N is less than or equal to n1, the N candidate combined motion information unit sets or identifiers of the N candidate combined motion information unit sets may be added to the candidate combined motion information unit set queue. Candidate combined motion information unit sets in the candidate combined motion information unit set queue may be, for example, sorted in ascending order or descending order of $D(V)$.

A Euclidean distance parameter $D(V)$ of any one (for example, the combined motion information unit set i) of the N candidate combined motion information unit sets may be, for example, calculated in the following manner:

$$D(V) = abs((v_{1,x} - v_{0,x}) \times h - (v_{2,y} - v_{0,y}) \times w)$$
$$+ abs((v_{1,y} - v_{0,y}) \times h + (v_{2,x} - v_{0,x}) \times w) \quad ;$$

where

$v_{p,x}$ represents a horizontal component of a motion vector $\overrightarrow{v_p}$, $v_{p,y}$ represents a vertical component of the motion vector $\overrightarrow{v_p}$, $\overrightarrow{v_1}$ and $\overrightarrow{v_0}$ are two motion vectors of two pixel samples included in a candidate combined motion information unit set in the N candidate combined motion information unit sets, a motion vector $\overrightarrow{v_2}$ represents a motion vector of another pixel sample in the current image block, and the another pixel sample is different from the foregoing two pixel samples. For example, as shown FIG. 2-e, $\overrightarrow{v_1}$ and $\overrightarrow{v_0}$ represent motion vectors of the top-left pixel sample and the top-right pixel sample in the current image block, and the motion vector $\overrightarrow{v_2}$ represents a motion vector of the bottom-left pixel sample in the current image block. Certainly, the motion vector $\overrightarrow{v_2}$ may also represent a motion vector of the central pixel sample or another pixel sample in the current image block.

Optionally, $|v_{1,x} - v_{0,x}| \leq w/2$, or $|v_{1,y} - v_{0,y}| \leq h/2$, or $|v_{2,x} - v_{0,x}| \leq w/2$, or $|v_{2,y} - v_{0,y}| \leq h/2$.

Further, the candidate combined motion information unit set queue may be obtained by sorting D(V) values of the N candidate combined motion information unit sets in ascending order or descending order. Combined motion information unit sets in the candidate combined motion information unit set queue are different from each other, and an index number may be used to indicate a combined motion information unit set in the candidate combined motion information unit set queue.

S205: The video coding apparatus performs motion vector prediction on the current image block by using an affine motion model and the combined motion information unit set i.

It is assumed that a size of the current image block is w×h, and w is equal or not equal to h.

It is assumed that coordinates of the foregoing two pixel samples are (0, 0) and (w, 0), and that coordinates of a pixel on the top-left corner of the pixel sample are used in calculation is used as an example. Referring to FIG. 2-e, FIG. 2-e shows coordinates of four vertices of the current image block. Referring to FIG. 2-f and FIG. 2-g, FIG. 2-f and FIG. 2-g show schematic diagrams of affine motion.

Motion vectors of the two pixel samples are $(vx_0, vy_0)$ and $(vx_1, vy_1)$, respectively, and a motion vector of any pixel in the current image block x can be calculated by substituting the coordinates and the motion vectors of the two pixel samples into the following example affine motion model:

$$\begin{cases} vx = \dfrac{vx_1 - vx_0}{w}x - \dfrac{vy_1 - vy_0}{w}y + vx_0 \\ vy = \dfrac{vy_1 - vy_0}{w}x + \dfrac{vx_1 - vx_0}{w}y + vy_0 \end{cases} \quad \text{(Formula 1)};$$

where

the motion vectors of the two pixel samples are $(vx_0, vy_0)$ and $(vx_1, vy_1)$, respectively, vx and vy are respectively a motion vector horizontal component (vx) and a motion vector vertical component (vy) of a pixel sample whose coordinates are (x, y) in the current image block, and w is a length or width of the current image block.

Further, the video coding apparatus may perform pixel value prediction on the current image block based on a calculated motion vector of each pixel or each pixel block in the current image block. The video coding apparatus may obtain a prediction residual of the current image block by using an original pixel value of the current image block and a predicted pixel value of the current image block that is obtained through pixel value prediction on the current image block. The video coding apparatus may write the prediction residual of the current image block into the video bitstream.

It can be learned that in the technical solution in this embodiment, the video coding apparatus performs pixel value prediction on the current image block by using the affine motion model and the combined motion information unit set i, where each motion information unit in the combined motion information unit set i is selected from the at least some motion information units in the candidate motion information unit set corresponding to each of the two pixel samples. A selection range of the combined motion information unit set i becomes relatively narrow, and a mechanism in a conventional technology in which motion information units of a plurality of pixel samples are selected through massive calculation from all possible candidate motion information unit sets of the plurality of pixel samples is abandoned. This helps improve coding efficiency and also helps reduce computational complexity of image prediction based on an affine motion model, thereby making it possible to introduce an affine motion model into a video coding standard. In addition, introduction of the affine motion model helps more accurately describe object motion and therefore helps improve prediction accuracy. In addition, a quantity of reference pixel samples may be 2, and this helps further reduce the computational complexity of the image prediction based on the affine motion model after the introduction of the affine motion model, and also helps reduce a quantity of a motion vector residual or affine parameter information transferred by an encoder side.

The following exemplifies a derivation process of the affine motion model shown in formula 1. For example, the affine motion model may be derived by using a rotational motion model.

Rotational motion is, for example, shown in FIG. 2-h or FIG. 2-i.

The rotational motion model is shown in formula (2), where (x', y') is coordinates in a reference frame that correspond to a pixel whose coordinates are (x, y), 0 is an angle of rotation, and $(a_0, a_1)$ is a translation component. If a transform coefficient is known, a motion vector (vx, vy) of the pixel (x, y) can be obtained:

$$\begin{cases} x' = \cos\theta \cdot x + \sin\theta \cdot y + a_0 \\ y' = -\sin\theta \cdot x + \cos\theta \cdot y + a_1 \\ vx = x - x' \\ vy = y - y' \end{cases} \quad \text{(Formula 2)};$$

**where**

a rotation matrix in use is: $\begin{bmatrix} \cos\theta & \sin\theta \\ -\sin\theta & \cos\theta \end{bmatrix}$.

A scaling transformation of a coefficient ρ is further performed in addition to rotation, and in this case, to avoid trigonometric operations in rotational motion, the following simplified affine motion matrix is obtained:

$$\begin{bmatrix} \cos\theta & \sin\theta \\ -\sin\theta & \cos\theta \end{bmatrix}\begin{bmatrix} \rho & 0 \\ 0 & \rho \end{bmatrix} = \begin{bmatrix} \rho\cos\theta & \rho\sin\theta \\ -\rho\sin\theta & \rho\cos\theta \end{bmatrix} = \begin{bmatrix} a_2 & a_3 \\ -a_3 & a_2 \end{bmatrix}$$

This helps reduce computational complexity and can simplify a calculation process of a motion vector of each pixel, and like a common affine motion model, this model can be applied to complex motion scenarios such as rotation and scaling. The simplified affine motion model may be described as formula 3, and compared with a common affine motion model, the simplified affine motion model may be represented by using only four parameters:

$$\begin{cases} x' = \quad a_2 \cdot x + a_3 \cdot y + a_0 \\ y' = -a_3 \cdot x + a_2 \cdot y + a_1 \\ vx = x - x' \\ vy = y - y' \end{cases} \quad \text{(Formula 3)}$$

For an image block (such as CUR) of a size $w \times h$, motion vectors $(vx_0, vy_0)$ and $(vx_1, vy_1)$ of vertices whose coordinates are $(0, 0)$ and $(w, 0)$ are obtained by expanding the right side and the bottom side of the image block by one row each. The two vertices are used as pixel samples (certainly, another point may also be used as a reference pixel sample, for example, a central pixel sample). Coordinates and motion vectors of the pixel samples are substituted into formula (3), and formula 1 can be derived:

$$\begin{cases} vx = \frac{vx_1 - vx_0}{w} x - \frac{vy_1 - vy_0}{w} y + vx_0 \\ vy = \frac{vy_1 - vy_0}{w} x + \frac{vx_1 - vx_0}{w} y + vy_0 \end{cases} \quad \text{(Formula 1)};$$

where

$$\begin{cases} \frac{vx_2 - vx_0}{h} = -\frac{vy_1 - vy_0}{w} \\ \frac{vy_2 - vy_0}{h} = \frac{vx_1 - vx_0}{w} \end{cases};$$

where
the motion vectors of the two pixel samples are $(vx_0, vy_0)$ and $(vx_1, vy_1)$, respectively, vx is a motion vector horizontal component of a pixel sample whose coordinates are $(x, y)$ in the current image block, vy is a motion vector vertical component of the pixel sample whose coordinates are $(x, y)$ in the current image block, and w is a length or width of the current image block.

It can be understood that, as can be learned from the foregoing derivation process, formula 1 has relatively strong usability. As found in practice, a quantity of reference pixel samples may be 2, and this helps further reduce the computational complexity of the image prediction based on the affine motion model after the introduction of the affine motion model, and also helps reduce a quantity of bits of a motion vector difference or affine parameter information transferred by an encoder side.

Referring to FIG. 3, FIG. 3 is a schematic flowchart of another image prediction method according to another embodiment of the present invention. This embodiment is described mainly by using an example in which the image prediction method is implemented by a video decoding apparatus. As shown in the example in FIG. 3, the another image prediction method provided in a third embodiment of the present invention may include the following steps.

S301: The video decoding apparatus determines two pixel samples in a current image block.

In this embodiment, mainly, the two pixel samples include, for example, two pixel samples in a top-left pixel sample, a top-right pixel sample, a bottom-left pixel sample, and a central pixel sample a1 of the current image block. For example, the two pixel samples include the top-left pixel sample and the top-right pixel sample of the current image block. A scenario in which the two pixel samples are other pixel samples of the current image block may be deduced by analog.

The top-left pixel sample of the current image block may be a top-left vertex of the current image block or a pixel block that is at a top-left vertex of the current image block and that is included in the current image block; the bottom-left pixel sample of the current image block is a bottom-left vertex of the current image block or a pixel block that is at a bottom-left vertex of the current image block and that is included in the current image block; the top-right pixel sample of the current image block is a top-right vertex of the current image block or a pixel block that is at a top-right vertex of the current image block and that is included in the current image block; and the central pixel sample a1 of the current image block is a central pixel of the current image block or a pixel block that is at a central pixel of the current image block and that is included in the current image block.

If a pixel sample is a pixel block, a size of the pixel block is, for example, 2*2, 1*2, 4*2, 4*4, or another value.

S302: The video decoding apparatus determines a candidate motion information unit set corresponding to each of the two pixel samples.

The candidate motion information unit set corresponding to each pixel sample includes at least one candidate motion information unit.

The pixel sample mentioned in the embodiments of the present invention may be a pixel or a pixel block including at least two pixels.

For example, as shown in FIG. 2-b and FIG. 2-c, a candidate motion information unit set S1 corresponding to the top-left pixel sample of the current image block may include motion information units of x1 pixel samples, where the x1 pixel samples include at least one of a pixel sample Col-LT that is at the same location as the top-left pixel sample LT of the current image block and that is in a video frame temporally adjacent to a video frame to which the current image block belongs, a spatially adjacent image block C to the left of the current image block, a spatially adjacent image block A to the top-left of the current image block, and a spatially adjacent image block B to the top of the current image block. For example, a motion information unit of the spatially adjacent image block C to the left of the current image block, a motion information unit of the spatially adjacent image block A to the top-left of the current image block, and a motion information unit of the spatially adjacent image block B to the top of the current image block may be first obtained, and the obtained motion information unit of the spatially adjacent image block C to the left of the current image block, the obtained motion information unit of the spatially adjacent image block A to the top-left of the current image block, and the obtained motion information unit of the spatially adjacent image block B to the top of the current image block are added to the candidate motion information unit set corresponding to the top-left pixel sample of the current image block. If some or all of the motion information unit of the spatially adjacent image block C to the left of the current image block, the motion information unit of the spatially adjacent image block A to the top-left of the current image block, and the motion information unit of the spatially adjacent image block B to the top of the current image block are the same, deduplication is further performed on the candidate motion information unit set S1 (in this case, the deduplicated candidate motion information unit set S1 may have one or two motion information units). If a motion information unit of the pixel sample Col-LT that is at the same location as the top-left pixel sample LT of the current image block and that is in the video frame temporally adjacent to the video frame to which the current image block belongs is the same as a motion information unit in the deduplicated candidate motion information unit set S1, a zero motion information unit may be added to the candidate motion information unit set S1 until the candidate motion information unit set S1 has three motion information units. In addition, if a motion information unit of the pixel sample Col-LT that is at the same location as the top-left pixel sample LT of the current image block and that is in the video frame temporally adjacent to the video frame to which the current image block belongs is different from any motion information unit in the deduplicated candidate motion information unit set S1, the motion information unit of the pixel sample Col-LT that is at the same location as the top-left pixel sample LT of the current image block and that is in the video frame temporally adjacent to the video frame to which the current image block belongs is added to the deduplicated candidate motion information unit set S1. Then, if the candidate motion information unit set S1 still has less than three motion information units, a zero motion information unit may be added to the candidate motion information unit set S1 until the candidate motion information unit set S1 has three motion information units.

If the video frame to which the current image block belongs is a forward-predicted frame, the zero motion information unit added to the candidate motion information unit set S1 includes a zero motion vector with a forward prediction direction but may not include a zero motion vector with a backward prediction direction. If the video frame to which the current image block belongs is a backward-predicted frame, the zero motion information unit added to the candidate motion information unit set S1 includes a zero motion vector with a backward prediction direction but may not include a zero motion vector with a forward prediction direction. In addition, if the video frame to which the current image block belongs is a bidirectionally predicted frame, the zero motion information unit added to the candidate motion information unit set S1 includes a zero motion vector with a forward prediction direction and a zero motion vector with a backward prediction direction. Reference frame indexes corresponding to motion vectors in different zero motion information units added to the candidate motion information unit set S1 may be different, and a corresponding reference frame index may be, for example, 0, 1, 2, 3, or another value.

Similarly, for example, as shown in FIG. 2-b and FIG. 2-c, a candidate motion information unit set S2 corresponding to the top-right pixel sample of the current image block may include motion information units of x2 image blocks, where the x2 image blocks may include at least one of a pixel sample Col-RT that is at the same location as the top-right pixel sample RT of the current image block and that is in the video frame temporally adjacent to the video frame to which the current image block belongs, a spatially adjacent image block E to the top-right of the current image block, and a spatially adjacent image block D to the top of the current image block. For example, a motion information unit of the spatially adjacent image block E to the top-right of the current image block and a motion information unit of the spatially adjacent image block D to the top of the current image block may be first obtained, and the obtained motion information unit of the spatially adjacent image block E to the top-right of the current image block and the obtained motion information unit of the spatially adjacent image block D to the top of the current image block are added to the candidate motion information unit set S2 corresponding to the top-right pixel sample of the current image block. If the motion information unit of the spatially adjacent image block E to the top-right of the current image block is the same as the motion information unit of the spatially adjacent image block D to the top of the current image block, deduplication may be performed on the candidate motion information unit set S2 (in this case, the deduplicated candidate motion information unit set S2 has one motion information unit). If a motion information unit of the pixel sample Col-RT that is at the same location as the top-right pixel sample RT of the current image block and that is in the video frame temporally adjacent to the video frame to which the current image block belongs is the same as a motion information unit in the deduplicated candidate motion information unit set S2, a zero motion information unit may be further added to the candidate motion information unit set S2 until the candidate motion information unit set S2 has two motion information units. In addition, if a motion information unit of the pixel sample Col-RT that is at the same location as the top-right pixel sample RT of the current image block and that is in the video frame temporally adjacent to the video frame to which the current image block belongs is different from any motion information unit in the deduplicated candidate motion information unit set S2, the motion information unit of the pixel sample Col-RT that is at the same location as the top-right pixel sample RT of the current image block and that is in the video frame temporally adjacent to the video frame to which the current image block belongs may be added to the deduplicated candidate motion information unit set S2. Then, if the candidate motion information unit set S2 still has less than two motion information units, a zero motion information unit is further added to the candidate motion information unit set S2 until the candidate motion information unit set S2 has two motion information units.

If the video frame to which the current image block belongs is a forward-predicted frame, the zero motion information unit added to the candidate motion information unit set S2 includes a zero motion vector with a forward prediction direction but may not include a zero motion vector with a backward prediction direction. If the video frame to which the current image block belongs is a backward-predicted frame, the zero motion information unit added to the candidate motion information unit set S2 includes a zero motion vector with a backward prediction direction but may not include a zero motion vector with a forward prediction direction. In addition, if the video frame to which the current image block belongs is a bidirectionally predicted frame, the zero motion information unit added to the candidate motion information unit set S2 includes a zero motion vector with a forward prediction direction and a zero motion vector with a backward prediction direction. Reference frame indexes corresponding to motion vectors in different zero motion information units added to the candidate motion information unit set S2 may be different, and a corresponding reference frame index may be, for example, 0, 1, 2, 3, or another value.

Similarly, for example, as shown in FIG. 2-b and FIG. 2-c, a candidate motion information unit set S3 corresponding to the bottom-left pixel sample of the current image block may include motion information units of x3 image blocks, where the x3 image blocks may include at least one of a pixel sample Col-LB that is at the same location as the bottom-left pixel sample LB of the current image block and that is in the video frame temporally adjacent to the video frame to which the current image block belongs, a spatially adjacent image block G to the bottom-left of the current image block, and a spatially adjacent image block F to the left of the current image block. For example, a motion information unit of the spatially adjacent image block G to the bottom-left of the current image block and a motion information unit of the spatially adjacent image block F to the left of the current image block are first obtained, and the obtained motion information unit of the spatially adjacent image block G to the bottom-left of the current image block and the obtained motion information unit of the spatially adjacent image block F to the left of the current image block may be added to the candidate motion information unit set S3 corresponding to the bottom-left pixel sample of the current image block. If the motion information unit of the spatially adjacent image block G to the bottom-left of the current image block is the same as the motion information unit of the spatially adjacent image block F to the left of the current image block, deduplication may be performed on the candidate motion information unit set S3 (in this case, the deduplicated candidate motion information unit set S3 has one motion information unit). If a motion information unit of the pixel sample Col-LB that is at the same location as the bottom-left pixel sample LB of the current image block and that is in the video frame temporally adjacent to the video frame to which the current image block belongs is the same as a motion information unit in the deduplicated candidate motion information unit set S3, a zero motion information unit may be further added to the candidate motion information unit set S3 until the candidate motion information unit set S3 has two motion information units. In addition, if a motion information unit of the pixel sample Col-LB that is at the same location as the bottom-left pixel sample LB of the current image block and that is in the video frame temporally adjacent to the video frame to which the current image block belongs is different from any motion information unit in the deduplicated candidate motion information unit set S3, the motion information unit of the pixel sample Col-LB that is at the same location as the bottom-left pixel sample LB of the current image block and that is in the video frame temporally adjacent to the video frame to which the current image block belongs may be added to the deduplicated candidate motion information unit set S3. Then, if the candidate motion information unit set S3 still has less than two motion information units, a zero motion information unit is further added to the candidate motion information unit set S3 until the candidate motion information unit set S3 has two motion information units.

If the video frame to which the current image block belongs is a forward-predicted frame, the zero motion information unit added to the candidate motion information unit set S3 includes a zero motion vector with a forward prediction direction but may not include a zero motion vector with a backward prediction direction. If the video frame to which the current image block belongs is a backward-predicted frame, the zero motion information unit added to the candidate motion information unit set S3 includes a zero motion vector with a backward prediction direction but may not include a zero motion vector with a forward prediction direction. In addition, if the video frame to which the current image block belongs is a bidirectionally predicted frame, the zero motion information unit added to the candidate motion information unit set S3 includes a zero motion vector with a forward prediction direction and a zero motion vector with a backward prediction direction. Reference frame indexes corresponding to motion vectors in different zero motion information units added to the candidate motion information unit set S3 may be different, and a corresponding reference frame index may be, for example, 0, 1, 2, 3, or another value.

That two motion information units are different may mean that motion vectors included in the two motion information units are different, or that prediction directions corresponding to motion vectors included in the two motion information units are different, or that reference frame indexes corresponding to motion vectors included in the two motion information units are different. That two motion information units are the same may mean that motion vectors included in the two motion information units are the same, and that prediction directions corresponding to the motion vectors included in the two motion information units are the same, and that reference frame indexes corresponding the motion vectors included in the two motion information units are the same.

It can be understood that for a scenario with more pixel samples, a candidate motion information unit set of a corresponding pixel sample may be obtained in a similar manner.

For example, as shown in FIG. 2-d, in an example shown in FIG. 2-d, the two pixel samples may include two pixel samples in a top-left pixel sample, a top-right pixel sample, a bottom-left pixel sample, and a central pixel sample a1 of the current image block. The top-left pixel sample of the current image block is a top-left vertex of the current image block or a pixel block that is at a top-left vertex of the current image block and that is included in the current image block; the bottom-left pixel sample of the current image block is a bottom-left vertex of the current image block or a pixel block that is at a bottom-left vertex of the current image block and that is included in the current image block; the top-right pixel sample of the current image block is a top-right vertex of the current image block or a pixel block that is at a top-right vertex of the current image block and that is included in the current image block; and the central pixel sample a1 of the current image block is a central pixel of the current image block or a pixel block that is at a central pixel of the current image block and that is included in the current image block.

S303: The video decoding apparatus determines N candidate combined motion information unit sets based on the candidate motion information unit set corresponding to each of the two pixel samples, where each motion information unit included in each of the N candidate combined motion information unit sets is selected from at least some motion information units that meet a constraint in the candidate motion information unit set corresponding to each of the two pixel samples, the N candidate combined motion information unit sets are different from each other, and each of the N candidate combined motion information unit sets includes two motion information units.

It can be understood that, assuming that a candidate combined motion information unit set is determined based on the candidate motion information unit set S1 (it is assumed that the candidate motion information unit set S1 includes three motion information units) and the candidate motion information unit set S2 (it is assumed that the candidate motion information unit set S2 includes two motion information units), 3*2=6 initial candidate combined motion information unit sets can be theoretically determined. However, to improve usability, at least one of a first condition, a second condition, a third condition, a fourth condition, and a fifth condition may be used, for example, to select the N candidate combined motion information unit sets from the six initial candidate combined motion information unit sets. If quantities of motion information units included in the candidate motion information unit set S1 and the candidate motion information unit set S2 are not limited to the foregoing example, a quantity of initial candidate combined motion information unit sets is not necessarily 6.

For specific restrictive content of the first condition, the second condition, third condition, the fourth condition, and the fifth condition, refer to example descriptions in the foregoing embodiment, and details are not described herein again. Certainly, the N candidate combined motion information unit sets may alternatively meet, for example, another unlisted condition.

In a specific implementation process, for example, at least one condition in the first condition, the second condition, and the third condition may be first used to filter the initial candidate combined motion information unit sets, to select N01 candidate combined motion information unit sets from the initial candidate combined motion information unit sets, then the N01 candidate combined motion information unit sets are scaled, and then at least one condition in the fourth condition and the fifth condition is used to select the N candidate combined motion information unit sets from the scaled N01 candidate combined motion information unit sets. Certainly, it is also possible that the fourth condition and the fifth condition are not referenced, but instead at least one condition in the first condition, the second condition, and the third condition is directly used to filter the initial candidate combined motion information unit sets, to select the N candidate combined motion information unit sets from the initial candidate combined motion information unit sets.

It can be understood that in video coding and decoding, a motion vector reflects a distance for which an object is deviated from a same moment (the same moment corresponds to a same reference frame) in one direction (prediction direction). Therefore, when motion information units of different pixel samples correspond to different prediction directions and/or correspond to different reference frame indexes, a motion deviation of each pixel/pixel block in the current image block relative to a reference frame possibly cannot be directly obtained. However, when these pixel samples correspond to a same prediction direction and correspond to a same reference frame index, a motion vector of each pixel/pixel block in the current image block can be obtained by combining these combined motion vectors.

Therefore, when motion information units of different pixel samples in a candidate combined motion information unit set correspond to different prediction directions and/or correspond to different reference frame indexes, the candidate combined motion information unit set may be scaled. Scaling the candidate combined motion information unit set may include modification, addition, and/or deletion of a motion vector in one or more motion information units in the candidate combined motion information unit set.

For example, in some possible implementations of the present invention, the performing pixel value prediction on the current image block by using an affine motion model and the combined motion information unit set i may include: when a reference frame index corresponding to a motion vector with a prediction direction being a first prediction direction in the combined motion information unit set i is different from a reference frame index of the current image block, scaling the combined motion information unit set i, so that the motion vector with the prediction direction being the first prediction direction in the combined motion information unit set i is scaled to a reference frame of the current image block; and performing pixel value prediction on the current image block by using the affine motion model and the scaled combined motion information unit set i, where the first prediction direction is forward or backward.

Alternatively, the performing pixel value prediction on the current image block by using an affine motion model and the combined motion information unit set i may include: when a reference frame index corresponding to a motion vector with the forward prediction direction in the combined motion information unit set i is different from a forward reference frame index of the current image block, and a reference frame index corresponding to a motion vector with the backward prediction direction in the combined motion information unit set i is different from a backward reference frame index of the current image block, scaling the combined motion information unit set i, so that the motion vector with the forward prediction direction in the combined motion information unit set i is scaled to a forward reference frame of the current image block and the motion vector with the backward prediction direction in the combined motion information unit set i is scaled to a backward reference frame of the current image block; and performing pixel value prediction on the current image block by using the affine motion model and the scaled combined motion information unit set i.

S304: The video decoding apparatus performs decoding processing on a video bitstream to obtain an identifier of a combined motion information unit set i and a prediction residual of the current image block, and determines, from the N candidate combined motion information unit sets based on the identifier of the combined motion information unit set i, a combined motion information unit set i including two motion information units.

Correspondingly, a video coding apparatus may write the identifier of the combined motion information unit set i into the bitstream.

S305: The video decoding apparatus performs motion vector prediction on the current image block by using an affine motion model and the combined motion information unit set i.

For example, the video decoding apparatus may first perform motion estimation on a motion vector in the combined motion information unit set i, to obtain the combined motion information unit set i after the motion estimation; and the video decoding apparatus performs the motion vector prediction on the current image block by using the affine motion model and the combined motion information unit set i after the motion estimation.

It is assumed that a size of the current image block is w×h, and w is equal or not equal to h.

It is assumed that coordinates of the foregoing two pixel samples are (0, 0) and (w, 0), and that coordinates of a pixel on the top-left corner of the pixel sample are used in calculation is used as an example. Referring to FIG. 2-e, FIG. 2-e shows coordinates of four vertices of the current image block.

Motion vectors of the two pixel samples are $(vx_0, vy_0)$ and $(vx_1, vy_1)$, respectively, and a motion vector of any pixel in the current image block x can be calculated by substituting the coordinates and the motion vectors of the two pixel samples into the following example affine motion model:

$$\begin{cases} vx = \frac{vx_1 - vx_0}{w} x - \frac{vy_1 - vy_0}{w} y + vx_0 \\ vy = \frac{vy_1 - vy_0}{w} x + \frac{vx_1 - vx_0}{w} y + vy_0 \end{cases} \text{(Formula 1);}$$

where

the motion vectors of the two pixel samples are $(vx_0, vy_0)$ and $(vx_1, vy_1)$, respectively, vx and vy are respectively a motion vector horizontal component (vx) and a motion vector vertical component (vy) of a pixel sample whose coordinates are (x, y) in the current image block, and w in formula 1 is a length or width of the current image block.

S306: The video decoding apparatus performs pixel value prediction on the current image block based on a calculated motion vector of each pixel or each pixel block of the current image block, to obtain a predicted pixel value of the current image block.

S307: The video decoding apparatus reconstructs the current image block by using the predicted pixel value of the current image block and the prediction residual of the current image block.

It can be learned that in the technical solution in this embodiment, the video decoding apparatus performs pixel value prediction on the current image block by using the affine motion model and the combined motion information unit set i, where each motion information unit in the combined motion information unit set i is selected from the at least some motion information units in the candidate motion information unit set corresponding to each of the two pixel samples. A selection range of the combined motion information unit set i becomes relatively narrow, and a mechanism in a conventional technology in which motion information units of a plurality of pixel samples are selected through massive calculation from all possible candidate motion information unit sets of the plurality of pixel samples is abandoned. This helps improve coding efficiency and also helps reduce computational complexity of image prediction based on an affine motion model, thereby making it possible to introduce an affine motion model into a video coding standard. In addition, introduction of the affine motion model helps more accurately describe object motion and therefore helps improve prediction accuracy. In addition, a quantity of reference pixel samples may be 2, and this helps further reduce the computational complexity of the image prediction based on the affine motion model after the introduction of the affine motion model, and also helps reduce a quantity of a motion vector residual or affine parameter information transferred by an encoder side.

It should be understood that, steps S101 and S102 in the first embodiment of the present invention, steps S201 and S202 in the second embodiment, and steps S301 and S302 in the third embodiment all use two pixel samples as an example, to describe a process from determining any pixel sample to obtaining a corresponding candidate motion vector information unit set. A quantity of pixel samples may be 1, 2, 3, or any positive integer.

Referring to FIG. 4, FIG. 4 is a schematic flowchart of another image prediction method according to an embodiment of the present invention. As shown in an example in FIG. 4, the image prediction method provided in a fourth embodiment of the present invention is used in a decoder side apparatus. Any image block includes at least one first-type pixel sample and at least one second-type pixel sample, and it may as well be assumed that the first-type pixel sample includes a first pixel sample and the second-type pixel sample includes a second pixel sample. For example, a difference between the first-type sample and the second-type sample lies in that motion information of the first-type sample is only from a motion information unit corresponding to the first-type sample, while motion information of the second-type sample is partially from a motion information unit corresponding to the second-type sample. The method may include the following steps.

S401: Parse first bitstream information.

Each to-be-predicted image block corresponds to a part of a bitstream. A decoding apparatus can obtain, by parsing the bitstream, side information (English: side information) for instructing to construct a predicted image and a residual between the predicted image and a to-be-decoded image, and can reconstruct the to-be-decoded image by using the predicted image and the residual.

The first bitstream information is used to represent motion information units respectively corresponding to the first pixel sample and the second pixel sample. For example, the parsed first bitstream information is an index value, and the first bitstream information may separately indicate the motion information units respectively corresponding to the first pixel sample and the second pixel sample, or may indicate a combination of the motion information units respectively corresponding to the first pixel sample and the second pixel sample. No limitation is imposed.

S402: Obtain motion information of a first pixel sample and predicted motion information of a second pixel sample based on the parsed first bitstream information.

It should be understood that predicted motion information is a predictor of motion information. For example, when motion information is a motion vector, predicted motion information is a predictor of the motion vector. For example, in the field of video coding and decoding, a predictor of a motion vector usually comes from a motion information unit corresponding to a current image block, that is, a motion vector of a predicted image block.

For example, this step specifically includes the following sub-steps.

S4021: Determine candidate motion information unit sets respectively corresponding to the first pixel sample and the second pixel sample, where any candidate motion information unit set includes at least one motion information unit.

S101 provides a general method summary, and S301 and S302 provide a method summary with reference to a decoding apparatus. For invention content and example implementations of S4021, refer to the descriptions of S101, and S301 and S302, and details are not described again.

S4022: Determine a combined motion information unit set of the current block, where each motion information unit in the combined motion information unit set is at least some motion information units in the candidate motion information unit sets respectively corresponding to each first pixel sample and each second pixel sample, and motion information of the motion information unit includes a motion vector with a forward prediction direction and/or a motion vector with a backward prediction direction.

S102 provides a general method summary, and S303 provides a method summary with reference to a decoding apparatus. For invention content and example implementations of S4022, refer to the descriptions of S102 and S303, and details are not described again.

S4023: Determine, from the combined motion information unit set based on the parsed first bitstream information, motion information units respectively corresponding to each first pixel sample and each second pixel sample.

S304 provides a method summary with reference to a decoding apparatus. For invention content and example implementations of S4023, refer to the descriptions of S304, and details are not described again.

S4024: Use motion information of the motion information unit corresponding to the first pixel sample as the motion information of the first pixel sample.

For example, a motion information unit indicated by the first bitstream information, that is, a motion vector that is of a predicted image block and that corresponds to the first pixel sample, is used as a motion vector of the first pixel sample.

S4025: Use motion information of the motion information unit corresponding to the second pixel sample as the predicted motion information of the second pixel sample.

For example, a motion information unit indicated by the first bitstream information, that is, a motion vector that is of a predicted image block and that corresponds to the second pixel sample, is used as a predicted motion vector of the second pixel sample.

S403: Parse second bitstream information.

The second bitstream information is used to represent differential motion information of the second pixel sample, and the differential motion information is a difference between the motion information and the predicted motion information. For example, the second bitstream information is used to indicate a residual between a motion vector and the predicted motion vector of the second pixel sample. It should be understood that a motion vector of each second pixel sample corresponds to one residual, and the residual may be 0. The parsed second bitstream information may include a residual of a motion vector of each second pixel sample, or may include a set of residuals of motion vectors of all second pixel samples. No limitation is imposed.

S404: Obtain motion information of the second pixel sample based on the parsed second bitstream information and the predicted motion information of the second pixel sample.

Specifically, this step includes:

obtaining the differential motion information of the second pixel sample based on the parsed second bitstream information, and adding up the differential motion information of the second pixel sample and the corresponding predicted motion information, to obtain the motion information of the second pixel sample.

For example, the motion vector of the second pixel sample may be obtained by adding up the corresponding predicted motion vector and the residual that is of the motion vector of the second pixel sample and that is obtained by parsing the second bitstream information.

S405: Obtain a predictor of the current image block based on a motion model of the current image block, the motion information of the first pixel sample, and the motion information of the second pixel sample.

For example, the motion model of the current image block may be an affine motion model or another translational or non-translational motion model, or may be a four-parameter affine motion model, or may be a six-parameter affine motion model or the like. No limitation is imposed.

For example, the motion model includes:

$$\begin{cases} vx = \dfrac{vx_1\text{-}vx_0}{w}x\text{-}\dfrac{vy_1\text{-}vy_0}{w}y + vx_0 \\ vy = \dfrac{vy_1\text{-}vy_0}{w}x + \dfrac{vx_1\text{-}vx_0}{w}y + vy_0 \end{cases};$$

where motion vectors of the first pixel sample and the second pixel sample are $(vx_0,vy_0)$ and $(vx_1,vy_1)$, respectively, vx is a motion vector horizontal component of a pixel sample whose coordinates are (x, y) in the current image block, vy is a motion vector vertical component of the pixel sample whose coordinates are (x, y) in the current image block, and w is a length or width of the current image block.

For example, the motion model further includes:

$$\begin{cases} vx = \dfrac{vx_1-vx_0}{w}x + \dfrac{vx_2-vx_0}{h}y + vx_0 \\ vy = \dfrac{vy_1-vy_0}{w}x + \dfrac{vy_2-vy_0}{h}y + vy_0 \end{cases};$$

where motion vectors of the first pixel sample and any two second pixel samples or motion vectors of the second pixel sample and any two first pixel samples are $(vx_0, vy_0)$, $(vx_1, vy_1)$, and $(vx_2, vy_2)$, respectively, vx is a motion vector horizontal component of a pixel sample whose coordinates are (x, y) in the current image block, vy is a motion vector vertical component of the pixel sample whose coordinates are (x, y) in the current image block, and w is a length or width of the current image block.

Specifically, this step includes:
in a feasible implementation, calculating a motion vector of each pixel in the current image block by using the affine motion model, and the motion vectors of the first pixel sample and the second pixel sample, and determining a predicted pixel value of each pixel in the current image block by using the calculated motion vector of each pixel in the current image block; or in another feasible implementation, calculating a motion vector of each pixel block in the current image block by using the affine motion model, and the motion vectors of the first pixel sample and the second pixel sample, and determining a predicted pixel value of each pixel in each pixel block in the current image block by using the calculated motion vector of each pixel block in the current image block.

S305 provides a method summary with reference to a decoding apparatus. For invention content and example implementations of S405, refer to the descriptions of S305, and details are not described again.

After the predicted image of the current image block is obtained through decoding, in some embodiments, the method further includes: decoding a bitstream to obtain residual information of the current image block, and reconstructing a current to-be-decoded image block based on the residual information and the predicted image. S306 and S307 provide a method summary with reference to a decoding apparatus. For invention content and example implementations of this step, refer to the descriptions of S306 and S307, and details are not described again.

It can be learned that in this embodiment of the present invention, when the motion information of the first pixel sample is obtained, only predicted motion information corresponding to the first pixel sample needs to be obtained and used as the motion information of the first pixel sample, and there is no need to further parse a bitstream to obtain a residual of the predicted motion information, thereby saving bits used for transmitting a predicted information residual, reducing bit consumption, and improving efficiency.

Referring to FIG. 5, FIG. 5 is a schematic flowchart of another image prediction method according to an embodiment of the present invention. As shown in an example in FIG. 5, the image prediction method provided in a fifth embodiment of the present invention is used in an encoder side apparatus. Any image block includes at least one first-type pixel sample and at least one second-type pixel sample, and it may as well be assumed that the first-type pixel sample includes a first pixel sample and the second-type pixel sample includes a second pixel sample. For example, a difference between the first-type sample and the second-type sample lies in that motion information of the first-type sample is only from a motion information unit corresponding to the first-type sample, while motion information of the second-type sample is partially from a motion information unit corresponding to the second-type sample. The method may include the following steps.

S501: Determine candidate motion information unit sets respectively corresponding to the first pixel sample and the second pixel sample, where any candidate motion information unit set includes at least one motion information unit.

S101 provides a general method summary, and S201 and S202 provide a method summary with reference to a coding apparatus. For invention content and example implementations of S501, refer to the descriptions of S101, and S201 and S202, and details are not described again.

S502: Determine a combined motion information unit set of a current block, where each motion information unit in the combined motion information unit set is at least some motion information units in the candidate motion information unit sets respectively corresponding to the first pixel sample and the second pixel sample, and motion information of the motion information unit includes a motion vector with a forward prediction direction and/or a motion vector with a backward prediction direction.

S102 provides a general method summary, and S203 provides a method summary with reference to a coding apparatus. For invention content and example implementations of S502, refer to the descriptions of S102 and S203, and details are not described again.

S503: Determine, from the combined motion information unit set, motion information units respectively corresponding to the first pixel sample and the second pixel sample.

S204 provides a method summary with reference to a coding apparatus. For invention content and example implementations of S503, refer to the descriptions of S204, and details are not described again.

S504: Encode first bitstream information.

The first bitstream information is used to represent the motion information units respectively corresponding to the first pixel sample and the second pixel sample. For example, the parsed first bitstream information is an index value, and the first bitstream information may separately indicate the motion information units respectively corresponding to the first pixel sample and the second pixel sample, or may indicate a combination of the motion information units respectively corresponding to the first pixel sample and the second pixel sample. No limitation is imposed. It should be understood that an encoding location of the first bitstream information in a bitstream in this step needs to correspond to a parsing location in a bitstream in a related step (for example, step S401 in the fourth embodiment of the present invention) on a corresponding decoder side.

S505: Use motion information of the motion information unit corresponding to the first pixel sample as the motion information of the first pixel sample.

For example, a motion information unit indicated by the first bitstream information, that is, a motion vector that is of a predicted image block and that corresponds to the first pixel sample, is used as a motion vector of the first pixel sample.

S506: Use motion information of the motion information unit corresponding to the second pixel sample as predicted motion information of the second pixel sample.

For example, a motion information unit indicated by the first bitstream information, that is, a motion vector that is of a predicted image block and that corresponds to the second pixel sample, is used as a predicted motion vector of the second pixel sample.

S507: Calculate differential motion information of the second pixel sample, where the differential motion information is a difference between the motion information and the predicted motion information.

For example, second bitstream information is used to indicate a residual between the motion vector and the predicted motion vector of the second pixel sample. It should be understood that a motion vector of each second pixel sample corresponds to one residual, and the residual may be 0. The parsed second bitstream information may include a residual of a motion vector of each second pixel sample, or may include a set of residuals of motion vectors of all second pixel samples. No limitation is imposed.

For example, the residual of the motion vector of the second pixel sample may be obtained by subtracting the motion vector of the second pixel sample and the corresponding predicted motion vector.

S508: Encode second bitstream information.

The second bitstream information is used to represent the differential motion information of the second pixel sample. It should be understood that an encoding location of the second bitstream information in a bitstream in this step needs to correspond to a parsing location in a bitstream in a related step (for example, step S403 in the fourth embodiment of the present invention) on a corresponding decoder side.

It should be understood that an order of steps S504 to S508 is not limited, and steps S504 to S508 may also be performed concurrently.

S509: Obtain a predictor of the current image block based on a motion model of the current image block, the motion information of the first pixel sample, and motion information of the second pixel sample.

S405 provides a method summary with reference to a decoding apparatus. For invention content and example implementations of S509, refer to the descriptions of S405, and details are not described again.

It can be learned that in this embodiment of the present invention, when the motion information of the first pixel sample is obtained, only predicted motion information corresponding to the first pixel sample needs to be obtained and used as the motion information of the first pixel sample, and there is no need to further encode a bitstream to complete transmission of a residual of the predicted motion information, thereby saving bits used for transmitting a predicted information residual, reducing bit consumption, and improving encoding efficiency.

The following further provides related apparatuses for implementing the foregoing solutions.

Referring to FIG. 6, a sixth embodiment of the present invention further provides an image prediction apparatus 600. The apparatus 600 may include:

a first parsing unit 601, configured to parse first bitstream information, where the first bitstream information is used to indicate motion information units respectively corresponding to each first pixel sample and each second pixel sample;

a first obtaining unit 602, configured to obtain motion information of each first pixel sample and predicted motion information of each second pixel sample based on the parsed first bitstream information, where the predicted motion information is predicted information of motion information;

a second parsing unit 603, configured to parse second bitstream information, where the second bitstream information is used to represent differential motion information of each second pixel sample, and the differential motion information is a difference between motion information and predicted motion information;

a second obtaining unit 604, configured to obtain motion information of each second pixel sample based on the parsed second bitstream information and the corresponding predicted motion information of each second pixel sample; and

a third obtaining unit 605, configured to obtain a predictor of the current image block based on a motion model of the current image block, the motion information of each first pixel sample, and the motion information of each second pixel sample.

It should be understood that, for example, the image prediction apparatus 600 in this embodiment may be configured to perform the method and example implementations described in the fourth embodiment of the present invention. For specific implementation functions of the functional modules 601 to 605 in this embodiment, refer to the corresponding specific implementations in the fourth embodiment of the present invention, and for beneficial effects thereof, refer to the beneficial effects in the fourth embodiment of the present invention. Details are not described again. The image prediction apparatus 600 may be any apparatus that needs to output and play a video, for example, a device such as a notebook computer, a tablet computer, a personal computer, or a mobile phone.

Referring to FIG. 7, FIG. 7 is a schematic diagram of an image prediction apparatus 700 according to a seventh embodiment of the present invention. The image prediction apparatus 700 may include at least one bus 701, at least one processor 702 connected to the bus 701, and at least one memory 703 connected to the bus 701.

The processor 702 invokes code or an instruction stored in the memory 703 by using the bus 701, so as to: parse first bitstream information, where the first bitstream information is used to indicate motion information units respectively corresponding to each first pixel sample and each second pixel sample; obtain motion information of each first pixel sample and predicted motion information of each second pixel sample based on the parsed first bitstream information, where the predicted motion information is predicted information of motion information; parse the second bitstream information, where the second bitstream information is used to represent differential motion information of each second pixel sample, and the differential motion information is a difference between motion information and predicted motion information; obtain motion information of each second pixel sample based on the parsed second bitstream information and the corresponding predicted motion information of each second pixel sample; and obtain a predictor of the current image block based on a motion model of the current image block, the motion information of each first pixel sample, and the motion information of each second pixel sample.

It should be understood that, for example, the image prediction apparatus 700 in this embodiment may be configured to perform the method and example implementations described in the fourth embodiment of the present invention. For specific implementation functions, refer to the corresponding specific implementations in the fourth embodiment of the present invention, and for beneficial effects, refer to the beneficial effects in the fourth embodiment of the present invention. Details are not described again. The image prediction apparatus 700 may be any apparatus that needs to output and play a video, for example, a device such as a notebook computer, a tablet computer, a personal computer, or a mobile phone.

An eighth embodiment of the present invention further provides a computer storage medium, where the computer storage medium may store a program, and when running, the program includes some or all steps of any image prediction method recorded in the foregoing method embodiments. For specific implementation functions, refer to the corresponding specific implementations in the fourth embodiment of the present invention, and for beneficial effects, refer to the beneficial effects in the fourth embodiment of the present invention. Details are not described again.

Referring to FIG. 8, a ninth embodiment of the present invention further provides an image prediction apparatus 800. The apparatus 800 may include:

a first determining unit 801, configured to determine candidate motion information unit sets respectively corresponding to each first pixel sample and each second pixel sample, where any candidate motion information unit set includes at least one motion information unit;

a second determining unit 802, configured to determine a combined motion information unit set of the current block, where each motion information unit in the combined motion information unit set is at least some motion information units in the candidate motion information unit sets respectively corresponding to each first pixel sample and each second pixel sample, and motion information of the motion information unit includes a motion vector with a forward prediction direction and/or a motion vector with a backward prediction direction;

a third determining unit 803, configured to determine, from the combined motion information unit set, motion information units respectively corresponding to each first pixel sample and each second pixel sample;

a first encoding unit 804, configured to encode first bitstream information, where the first bitstream information is used to represent the motion information units that respectively correspond to each first pixel sample and each second pixel sample and that are determined from the combined motion information unit set;

a first assignment unit 805, configured to use motion information of the motion information unit corresponding to the first pixel sample as motion information of the first pixel sample;

a second assignment unit 806, configured to use motion information of the motion information unit corresponding to the second pixel sample as predicted motion information of the second pixel sample;

a calculation unit 807, configured to calculate differential motion information of the second pixel sample, where the differential motion information is a difference between the motion information and the predicted motion information;

a second encoding unit 808, configured to encode second bitstream information, where the second bitstream information is used to represent differential motion information of each second pixel sample; and

an obtaining unit 809, configured to obtain a predictor of the current image block based on a motion model of the current image block, the motion information of each first pixel sample, and the motion information of each second pixel sample.

It should be understood that, for example, the image prediction apparatus 800 in this embodiment may be configured to perform the method and example implementations described in the fifth embodiment of the present invention. For specific implementation functions of the functional modules 801 to 809 in this embodiment, refer to the corresponding specific implementations in the fifth embodiment of the present invention, and for beneficial effects thereof, refer to the beneficial effects in the fifth embodiment of the present invention. Details are not described again. The image prediction apparatus 800 may be any apparatus that needs to output and play a video, for example, a device such as a notebook computer, a tablet computer, a personal computer, or a mobile phone.

Referring to FIG. 9, FIG. 9 is a schematic diagram of an image prediction apparatus 900 according to a tenth embodiment of the present invention. The image prediction apparatus 900 may include at least one bus 901, at least one processor 902 connected to the bus 901, and at least one memory 903 connected to the bus 901.

The processor 902 invokes code or an instruction stored in the memory 903 by using the bus 901, so as to: determine candidate motion information unit sets respectively corresponding to each first pixel sample and each second pixel sample, where any candidate motion information unit set includes at least one motion information unit; determine a combined motion information unit set of the current block, where each motion information unit in the combined motion information unit set is at least some motion information units in the candidate motion information unit sets respectively corresponding to each first pixel sample and each second pixel sample, and motion information of the motion information unit includes a motion vector with a forward prediction direction and/or a motion vector with a backward prediction direction; determine, from the combined motion information unit set, motion information units respectively corresponding to each first pixel sample and each second pixel sample; encode first bitstream information, where the first bitstream information is used to represent the motion information units that respectively correspond to each first pixel sample and each second pixel sample and that are determined from the combined motion information unit set; use motion information of the motion information unit corresponding to the first pixel sample as motion information of the first pixel sample; use motion information of the motion information unit corresponding to the second pixel sample as predicted motion information of the second pixel sample; calculate differential motion information of the second pixel sample, where the differential motion information is a difference between the motion information and the predicted motion information; encode second bitstream information, where the second bitstream information is used to represent differential motion information of each second pixel sample; and obtain a predictor of the current image block based on a motion model of the current image block, the motion information of each first pixel sample, and the motion information of each second pixel sample.

It should be understood that, for example, the image prediction apparatus 900 in this embodiment may be configured to perform the method and example implementations described in the fifth embodiment of the present invention. For specific implementation functions, refer to the corresponding specific implementations in the fifth embodiment of the present invention, and for beneficial effects, refer to the beneficial effects in the fifth embodiment of the present invention. Details are not described again. The image prediction apparatus 900 may be any apparatus that needs to output and play a video, for example, a device such as a notebook computer, a tablet computer, a personal computer, or a mobile phone.

An eleventh embodiment of the present invention further provides a computer storage medium, where the computer storage medium may store a program, and when running, the program includes some or all steps of any image prediction method recorded in the foregoing method embodiments. For specific implementation functions, refer to the corresponding specific implementations in the fifth embodiment of the present invention, and for beneficial effects, refer to the beneficial effects in the fifth embodiment of the present invention. Details are not described again.

It should be noted that, to make the description brief, the foregoing method embodiments are expressed as a series of actions. However, a person skilled in the art should appreciate that the present invention is not limited to the described action sequence, because according to the present invention, some steps may be performed in other sequences or performed simultaneously. In addition, a person skilled in the art should also appreciate that all the embodiments described in the specification are example embodiments, and the related actions and modules are not necessarily mandatory to the present invention.

In the several embodiments provided in this application, it should be understood that the disclosed apparatus may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device, and may be specifically a processor in a computer device) to perform all or a part of the steps of the foregoing methods described in the embodiments of the present invention. The foregoing storage medium includes: any medium that can store program code, such as a USB flash drive, a removable hard disk, a magnetic disk, an optical disc, a read-only memory (ROM, Read-Only Memory), or a random access memory (RAM, Random Access Memory).

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

**Claims**

1.  An image prediction method, wherein a current image block comprises at least one first pixel sample and at least one second pixel sample, and the method comprises:

    parsing first bitstream information, wherein the first bitstream information indicates motion information units respectively corresponding to each first pixel sample and each second pixel sample;
    obtaining motion information of each first pixel sample and predicted motion information of each second pixel sample based on the parsed first bitstream information, wherein the predicted motion information is predicted information of motion information;
    parsing second bitstream information, wherein the second bitstream information is used to represent differential motion information of each second pixel sample, and the differential motion information is a difference between motion information and predicted motion information;
    obtaining motion information of each second pixel sample based on the parsed second bitstream information and the corresponding predicted motion information of each second pixel sample; and
    obtaining a predictor of the current image block based on a motion model of the current image block, the motion information of each first pixel sample, and the motion information of each second pixel sample.

2.  The method according to claim 1, wherein the first bitstream information comprises an index, and the index is used to indicate the motion information units respectively corresponding to each first pixel sample and each second pixel sample.

3.  The method according to claim 1 or 2, wherein the second bitstream information comprises a difference, and the difference is a motion vector residual between a motion vector and a predicted motion vector of any second pixel sample.

4.  The method according to any one of claims 1 to 3, wherein the obtaining motion information of each first pixel sample and predicted motion information of each second pixel sample based on the parsed first bitstream information comprises:

    determining candidate motion information unit sets respectively corresponding to each first pixel sample and each second pixel sample, wherein any candidate motion information unit set comprises at least one motion information unit;
    determining a combined motion information unit set of the current block, wherein each motion information unit in the combined motion information unit set is at least some motion information units in the candidate motion information unit sets respectively corresponding to each first pixel sample and each second pixel sample, and motion information of the motion information unit comprises a motion vector with a forward prediction direction and/or a motion vector with a backward prediction direction;

determining, from the combined motion information unit set based on the parsed first bitstream information, the motion information units respectively corresponding to each first pixel sample and each second pixel sample; using motion information of the motion information unit corresponding to the first pixel sample as the motion information of the first pixel sample; and

using motion information of the motion information unit corresponding to the second pixel sample as the predicted motion information of the second pixel sample.

5. The method according to claim 4, wherein the determining a combined motion information unit set of the current block comprises:

determining, from N candidate combined motion information unit sets, a combined motion information unit set comprising the motion information units respectively corresponding to each first pixel sample and each second pixel sample, wherein each motion information unit comprised in each of the N candidate combined motion information unit sets is selected from at least some motion information units that meet a constraint in the candidate motion information unit sets respectively corresponding to each first pixel sample and each second pixel sample, N is a positive integer, and the N candidate combined motion information unit sets are different from each other.

6. The method according to claim 5, wherein the N candidate combined motion information unit sets meet at least one of a first condition, a second condition, a third condition, a fourth condition, and a fifth condition, wherein

the first condition comprises: a motion manner that is of the current image block and that is indicated by a motion information unit in any one of the N candidate combined motion information unit sets is non-translational motion; the second condition comprises: two motion information units in any one of the N candidate combined motion information unit sets correspond to a same prediction direction;

the third condition comprises: two motion information units in any one of the N candidate combined motion information unit sets correspond to a same reference frame index;

the fourth condition comprises: an absolute value of a difference between motion vector horizontal components of two motion information units in any one of the N candidate combined motion information unit sets is less than or equal to a horizontal component threshold, or an absolute value of a difference between motion vector horizontal components of one motion information unit in any one of the N candidate combined motion information unit sets and a pixel sample Z is less than or equal to a horizontal component threshold, wherein the pixel sample Z of the current image block is different from either of the first pixel sample and the second pixel sample; and

the fifth condition comprises: an absolute value of a difference between motion vector vertical components of two motion information units in any one of the N candidate combined motion information unit sets is less than or equal to a vertical component threshold, or an absolute value of a difference between motion vector vertical components of any motion information unit in one of the N candidate combined motion information unit sets and a pixel sample Z is less than or equal to a vertical component threshold, wherein the pixel sample Z of the current image block is different from either of the first pixel sample and the second pixel sample.

7. The method according to any one of claims 1 to 6, wherein the obtaining motion information of each second pixel sample based on the parsed second bitstream information and the corresponding predicted motion information of each second pixel sample comprises:

obtaining the differential motion information of each second pixel sample based on the parsed second bitstream information; and

adding up the differential motion information of each second pixel sample and the corresponding predicted motion information, to obtain the motion information of each second pixel sample.

8. The method according to any one of claims 1 to 7, wherein the motion model is a non-translational motion model, and specifically,

the non-translational motion model is an affine motion model in the following form:

$$\begin{cases} vx = \dfrac{vx_1 - vx_0}{w} x - \dfrac{vy_1 - vy_0}{w} y + vx_0 \\ vy = \dfrac{vy_1 - vy_0}{w} x + \dfrac{vx_1 - vx_0}{w} y + vy_0 \end{cases};$$

wherein motion vectors of the first pixel sample and the second pixel sample are $(vx_0, vy_0)$ and $(vx_1, vy_1)$, re-

spectively, vx is a motion vector horizontal component of a pixel sample whose coordinates are (x, y) in the current image block, vy is a motion vector vertical component of the pixel sample whose coordinates are (x, y) in the current image block, and w is a length or width of the current image block; and

correspondingly, the obtaining a predictor of the current image block based on a motion model of the current image block, the motion information of each first pixel sample, and the motion information of each second pixel sample comprises:

calculating a motion vector of each pixel in the current image block by using the affine motion model, and the motion vectors of the first pixel sample and the second pixel sample, and determining a predicted pixel value of each pixel in the current image block by using the calculated motion vector of each pixel in the current image block; or

calculating a motion vector of each pixel block in the current image block by using the affine motion model, and the motion vectors of the first pixel sample and the second pixel sample, and determining a predicted pixel value of each pixel in each pixel block in the current image block by using the calculated motion vector of each pixel block in the current image block.

9. The method according to any one of claims 1 to 7, wherein the motion model is a non-translational motion model, and specifically,

the non-translational motion model is an affine motion model in the following form:

$$\begin{cases} vx = \frac{vx_1 - vx_0}{w} x + \frac{vx_2 - vx_0}{h} y + vx_0 \\ vy = \frac{vy_1 - vy_0}{w} x + \frac{vy_2 - vy_0}{h} y + vy_0 \end{cases};$$

wherein motion vectors of any one first pixel sample and any two second pixel samples or motion vectors of any two first pixel samples and any one second pixel sample are $(vx_0, vy_0)$, $(vx_1, vy_1)$, and $(vx_2, vy_2)$, respectively, vx is a motion vector horizontal component of a pixel sample whose coordinates are (x, y) in the current image block, vy is a motion vector vertical component of the pixel sample whose coordinates are (x, y) in the current image block, and w is a length or width of the current image block; and

correspondingly, the obtaining a predictor of the current image block based on a motion model of the current image block, the motion information of each first pixel sample, and the motion information of each second pixel sample comprises:

calculating a motion vector of each pixel in the current image block by using the affine motion model, and the motion vectors of the first pixel sample and the second pixel sample, and determining a predicted pixel value of each pixel in the current image block by using the calculated motion vector of each pixel in the current image block; or

calculating a motion vector of each pixel block in the current image block by using the affine motion model, and the motion vectors of the first pixel sample and the second pixel sample, and determining a predicted pixel value of each pixel in each pixel block in the current image block by using the calculated motion vector of each pixel block in the current image block.

10. The method according to any one of claims 1 to 9, wherein the at least one first pixel sample and the at least one second pixel sample comprise two pixel samples in a top-left pixel sample, a top-right pixel sample, a bottom-left pixel sample, and a central pixel sample a1 of the current image block, wherein

the top-left pixel sample of the current image block is a top-left vertex of the current image block or a pixel block that is at a top-left vertex of the current image block and that is comprised in the current image block; the bottom-left pixel sample of the current image block is a bottom-left vertex of the current image block or a pixel block that is at a bottom-left vertex of the current image block and that is comprised in the current image block; the top-right pixel sample of the current image block is a top-right vertex of the current image block or a pixel block that is at a top-right vertex of the current image block and that is comprised in the current image block; and the central pixel sample a1 of the current image block is a central pixel of the current image block or a pixel block that is at a central pixel of the current image block and that is comprised in the current image block.

11. The method according to claim 10, wherein

a candidate motion information unit set corresponding to the top-left pixel sample of the current image block comprises motion information units of x1 pixel samples, wherein the x1 pixel samples comprise at least one pixel sample that is spatially adjacent to the top-left pixel sample of the current image block and/or at least one pixel sample that is temporally adjacent to the top-left pixel sample of the current image block, and x1 is a positive integer; and

the x1 pixel samples comprise at least one of a pixel sample that is at a same location as the top-left pixel sample of the current image block and that is in a video frame temporally adjacent to a video frame to which the current image block belongs, a spatially adjacent pixel sample to the left of the current image block, a spatially adjacent pixel sample to the top-left of the current image block, and a spatially adjacent pixel sample to the top of the current image block.

12. The method according to either of claims 10 and 11, wherein

a candidate motion information unit set corresponding to the top-right pixel sample of the current image block comprises motion information units of x2 pixel samples, wherein the x2 pixel samples comprise at least one pixel sample that is spatially adjacent to the top-right pixel sample of the current image block and/or at least one pixel sample that is temporally adjacent to the top-right pixel sample of the current image block, and x2 is a positive integer; and

the x2 pixel samples comprise at least one of a pixel sample that is at a same location as the top-right pixel sample of the current image block and that is in the video frame temporally adjacent to the video frame to which the current image block belongs, a spatially adjacent pixel sample to the right of the current image block, a spatially adjacent pixel sample to the top-right of the current image block, and a spatially adjacent pixel sample to the top of the current image block.

13. The method according to any one of claims 10 to 12, wherein

a candidate motion information unit set corresponding to the bottom-left pixel sample of the current image block comprises motion information units of x3 pixel samples, wherein the x3 pixel samples comprise at least one pixel sample that is spatially adjacent to the bottom-left pixel sample of the current image block and/or at least one pixel sample that is temporally adjacent to the bottom-left pixel sample of the current image block, and x3 is a positive integer; and

the x3 pixel samples comprise at least one of a pixel sample that is at a same location as the bottom-left pixel sample of the current image block and that is in the video frame temporally adjacent to the video frame to which the current image block belongs, a spatially adjacent pixel sample to the left of the current image block, a spatially adjacent pixel sample to the bottom-left of the current image block, and a spatially adjacent pixel sample to the bottom of the current image block.

14. The method according to any one of claims 10 to 13, wherein

a candidate motion information unit set corresponding to the central pixel sample a1 of the current image block comprises motion information units of x5 pixel samples, wherein one of the x5 pixel samples is a pixel sample a2; and

a location of the central pixel sample a1 in the video frame to which the current image block belongs is the same as a location of the pixel sample a2 in a video frame that is adjacent to the video frame to which the current image block belongs, and x5 is a positive integer.

15. An image prediction method, wherein a current image block comprises at least one first pixel sample and at least one second pixel sample, and the method comprises:

determining candidate motion information unit sets respectively corresponding to each first pixel sample and each second pixel sample, wherein any candidate motion information unit set comprises at least one motion information unit;

determining a combined motion information unit set of the current block, wherein each motion information unit in the combined motion information unit set is at least some motion information units in the candidate motion information unit sets respectively corresponding to each first pixel sample and each second pixel sample, and motion information of the motion information unit comprises a motion vector with a forward prediction direction and/or a motion vector with a backward prediction direction;

determining, from the combined motion information unit set, motion information units respectively corresponding to each first pixel sample and each second pixel sample;

encoding first bitstream information, wherein the first bitstream information is used to represent the motion information units that respectively correspond to each first pixel sample and each second pixel sample and that are determined from the combined motion information unit set;

using motion information of the motion information unit corresponding to the first pixel sample as motion information of the first pixel sample;

using motion information of the motion information unit corresponding to the second pixel sample as predicted motion information of the second pixel sample;

calculating differential motion information of the second pixel sample, wherein the differential motion information is a difference between the motion information and the predicted motion information;

encoding second bitstream information, wherein the second bitstream information is used to represent differential motion information of each second pixel sample; and

obtaining a predictor of the current image block based on a motion model of the current image block, the motion information of each first pixel sample, and the motion information of each second pixel sample.

16. An image prediction apparatus, wherein a current image block comprises at least one first pixel sample and at least one second pixel sample, and the apparatus comprises:

a first parsing unit, configured to parse first bitstream information, wherein the first bitstream information is used to indicate motion information units respectively corresponding to each first pixel sample and each second pixel sample;

a first obtaining unit, configured to obtain motion information of each first pixel sample and predicted motion information of each second pixel sample based on the parsed first bitstream information, wherein the predicted motion information is predicted information of motion information;

a second parsing unit, configured to parse second bitstream information, wherein the second bitstream information is used to represent differential motion information of each second pixel sample, and the differential motion information is a difference between motion information and predicted motion information;

a second obtaining unit, configured to obtain motion information of each second pixel sample based on the parsed second bitstream information and the corresponding predicted motion information of each second pixel sample; and

a third obtaining unit, configured to obtain a predictor of the current image block based on a motion model of the current image block, the motion information of each first pixel sample, and the motion information of each second pixel sample.

17. The apparatus according to claim 16, wherein the first bitstream information comprises an index, and the index is used to indicate the motion information units respectively corresponding to each first pixel sample and each second pixel sample.

18. The apparatus according to claim 16 or 17, wherein the second bitstream information comprises a difference, and the difference is a motion vector residual between a motion vector and a predicted motion vector of any second pixel sample.

19. The apparatus according to any one of claims 15 to 18, wherein the first obtaining unit is specifically configured to:

determine candidate motion information unit sets respectively corresponding to each first pixel sample and each second pixel sample, wherein any candidate motion information unit set comprises at least one motion information unit;

determine a combined motion information unit set of the current block, wherein each motion information unit in the combined motion information unit set is at least some motion information units in the candidate motion information unit sets respectively corresponding to each first pixel sample and each second pixel sample, and motion information of the motion information unit comprises a motion vector with a forward prediction direction and/or a motion vector with a backward prediction direction;

determine, from the combined motion information unit set based on the parsed first bitstream information, the motion information units respectively corresponding to each first pixel sample and each second pixel sample;

use motion information of the motion information unit corresponding to the first pixel sample as the motion information of the first pixel sample; and

use motion information of the motion information unit corresponding to the second pixel sample as the predicted motion information of the second pixel sample.

20. The apparatus according to claim 19, wherein the first obtaining unit is specifically configured to:

determine, from N candidate combined motion information unit sets, a combined motion information unit set comprising the motion information units respectively corresponding to each first pixel sample and each second pixel sample, wherein each motion information unit comprised in each of the N candidate combined motion information unit sets is selected from at least some motion information units that meet a constraint in the candidate motion information unit sets respectively corresponding to each first pixel sample and each second pixel sample, N is a positive integer, and the N candidate combined motion information unit sets are different from each other.

21. The apparatus according to claim 20, wherein the N candidate combined motion information unit sets meet at least one of a first condition, a second condition, a third condition, a fourth condition, and a fifth condition, wherein
the first condition comprises: a motion manner that is of the current image block and that is indicated by a motion information unit in any one of the N candidate combined motion information unit sets is non-translational motion;
the second condition comprises: two motion information units in any one of the N candidate combined motion information unit sets correspond to a same prediction direction;
the third condition comprises: two motion information units in any one of the N candidate combined motion information unit sets correspond to a same reference frame index;
the fourth condition comprises: an absolute value of a difference between motion vector horizontal components of two motion information units in any one of the N candidate combined motion information unit sets is less than or equal to a horizontal component threshold, or an absolute value of a difference between motion vector horizontal components of one motion information unit in any one of the N candidate combined motion information unit sets and a pixel sample Z is less than or equal to a horizontal component threshold, wherein the pixel sample Z of the current image block is different from either of the first pixel sample and the second pixel sample; and
the fifth condition comprises: an absolute value of a difference between motion vector vertical components of two motion information units in any one of the N candidate combined motion information unit sets is less than or equal to a vertical component threshold, or an absolute value of a difference between motion vector vertical components of any motion information unit in one of the N candidate combined motion information unit sets and a pixel sample Z is less than or equal to a vertical component threshold, wherein the pixel sample Z of the current image block is different from either of the first pixel sample and the second pixel sample.

22. The apparatus according to any one of claims 16 to 21, wherein the second obtaining unit is specifically configured to:

    obtain the differential motion information of each second pixel sample based on the parsed second bitstream information; and
    add up the differential motion information of each second pixel sample and the corresponding predicted motion information, to obtain the motion information of each second pixel sample.

23. The apparatus according to any one of claims 16 to 22, wherein the motion model is a non-translational motion model, and specifically,
the non-translational motion model is an affine motion model in the following form:

$$\begin{cases} vx = \dfrac{vx_1\text{-}vx_0}{w}x\text{-}\dfrac{vy_1\text{-}vy_0}{w}y + vx_0 \\ vy = \dfrac{vy_1\text{-}vy_0}{w}x + \dfrac{vx_1\text{-}vx_0}{w}y + vy_0 \end{cases};$$

wherein motion vectors of the first pixel sample and the second pixel sample are $(vx_0, vy_0)$ and $(vx_1, vy_1)$, respectively, vx is a motion vector horizontal component of a pixel sample whose coordinates are (x, y) in the current image block, vy is a motion vector vertical component of the pixel sample whose coordinates are (x, y) in the current image block, and w is a length or width of the current image block; and
correspondingly, the third obtaining unit is specifically configured to:

    calculate a motion vector of each pixel in the current image block by using the affine motion model, and the motion vectors of the first pixel sample and the second pixel sample, and determine a predicted pixel value of each pixel in the current image block by using the calculated motion vector of each pixel in the current image block; or
    calculate a motion vector of each pixel block in the current image block by using the affine motion model, and the motion vectors of the first pixel sample and the second pixel sample, and determine a predicted pixel value of each pixel in each pixel block in the current image block by using the calculated motion vector of each pixel block in the current image block.

24. The apparatus according to any one of claims 16 to 22, wherein the motion model is a non-translational motion model, and specifically, the non-translational motion model is an affine motion model in the following form:

$$\begin{cases} vx = \frac{vx_1 - vx_0}{w}x + \frac{vx_2 - vx_0}{h}y + vx_0 \\ vy = \frac{vy_1 - vy_0}{w}x + \frac{vy_2 - vy_0}{h}y + vy_0 \end{cases};$$

wherein motion vectors of any one first pixel sample and any two second pixel samples or motion vectors of any two first pixel samples and any one second pixel sample are $(vx_0, vy_0)$, $(vx_1, vy_1)$, and $(vx_2, vy_2)$, respectively, vx is a motion vector horizontal component of a pixel sample whose coordinates are (x, y) in the current image block, vy is a motion vector vertical component of the pixel sample whose coordinates are (x, y) in the current image block, and w is a length or width of the current image block; and correspondingly, the third obtaining unit is specifically configured to:

calculate a motion vector of each pixel in the current image block by using the affine motion model, and the motion vectors of the first pixel sample and the second pixel sample, and determine a predicted pixel value of each pixel in the current image block by using the calculated motion vector of each pixel in the current image block; or

calculate a motion vector of each pixel block in the current image block by using the affine motion model, and the motion vectors of the first pixel sample and the second pixel sample, and determine a predicted pixel value of each pixel in each pixel block in the current image block by using the calculated motion vector of each pixel block in the current image block.

25. The apparatus according to any one of claims 16 to 24, wherein the at least one first pixel sample and the at least one second pixel sample comprise two pixel samples in a top-left pixel sample, a top-right pixel sample, a bottom-left pixel sample, and a central pixel sample a1 of the current image block, wherein

the top-left pixel sample of the current image block is a top-left vertex of the current image block or a pixel block that is at a top-left vertex of the current image block and that is comprised in the current image block; the bottom-left pixel sample of the current image block is a bottom-left vertex of the current image block or a pixel block that is at a bottom-left vertex of the current image block and that is comprised in the current image block; the top-right pixel sample of the current image block is a top-right vertex of the current image block or a pixel block that is at a top-right vertex of the current image block and that is comprised in the current image block; and the central pixel sample a1 of the current image block is a central pixel of the current image block or a pixel block that is at a central pixel of the current image block and that is comprised in the current image block.

26. The apparatus according to claim 25, wherein

a candidate motion information unit set corresponding to the top-left pixel sample of the current image block comprises motion information units of x1 pixel samples, wherein the x1 pixel samples comprise at least one pixel sample that is spatially adjacent to the top-left pixel sample of the current image block and/or at least one pixel sample that is temporally adjacent to the top-left pixel sample of the current image block, and x1 is a positive integer; and

the x1 pixel samples comprise at least one of a pixel sample that is at a same location as the top-left pixel sample of the current image block and that is in a video frame temporally adjacent to a video frame to which the current image block belongs, a spatially adjacent pixel sample to the left of the current image block, a spatially adjacent pixel sample to the top-left of the current image block, and a spatially adjacent pixel sample to the top of the current image block.

27. The apparatus according to any one of claims 25 and 26, wherein

a candidate motion information unit set corresponding to the top-right pixel sample of the current image block comprises motion information units of x2 pixel samples, wherein the x2 pixel samples comprise at least one pixel sample that is spatially adjacent to the top-right pixel sample of the current image block and/or at least one pixel sample that is temporally adjacent to the top-right pixel sample of the current image block, and x2 is a positive integer; and

the x2 pixel samples comprise at least one of a pixel sample that is at a same location as the top-right pixel sample of the current image block and that is in the video frame temporally adjacent to the video frame to which the current image block belongs, a spatially adjacent pixel sample to the right of the current image block, a spatially adjacent pixel sample to the top-right of the current image block, and a spatially adjacent pixel sample to the top of the current image block.

**28.** The apparatus according to any one of claims 25 and 27, wherein
a candidate motion information unit set corresponding to the bottom-left pixel sample of the current image block comprises motion information units of x3 pixel samples, wherein the x3 pixel samples comprise at least one pixel sample that is spatially adjacent to the bottom-left pixel sample of the current image block and/or at least one pixel sample that is temporally adjacent to the bottom-left pixel sample of the current image block, and x3 is a positive integer; and
the x3 pixel samples comprise at least one of a pixel sample that is at a same location as the bottom-left pixel sample of the current image block and that is in the video frame temporally adjacent to the video frame to which the current image block belongs, a spatially adjacent pixel sample to the left of the current image block, a spatially adjacent pixel sample to the bottom-left of the current image block, and a spatially adjacent pixel sample to the bottom of the current image block.

**29.** The apparatus according to any one of claims 25 and 28, wherein
a candidate motion information unit set corresponding to the central pixel sample a1 of the current image block comprises motion information units of x5 pixel samples, wherein one of the x5 pixel samples is a pixel sample a2; and
a location of the central pixel sample a1 in the video frame to which the current image block belongs is the same as a location of the pixel sample a2 in a video frame that is adjacent to the video frame to which the current image block belongs, and x5 is a positive integer.

**30.** An image prediction apparatus, wherein a current image block comprises at least one first pixel sample and at least one second pixel sample, and the apparatus comprises:

a first determining unit, configured to determine candidate motion information unit sets respectively corresponding to each first pixel sample and each second pixel sample, wherein any candidate motion information unit set comprises at least one motion information unit;
a second determining unit, configured to determine a combined motion information unit set of the current block, wherein each motion information unit in the combined motion information unit set is at least some motion information units in the candidate motion information unit sets respectively corresponding to each first pixel sample and each second pixel sample, and motion information of the motion information unit comprises a motion vector with a forward prediction direction and/or a motion vector with a backward prediction direction;
a third determining unit, configured to determine, from the combined motion information unit set, motion information units respectively corresponding to each first pixel sample and each second pixel sample;
a first encoding unit, configured to encode first bitstream information, wherein the first bitstream information is used to represent the motion information units that respectively correspond to each first pixel sample and each second pixel sample and that are determined from the combined motion information unit set;
a first assignment unit, configured to use motion information of the motion information unit corresponding to the first pixel sample as motion information of the first pixel sample;
a second assignment unit, configured to use motion information of the motion information unit corresponding to the second pixel sample as predicted motion information of the second pixel sample;
a calculation unit, configured to calculate differential motion information of the second pixel sample, wherein the differential motion information is a difference between the motion information and the predicted motion information;
a second encoding unit, configured to encode second bitstream information, wherein the second bitstream information is used to represent differential motion information of each second pixel sample; and
an obtaining unit, configured to obtain a predictor of the current image block based on a motion model of the current image block, the motion information of each first pixel sample, and the motion information of each second pixel sample.

**31.** An image prediction apparatus, wherein a current image block comprises at least one first pixel sample and at least one second pixel sample, and the apparatus comprises: a processor and a memory coupled to the processor;
the memory is configured to store code or an instruction; and
the processor is configured to invoke the code or the instruction to perform the following operations:
parsing first bitstream information, wherein the first bitstream information is used to indicate motion information units respectively corresponding to each first pixel sample and each second pixel sample; obtaining motion information of each first pixel sample and predicted motion information of each second pixel sample based on the parsed first bitstream information, wherein the predicted motion information is predicted information of motion information; parsing second bitstream information, wherein the second bitstream information is used to represent differential motion information of each second pixel sample, and the differential motion information is a difference between motion information and predicted motion information; obtaining motion information of each second pixel sample based on the parsed second bitstream information and the corresponding predicted motion information of each second pixel sample; and obtaining a predictor of the current image block based on a motion model of the current image block, the motion information of each first pixel sample, and the motion information of each second pixel sample.

32. An image prediction apparatus, wherein a current image block comprises at least one first pixel sample and at least one second pixel sample, and the apparatus comprises: a processor and a memory coupled to the processor; the memory is configured to store code or an instruction; and
the processor is configured to invoke the code or the instruction to perform the following operations:
determining candidate motion information unit sets respectively corresponding to each first pixel sample and each second pixel sample, wherein any candidate motion information unit set comprises at least one motion information unit; determining a combined motion information unit set of the current block, wherein each motion information unit in the combined motion information unit set is at least some motion information units in the candidate motion information unit sets respectively corresponding to each first pixel sample and each second pixel sample, and motion information of the motion information unit comprises a motion vector with a forward prediction direction and/or a motion vector with a backward prediction direction; determining, from the combined motion information unit set, motion information units respectively corresponding to each first pixel sample and each second pixel sample; encoding first bitstream information, wherein the first bitstream information is used to represent the motion information units that respectively correspond to each first pixel sample and each second pixel sample and that are determined from the combined motion information unit set; using motion information of the motion information unit corresponding to the first pixel sample as motion information of the first pixel sample; using motion information of the motion information unit corresponding to the second pixel sample as predicted motion information of the second pixel sample; calculating differential motion information of the second pixel sample, wherein the differential motion information is a difference between the motion information and the predicted motion information; encoding second bitstream information, wherein the second bitstream information is used to represent differential motion information of each second pixel sample; and obtaining a predictor of the current image block based on a motion model of the current image block, the motion information of each first pixel sample, and the motion information of each second pixel sample.

M×M     M/2×M/2

FIG. 1-a

M×M     M/2×M     M×M/2     M/2×M/2

M/4×M (L)     M/4×M (R)     M×M/4 (U)     M×M/4 (D)

FIG. 1-b

| Determine two pixel samples in a current image block, and determine a candidate motion information unit set corresponding to each of the two pixel samples |
|---|

S101

| Determine a combined motion information unit set i including two motion information units, where each motion information unit in the combined motion information unit set i is selected from at least some motion information units in the candidate motion information unit set corresponding to each of the two pixel samples |
|---|

S102

S103

| Perform pixel value prediction on the current image block by using an affine motion model and the combined motion information unit set i |
|---|

FIG. 1-c

FIG. 1-d

A video coding apparatus determines two pixel samples in a current image block — S201

The video coding apparatus determines a candidate motion information unit set corresponding to each of the two pixel samples — S202

The video coding apparatus determines N candidate combined motion information unit sets based on the candidate motion information unit set corresponding to each of the two pixel samples — S203

The video coding apparatus determines, from the N candidate combined motion information unit sets, a combined motion information unit set i including two motion information units — S204

The video coding apparatus performs pixel value prediction on the current image block by using an affine motion model and the combined motion information unit set i — S205

FIG. 2-a

| A | B | | | D | E |
|---|---|---|---|---|---|
| C | $\overrightarrow{v_0}$ | | | $\overrightarrow{v_1}$ | |

Current image block

| F | $\overrightarrow{v_2}$ |
|---|---|
| G | |

FIG. 2-b

| A | B | | | D | E |
|---|---|---|---|---|---|
| C | LT | | | RT | |

Current image block

| F | LB |
|---|---|
| G | |

FIG. 2-c

FIG. 2-d

FIG. 2-e

FIG. 2-f

FIG. 2-g

FIG. 2-h

FIG. 2-i

S301

A video decoding apparatus determines two pixel samples in a current image block

S302

The video decoding apparatus determines a candidate motion information unit set corresponding to each of the two pixel samples

S303

The video decoding apparatus determines N candidate combined motion information unit sets based on the candidate motion information unit set corresponding to each of the two pixel samples

The video decoding apparatus performs decoding processing on a video bitstream to obtain an identifier of a combined motion information unit set i and a prediction residual of the current image block, and determines, from the N candidate combined motion information unit sets based on the identifier of the combined motion information unit set i, a combined motion information unit set i including two motion information units

S304

The video decoding apparatus performs motion vector prediction on the current image block by using an affine motion model and the combined motion information unit set i

S305

The video decoding apparatus performs pixel value prediction on the current image block based on a calculated motion vector of each pixel or each pixel block of the current image block, to obtain a predicted pixel value of the current image block

S306

The video decoding apparatus reconstructs the current image block by using the predicted pixel value of the current image block and the prediction residual of the current image block

S307

FIG. 3

```
                                                              S401
┌────────────────────────────────────────────────────────┐ /
│            Parse first bitstream information             │/
└────────────────────────────────────────────────────────┘
                           │
                           ▼                                  S402
┌────────────────────────────────────────────────────────┐ /
│  Obtain motion information of a first pixel sample and   │/
│    predicted motion information of a second pixel        │
│     sample based on the parsed first bitstream           │
│                     information                          │
└────────────────────────────────────────────────────────┘
                           │
                           ▼                                  S403
┌────────────────────────────────────────────────────────┐ /
│           Parse second bitstream information             │/
└────────────────────────────────────────────────────────┘
                           │
                           ▼                                  S404
┌────────────────────────────────────────────────────────┐ /
│  Obtain motion information of the second pixel sample    │/
│   based on the parsed second bitstream information       │
│    and the predicted motion information of the           │
│              second pixel sample                         │
└────────────────────────────────────────────────────────┘
                           │
                           ▼                                  S405
┌────────────────────────────────────────────────────────┐ /
│  Obtain a predictor of the current image block based on  │/
│   a motion model of the current image block, the motion  │
│  information of the first pixel sample, and the motion    │
│   information of the second pixel sample                 │
└────────────────────────────────────────────────────────┘
```

FIG. 4

Determine candidate motion information unit sets respectively corresponding to a first pixel sample and a second pixel sample, where any candidate motion information unit set includes at least one motion information unit

S501

Determine a combined motion information unit set of a current block, where motion information units in the combined motion information unit set are at least some motion information units in the candidate motion information unit sets respectively corresponding to the first pixel sample and the second pixel sample

S502

Determine, from the combined motion information unit set, motion information units respectively corresponding to the first pixel sample and the second pixel sample

S503

Encode first bitstream information

S504

Use motion information of the motion information unit corresponding to the first pixel sample as motion information of the first pixel sample

S505

Use motion information of the motion information unit corresponding to the second pixel sample as predicted motion information of the second pixel sample

S506

Calculate differential motion information of the second pixel sample, where the differential motion information is a difference between the motion information and the predicted motion information

S507

Encode second bitstream information

S508

Obtain a predictor of the current image block based on a motion model of the current image block, the motion information of the first pixel sample, and motion information of the second pixel sample

S509

FIG. 5

600

| 602 | 605 | 604 |
|---|---|---|
| First obtaining unit | Third obtaining unit | Second obtaining unit |

601

First parsing unit

603

Second parsing unit

FIG. 6

700

703

Memory

702

Processor

701

FIG. 7

800

801
First determining unit

802
Second determining unit

803
Third determining unit

806
Second assignment unit

805
First assignment unit

804
First encoding unit

809
Obtaining unit

808
Second encoding unit

807
Calculation unit

FIG. 8

900

903
Memory

902
Processor

901

FIG. 9

<h1 style="text-align:center">INTERNATIONAL SEARCH REPORT</h1>

| International application No. |
| --- |
| **PCT/CN2016/083203** |

### A. CLASSIFICATION OF SUBJECT MATTER

H04N 19/51 (2014.01) i

According to International Patent Classification (IPC) or to both national classification and IPC

### B. FIELDS SEARCHED

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS, CNTXT, CNKI, VEN: difference, motion information, residual motion information, difference motion information, prediction motion information, prediction value, image, prediction, pixel, motion vector, residual, encod+, candidate, model, parse

### C. DOCUMENTS CONSIDERED TO BE RELEVANT

| Category* | Citation of document, with indication, where appropriate, of the relevant passages | Relevant to claim No. |
| --- | --- | --- |
| A | CN 103891288 A (NTT DOCOMO INC.), 25 June 2014 (25.06.2014), the whole document | 1-32 |
| A | US 2009175338 A1 (SEGALL, C.A.), 09 July 2009 (09.07.2009), the whole document | 1-32 |
| A | CN 104885464 A (SONY CORPORATION), 02 September 2015 (02.09.2015), the whole document | 1-32 |
| A | CN 103327319 A (VIXS SYSTEMS, INC.), 25 September 2013 (25.09.2013), the whole document | 1-32 |
| A | CN 101039419 A (THOMSON LICENSING, INC.), 19 September 2007 (19.09.2007), the whole document | 1-32 |
| A | US 2015195557 A1 (MICROSOFT CORP.), 09 July 2015 (09.07.2015), the whole document | 1-32 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 09 February 2017 (09.02.2017) | **01 March 2017 (01.03.2017)** |

| Name and mailing address of the ISA/CN: <br> State Intellectual Property Office of the P. R. China <br> No. 6, Xitucheng Road, Jimenqiao <br> Haidian District, Beijing 100088, China <br> Facsimile No.: (86-10) 62019451 | Authorized officer <br><br> **LIU, Yuanyuan** <br><br> Telephone No.: (86-10) **62411513** |

Form PCT/ISA/210 (second sheet) (July 2009)

## INTERNATIONAL SEARCH REPORT
### Information on patent family members

International application No.

**PCT/CN2016/083203**

| Patent Documents referred in the Report | Publication Date | Patent Family | Publication Date |
|---|---|---|---|
| CN 103891288 A | 25 June 2014 | JP 2013102266 A | 23 May 2013 |
| | | WO 2013069384 A1 | 16 May 2013 |
| | | CA 2854705 C | 26 April 2016 |
| | | KR 101628800 B1 | 21 June 2016 |
| | | EP 2779650 A4 | 24 June 2015 |
| | | AU 2012337138 B2 | 19 March 2015 |
| | | CA 2854705 A1 | 16 May 2013 |
| | | MX 2014005287 A | 30 May 2014 |
| | | AU 2015200951 A1 | 12 March 2015 |
| | | TW I551123 B | 21 September 2016 |
| | | KR 20160075774 A | 29 June 2016 |
| | | SG 11201402036U A | 27 June 2014 |
| | | KR 101553933 B1 | 17 September 2015 |
| | | TW 201531095 A | 01 August 2015 |
| | | CA 2895631 A1 | 16 May 2013 |
| | | MX 337949 B | 29 March 2016 |
| | | EP 3054684 A1 | 10 August 2016 |
| | | TW I513280 B | 11 December 2015 |
| | | KR 20160075772 A | 29 June 2016 |
| | | EP 2779650 A1 | 17 September 2014 |
| | | US 2014241432 A1 | 28 August 2014 |
| | | IN 4100CHN2014 A | 10 July 2015 |
| | | AU 2012337138 A1 | 10 July 2014 |
| | | KR 20150079989 A | 08 July 2015 |
| | | RU 2566980 C1 | 27 October 2015 |
| | | AU 2015200951 B2 | 26 November 2015 |
| | | KR 20140092872 A | 24 July 2014 |
| | | CN 103891288 B | 21 December 2016 |
| | | TW 201322776 A | 01 June 2013 |
| | | JP 5485969 B2 | 07 May 2014 |
| | | KR 20160075773 A | 29 June 2016 |
| | | AU 2016201031 A1 | 10 March 2016 |
| US 2009175338 A1 | 09 July 2009 | WO 2009087952 A1 | 16 July 2009 |
| | | US 8175158 B2 | 08 May 2012 |
| | | JP 2011509536 A | 24 March 2011 |
| CN 104885464 A | 02 September 2015 | WO 2014103774 A1 | 03 July 2014 |
| | | US 2015304678 A1 | 22 October 2015 |
| | | JP WO2014103774 A1 | 12 January 2017 |
| CN 103327319 A | 25 September 2013 | US 2013251024 A1 | 26 September 2013 |
| | | EP 2645721 A2 | 02 October 2013 |
| | | US 9232230 B2 | 05 January 2016 |
| | | EP 2645721 A3 | 30 November 2016 |
| CN 101039419 A | 19 September 2007 | US 2007217513 A1 | 20 September 2007 |
| | | EP 1835749 A1 | 19 September 2007 |
| | | CN 101039419 B | 20 February 2013 |
| | | EP 1843593 A1 | 10 October 2007 |
| US 2015195557 A1 | 09 July 2015 | CN 105900419 A | 24 August 2016 |
| | | EP 3075153 A1 | 05 October 2016 |
| | | CA 2935562 A1 | 16 July 2015 |

Form PCT/ISA/210 (patent family annex) (July 2009)

## INTERNATIONAL SEARCH REPORT
Information on patent family members

International application No.

**PCT/CN2016/083203**

| Patent Documents referred in the Report | Publication Date | Patent Family | Publication Date |
|---|---|---|---|
| | | KR 20160106155 A | 09 September 2016 |
| | | AU 2014376189 A1 | 14 July 2016 |
| | | WO 2015105661 A1 | 16 July 2015 |

Form PCT/ISA/210 (patent family annex) (July 2009)